(19) Europäisches Patentamt
European Patent Office
Office européen des brevets

(11) EP 2 607 392 A1

(12) **EUROPEAN PATENT APPLICATION**
published in accordance with Art. 153(4) EPC

(43) Date of publication:
**26.06.2013 Bulletin 2013/26**

(21) Application number: **11818255.9**

(22) Date of filing: **19.08.2011**

(51) Int Cl.:
***C08F 292/00*** *(2006.01)* ***G01N 30/02*** *(2006.01)*
***G01N 30/26*** *(2006.01)* ***G01N 30/88*** *(2006.01)*

(86) International application number:
**PCT/JP2011/068795**

(87) International publication number:
**WO 2012/023615 (23.02.2012 Gazette 2012/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2010 JP 2010184961**

(71) Applicant: **Daicel Corporation**
**Osaka 530-0001 (JP)**

(72) Inventors:
- **OKANO, Yoshimichi**
  **Himeji-shi**
  **Hyogo 671-1283 (JP)**
- **TAKARAGI, Akira**
  **Himeji-shi**
  **Hyogo 671-1283 (JP)**
- **KITAGAWA, Tomoki**
  **Himeji-shi**
  **Hyogo 671-1283 (JP)**
- **OHNISHI, Atsushi**
  **Himeji-shi**
  **Hyogo 671-1283 (JP)**
- **MIYAMOTO, Shouji**
  **Himeji-shi**
  **Hyogo 671-1283 (JP)**

(74) Representative: **Grünecker, Kinkeldey, Stockmair & Schwanhäusser**
**Leopoldstrasse 4**
**80802 München (DE)**

# (54) FINE PARTICLES FOR CHROMATOGRAPHY AND CHROMATOGRAPHY USING SAME

(57) The present invention provides a polymer brush-type filler which contains polymer chains at a high density and with a broad molecular weight distribution. Specifically, the present invention provides fine particles for chromatography comprising graft polymer chains obtained by grafting polymer chains via polymerization initiating groups on the surface of solid particles, wherein the graft polymer chains include specific repeating units, have a specific number average molecular weight and a specific molecular weight distribution and also have a high density of 0.03 chains/nm$^2$ or more and 0.70 chains/nm$^2$ or less.

EP 2 607 392 A1

**Description**

TECHNICAL FIELD

The present invention relates to fine particles for chromatography and chromatography using the same, particularly to a polymer brush-type filler having a polymer brush on the surface of solid particles which is obtained by living polymerization from polymerization initiating groups on the solid surface and to chromatography using the same.

BACKGROUND ART

Graft polymerization on solid surfaces has been conventionally known as a method of solid surface modification. It has been studied to use this method for chromatographic separation media because various surface properties can be obtained by varying the types of monomers to be polymerized.

A known example of such a solid surface modification method is, for example, a method in which a polymer brush-type solid is obtained by graft polymerization of polymer chains via polymerization initiating groups fixed on the solid surface by living radical polymerization of monomers from the polymerization initiating groups (see, for example, Patent Literature 1). According to this method, the polymers are not coiled on the solid surface, thereby providing the solid containing polymer chains at a high density on the solid surface.

Such chromatographic separation media obtained by graft polymerization of polymer chains on a solid surface have been known such as a porous carrier obtained by grafting polymer chains at a high density on the surface of an organic porous carrier, a separation material for a physiologically active substance obtained by independently linking a substance having affinity to the physiologically active substance and a polymer on the surface of the support, and a chromatographic carrier obtained by graft polymerization of a thermoresponsive polymer on the surface of a support (see, for example, Patent Literature 2 to 5).

The above known polymer brush-type solids and separation media include those having polymer chains at a high density and having the molecular weight distribution of the polymer chains in a relatively narrow range such as about 1.0 to 1.3.

PRIOR ART DOCUMENTS

Patent Documents

Patent Literature 1: Japanese Patent Publication No. 3422463
Patent Literature 2: Japanese Patent Application Publication No. 2004-331776
Patent Literature 3: Japanese Patent Application Publication No. 2006-312117
Patent Literature 4: Japanese Patent Application Publication No. 2007-069193
Patent Literature 5: Japanese Patent Application Publication No. 2009-085933

SUMMARY OF THE INVENTION

The present invention provides a polymer brush-type filler which contains polymer chains at a high density and with a broad molecular weight distribution.

The present inventors have found, during various evaluations of polymer brush-type solids, that solid particles having a polymer brush which has polymer chains with a broad molecular weight distribution at a high density are useful as a chromatographic separation medium, thereby completing the present invention.

Thus the present invention provides fine particles for chromatography comprising solid particles, polymerization initiating groups covalently bound to the surface of the solid particles and graft polymer chains obtained by grafting polymer chains via the polymerization initiating groups, wherein:

a) the graft polymer chains include repeating units represented by the following formula (1) which are the same or different from each other;
b) the graft polymer chains have a number average molecular weight of 500 or more and 300,000 or less;
c) the graft polymer chains have a molecular weight distribution of 1.4 or more and 5.0 or less; and
d) the graft polymer chains have a density on the surface of the solid particles of 0.03 chains/$nm^2$ or more and 0.70 chains/$nm^2$ or less.

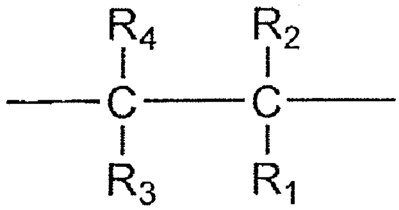

(1)

In the formula (1), $R_1$ independently represents a group represented by the following formula (2) or a phenyl or naphthyl group having one or two or more substituents $R_5$; $R_2$ to $R_4$ independently represent -H or $-CH_3$; and $R_5$ independently represents an alkyl group having 1 to 20 carbon atoms, an alkylphenyl group in which the alkyl group has up to 10 carbon atoms, -OH, an alkoxy in which the alkyl group has up to 10 carbon atoms, a cyano, an amino, a monoalkylamino in which the alkyl group has up to 10 carbon atoms, a dialkylamino in which each alkyl group has up to 10 carbon atoms, a trialkylammonium in which each alkyl group has up to 10 carbon atoms, a carboxyl, a sulfonyl, an acetamino or an acetoxy group.

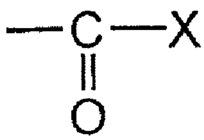

(2)

In the formula (2), X represents -OH, $-OR_6$ or $-NR_7R_8$; $R_6$ represents an alkyl group having 1 to 20 carbon atoms, a phenyl group, a naphthyl group, a phenylalkyl group in which the alkyl group has up to 10 carbon atoms, a naphthylalkyl group in which the alkyl group has up to 10 carbon atoms, an alkylphenyl group in which the alkyl group has up to 10 carbon atoms or an alkylnaphthyl group in which the alkyl group has up to 10 carbon atoms, all of which may have one or two or more substituents; $R_7$ and $R_8$ respectively represent an alkyl group having 1 to 10 carbon atoms, a phenyl group, a phenylalkyl group in which the alkyl group has up to 10 carbon atoms or an alkylphenyl group in which the alkyl group has up to 10 carbon atoms; and the substituent(s) which $R_6$ may have independently represents -OH, an alkoxy having 1 to 10 carbon atoms, a cyano, an amino, a monoalkylamino having 1 to 10 carbon atoms, a dialkylamino in which each alkyl group has 1 to 10 carbon atoms, a trialkylammonium in which each alkyl group has 1 to 10 carbon atoms, a carboxyl, a sulfonyl, an acetamino or an acetoxy group.

The present invention also provides the fine particles for chromatography, wherein the graft polymer chains have a molecular weight distribution of 1.5 or more and 5.0 or less.

The present invention also provides the fine particles for chromatography, wherein the solid particles have the shape of true sphere, a specific surface area per unit weight of the solid particles of 20 to 450 $m^2/g$ and a pore volume per unit weight of the solid particles to 0.7 to 1.1 cc/g.

The present invention also provides the fine particles for chromatography, wherein the solid particles have been surface-treated with a silane coupling agent represented by the following formula (3).

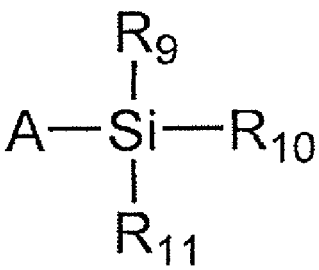

(3)

In the formula (3), $R_9$ to $R_{11}$ respectively represent a saturated or unsaturated hydrocarbon group having 1 to 30 carbon atoms or a saturated or unsaturated hydrocarbon group which has 1 to 8 carbon atoms and may have one or two or more substituents; A represents a halogen, an alkoxy group having 1 to 10 carbon atoms, a hydroxyl group or an aza-silyl group; and the substituent(s) which the hydrocarbon may have independently represents a nitrile group, a

hydroxyl group, an amino group, a pyridyl group or an amide group.

The present invention also provides chromatography using a particulate separation medium, wherein the separation medium is the fine particles for chromatography of the present invention and the chromatography is gas chromatography, liquid chromatography, thin layer chromatography or super-critical fluid chromatography.

The present invention also provides the chromatography wherein a mobile phase for the super-critical fluid chromatography is super-critical fluid composed of super-critical carbon dioxide, subcritical fluid composed of subcritical liquid carbon dioxide or mixed fluid of super-critical liquid carbon dioxide and an additive.

The present invention also provides the chromatography which is normal phase chromatography using, as a mobile phase, a mixed solvent containing a low polarity organic solvent and an intermediate or high polarity organic solvent having higher polarity than the low polarity organic solvent.

The present invention also provides the chromatography which aims to separate a low molecular weight compound having a molecular weight of 10,000 or less.

The present invention also provides the chromatography which aims to separate two types of isomers represented by the same compositional formula.

The present invention can provide the polymer brush-type filler which contains polymer chains at a density as high as conventional polymer brush-type solids and with a broader molecular weight distribution compared to conventional polymer brush-type solids.

## BRIEF DESCRIPTION OF THE DRAWINGS

Fig. 1 is a chart showing a HPLC chromatogram of naphthacene using the column 1 of Example 1;
Fig. 2 is a chart showing a HPLC chromatogram of anthracene using the column 1 of Example 1;
Fig. 3 is a chart showing a HPLC chromatogram of naphthalene using the column 1 of Example 1;
Fig. 4 is a chart showing a HPLC chromatogram of pyrene using the column 1 of Example 1;
Fig. 5 is a chart showing a HPLC chromatogram of phenanthrene using the column 1 of Example 1;
Fig. 6 is a chart showing a HPLC chromatogram of perylene using the column 1 of Example 1;
Fig. 7 is a chart showing a HPLC chromatogram of triphenylene using the column 1 of Example 1;
Fig. 8 is a chart showing a HPLC chromatogram of o-terphenyl using the column 1 of Example 1;
Fig. 9 is a chart showing a HPLC chromatogram of 9,10-dihydrophenanthrene using the column 1 of Example 1;
Fig. 10 is a chart showing a HPLC chromatogram of trans-stilbene using the column 1 of Example 1;
Fig. 11 is a chart showing a HPLC chromatogram of cis-stilbene using the column 1 of Example 1;
Fig. 12 is a chart showing a HPLC chromatogram of naphthacene using the column 3 of Example 3;
Fig. 13 is a chart showing a HPLC chromatogram of anthracene using the column 3 of Example 3;
Fig. 14 is a chart showing a HPLC chromatogram of naphthalene using the column 3 of Example 3;
Fig. 15 is a chart showing a HPLC chromatogram of pyrene using the column 3 of Example 3;
Fig. 16 is a chart showing a HPLC chromatogram of phenanthrene using the column 3 of Example 3;
Fig. 17 is a chart showing a HPLC chromatogram of perylene using the column 3 of Example 3;
Fig. 18 is a chart showing a HPLC chromatogram of triphenylene using the column 3 of Example 3;
Fig. 19 is a chart showing a HPLC chromatogram of o-terphenyl using the column 3 of Example 3;
Fig. 20 is a chart showing a HPLC chromatogram of 9,10-dihydrophenanthrene using the column 3 of Example 3;
Fig. 21 is a chart showing a HPLC chromatogram of trans-stilbene using the column 3 of Example 3;
Fig. 22 is a chart showing a HPLC chromatogram of cis-stilbene using the column 3 of Example 3;
Fig. 23 is a chart showing a HPLC chromatogram of naphthacene using the unbound silica gel column of Comparative Example 1;
Fig. 24 is a chart showing a HPLC chromatogram of anthracene using the unbound silica gel column of Comparative Example 1;
Fig. 25 is a chart showing a HPLC chromatogram of naphthalene using the unbound silica gel column of Comparative Example 1;
Fig. 26 is a chart showing a HPLC chromatogram of pyrene using the unbound silica gel column of Comparative Example 1;
Fig. 27 is a chart showing a HPLC chromatogram of phenanthrene using the unbound silica gel column of Comparative Example 1;
Fig. 28 is a chart showing a HPLC chromatogram of perylene using the unbound silica gel column of Comparative Example 1;
Fig. 29 is a chart showing a HPLC chromatogram of triphenylene using the unbound silica gel column of Comparative Example 1;

Fig. 30 is a chart showing a HPLC chromatogram of o-terphenyl using the unbound silica gel column of Comparative Example 1;
Fig. 31 is a chart showing a HPLC chromatogram of 9,10-dihydrophenanthrene using the unbound silica gel column of Comparative Example 1;
Fig. 32 is a chart showing a HPLC chromatogram of trans-stilbene using the unbound silica gel column of Comparative Example 1;
Fig. 33 is a chart showing a HPLC chromatogram of cis-stilbene using the unbound silica gel column of Comparative Example 1;
Fig. 34 is a chart showing a HPLC chromatogram of naphthacene using the ODS silica gel column of Comparative Example 2;
Fig. 35 is a chart showing a HPLC chromatogram of anthracene using the ODS silica gel column of Comparative Example 2;
Fig. 36 is a chart showing a HPLC chromatogram of naphthalene using the ODS silica gel column of Comparative Example 2;
Fig. 37 is a chart showing a HPLC chromatogram of pyrene using the ODS silica gel column of Comparative Example 2;
Fig. 38 is a chart showing a HPLC chromatogram of phenanthrene using the ODS silica gel column of Comparative Example 2;
Fig. 39 is a chart showing a HPLC chromatogram of perylene using the ODS silica gel column of Comparative Example 2;
Fig. 40 is a chart showing a HPLC chromatogram of triphenylene using the ODS silica gel column of Comparative Example 2;
Fig. 41 is a chart showing a HPLC chromatogram of o-terphenyl using the ODS silica gel column of Comparative Example 2;
Fig. 42 is a chart showing a HPLC chromatogram of 9,10-dihydrophenanthrene using the ODS silica gel column of Comparative Example 2;
Fig. 43 is a chart showing a HPLC chromatogram of trans-stilbene using the ODS silica gel column of Comparative Example 2;
Fig. 44 is a chart showing a HPLC chromatogram of cis-stilbene using the ODS silica gel column of Comparative Example 2;
Fig. 45 is a chart showing a HPLC chromatogram of naphthacene using the dihydroxypropyl group-bound silica gel column of Comparative Example 3;
Fig. 46 is a chart showing a HPLC chromatogram of anthracene using the dihydroxypropyl group-bound silica gel column of Comparative Example 3;
Fig. 47 is a chart showing a HPLC chromatogram of naphthalene using the dihydroxypropyl group-bound silica gel column of Comparative Example 3;
Fig. 48 is a chart showing a HPLC chromatogram of pyrene using the dihydroxypropyl group-bound silica gel column of Comparative Example 3;
Fig. 49 is a chart showing a HPLC chromatogram of phenanthrene using the dihydroxypropyl group-bound silica gel column of Comparative Example 3;
Fig. 50 is a chart showing a HPLC chromatogram of perylene using the dihydroxypropyl group-bound silica gel column of Comparative Example 3;
Fig. 51 is a chart showing a HPLC chromatogram of triphenylene using the dihydroxypropyl group-bound silica gel column of Comparative Example 3;
Fig. 52 is a chart showing a HPLC chromatogram of o-terphenyl using the dihydroxypropyl group-bound silica gel column of Comparative Example 3;
Fig. 53 is a chart showing a HPLC chromatogram of 9,10-dihydrophenanthrene using the dihydroxypropyl group-bound silica gel column of Comparative Example 3;
Fig. 54 is a chart showing a HPLC chromatogram of trans-stilbene using the dihydroxypropyl group-bound silica gel column of Comparative Example 3;
Fig. 55 is a chart showing a HPLC chromatogram of cis-stilbene using the dihydroxypropyl group-bound silica gel column of Comparative Example 3;
Fig. 56 is a chart showing a HPLC chromatogram of naphthacene using the cyanopropyl group-bound silica gel column of Comparative Example 4;
Fig. 57 is a chart showing a HPLC chromatogram of anthracene using the cyanopropyl group-bound silica gel column of Comparative Example 4;
Fig. 58 is a chart showing a HPLC chromatogram of naphthalene using the cyanopropyl group-bound silica gel column of Comparative Example 4;

Fig. 59 is a chart showing a HPLC chromatogram of pyrene using the cyanopropyl group-bound silica gel column of Comparative Example 4;
Fig. 60 is a chart showing a HPLC chromatogram of phenanthrene using the cyanopropyl group-bound silica gel column of Comparative Example 4;
Fig. 61 is a chart showing a HPLC chromatogram of perylene using the cyanopropyl group-bound silica gel column of Comparative Example 4;
Fig. 62 is a chart showing a HPLC chromatogram of triphenylene using the cyanopropyl group-bound silica gel column of Comparative Example 4;
Fig. 63 is a chart showing a HPLC chromatogram of o-terphenyl using the cyanopropyl group-bound silica gel column of Comparative Example 4;
Fig. 64 is a chart showing a HPLC chromatogram of 9,10-dihydrophenanthrene using the cyanopropyl group-bound silica gel column of Comparative Example 4;
Fig. 65 is a chart showing a HPLC chromatogram of trans-stilbene using the cyanopropyl group-bound silica gel column of Comparative Example 4;
Fig. 66 is a chart showing a HPLC chromatogram of cis-stilbene using the cyanopropyl group-bound silica gel column of Comparative Example 4;
Fig. 67 is a chart showing retention coefficients of the column 1, column 3 and columns of Comparative Example 1 to 4 for samples 2 to 4;
Fig. 68 is a chart showing retention coefficients of the column 1, column 3 and columns of Comparative Example 1 to 4 for samples 4 to 7;
Fig. 69 is a chart showing retention coefficients of the column 1, column 3 and columns of Comparative Example 1 to 4 for samples 2, 5 and 8;
Fig. 70 is a chart showing retention coefficients of the column 1, column 3 and columns of Comparative Example 1 to 4 for samples 8 and 9;
Fig. 71 is a chart showing retention coefficients of the column 1, column 3 and columns of Comparative Example 1 to 4 for samples 6 and 10;
Fig. 72 is a chart showing retention coefficients of the column 1, column 3 and columns of Comparative Example 1 to 4 for samples 11 and 12;
Fig. 73 is a chart showing a HPLC chromatogram of naphthacene using the column 4 of Example 4;
Fig. 74 is a chart showing a HPLC chromatogram of anthracene using the column 4 of Example 4;
Fig. 75 is a chart showing a HPLC chromatogram of naphthalene using the column 4 of Example 4;
Fig. 76 is a chart showing a HPLC chromatogram of pyrene using the column 4 of Example 4;
Fig. 77 is a chart showing a HPLC chromatogram of phenanthrene using the column 4 of Example 4;
Fig. 78 is a chart showing a HPLC chromatogram of perylene using the column 4 of Example 4;
Fig. 79 is a chart showing a HPLC chromatogram of triphenylene using the column 4 of Example 4;
Fig. 80 is a chart showing a HPLC chromatogram of o-terphenyl using the column 4 of Example 4;
Fig. 81 is a chart showing a HPLC chromatogram of 9,10-dihydrophenanthrene using the column 4 of Example 4;
Fig. 82 is a chart showing a HPLC chromatogram of trans-stilbene using the column 4 of Example 4;
Fig. 83 is a chart showing a HPLC chromatogram of cis-stilbene using the column 4 of Example 4;
Fig. 84 is a chart showing a HPLC chromatogram of naphthacene using the column 5 of Example 5;
Fig. 85 is a chart showing a HPLC chromatogram of anthracene using the column 5 of Example 5;
Fig. 86 is a chart showing a HPLC chromatogram of naphthalene using the column 5 of Example 5;
Fig. 87 is a chart showing a HPLC chromatogram of pyrene using the column 5 of Example 5;
Fig. 88 is a chart showing a HPLC chromatogram of phenanthrene using the column 5 of Example 5;
Fig. 89 is a chart showing a HPLC chromatogram of perylene using the column 5 of Example 5;
Fig. 90 is a chart showing a HPLC chromatogram of triphenylene using the column 5 of Example 5;
Fig. 91 is a chart showing a HPLC chromatogram of o-terphenyl using the column 5 of Example 5;
Fig. 92 is a chart showing a HPLC chromatogram of 9,10-dihydrophenanthrene using the column 5 of Example 5;
Fig. 93 is a chart showing a HPLC chromatogram of trans-stilbene using the column 5 of Example 5;
Fig. 94 is a chart showing a HPLC chromatogram of cis-stilbene using the column 5 of Example 5;
Fig. 95 is a chart showing retention coefficients of the column 4 and column 5 for samples 2 to 4;
Fig. 96 is a chart showing retention coefficients of the column 4 and column 5 for samples 4 to 7;
Fig. 97 is a chart showing retention coefficients of the column 4 and column 5 for samples 2, 5 and 8;
Fig. 98 is a chart showing retention coefficients of the column 4 and column 5 for samples 8 and 9;
Fig. 99 is a chart showing retention coefficients of the column 4 and column 5 for samples 6 and 10;
Fig. 100 is a chart showing retention coefficients of the column 4 and column 5 for samples 11 and 12;
Fig. 101 is a SFC chromatogram of naphthacene using the column 1s of Example 6;
Fig. 102 is a SFC chromatogram of anthracene using the column 1s of Example 6;

Fig. 103 is a SFC chromatogram of naphthalene using the column 1s of Example 6;
Fig. 104 is a SFC chromatogram of pyrene using the column 1s of Example 6;
Fig. 105 is a SFC chromatogram of phenanthrene using the column 1s of Example 6;
Fig. 106 is a SFC chromatogram of triphenylene using the column 1s of Example 6;
Fig. 107 is a SFC chromatogram of o-terphenyl using the column 1s of Example 6;
Fig. 108 is a SFC chromatogram of 9,10-dihydrophenanthrene using the column 1s of Example 6;
Fig. 109 is a SFC chromatogram of trans-stilbene using the column 1s of Example 6;
Fig. 110 is a SFC chromatogram of cis-stilbene using the column 1s of Example 6;
Fig. 111 is a SFC chromatogram of naphthacene using the column 3s of Example 6;
Fig. 112 is a SFC chromatogram of anthracene using the column 3s of Example 6;
Fig. 113 is a SFC chromatogram of naphthalene using the column 3s of Example 6;
Fig. 114 is a SFC chromatogram of pyrene using the column 3s of Example 6;
Fig. 115 is a SFC chromatogram of phenanthrene using the column 3s of Example 6;
Fig. 116 is a SFC chromatogram of perylene using the column 3s of Example 6;
Fig. 117 is a SFC chromatogram of triphenylene using the column 3s of Example 6;
Fig. 118 is a SFC chromatogram of o-terphenyl using the column 3s of Example 6;
Fig. 119 is a SFC chromatogram of 9,10-dihydrophenanthrene using the column 3s of Example 6;
Fig. 120 is a SFC chromatogram of trans-stilbene using the column 3s of Example 6;
Fig. 121 is a SFC chromatogram of cis-stilbene using the column 3s of Example 6;
Fig. 122 is a SFC chromatogram of naphthacene using the column 4s of Example 6;
Fig. 123 is a SFC chromatogram of anthracene using the column 4s of Example 6;
Fig. 124 is a SFC chromatogram of naphthalene using the column 4s of Example 6;
Fig. 125 is a SFC chromatogram of pyrene using the column 4s of Example 6;
Fig. 126 is a SFC chromatogram of phenanthrene using the column 4s of Example 6;
Fig. 127 is a SFC chromatogram of perylene using the column 4s of Example 6;
Fig. 128 is a SFC chromatogram of triphenylene using the column 4s of Example 6;
Fig. 129 is a SFC chromatogram of o-terphenyl using the column 4s of Example 6;
Fig. 130 is a SFC chromatogram of 9,10-dihydrophenanthrene using the column 4s of Example 6;
Fig. 131 is a SFC chromatogram of trans-stilbene using the column 4s of Example 6;
Fig. 132 is a SFC chromatogram of cis-stilbene using the column 4s of Example 6;
Fig. 133 is a SFC chromatogram of naphthacene using the column 5s of Example 6;
Fig. 134 is a SFC chromatogram of anthracene using the column 5s of Example 6;
Fig. 135 is a SFC chromatogram of naphthalene using the column 5s of Example 6;
Fig. 136 is a SFC chromatogram of pyrene using the column 5s of Example 6;
Fig. 137 is a SFC chromatogram of phenanthrene using the column 5s of Example 6;
Fig. 138 is a SFC chromatogram of perylene using the column 5s of Example 6;
Fig. 139 is a SFC chromatogram of triphenylene using the column 5s of Example 6;
Fig. 140 is a SFC chromatogram of o-terphenyl using the column 5s of Example 6;
Fig. 141 is a SFC chromatogram of 9,10-dihydrophenanthrene using the column 5s of Example 6;
Fig. 142 is a SFC chromatogram of trans-stilbene using the column 5s of Example 6;
Fig. 143 is a SFC chromatogram of cis-stilbene using the column 5s of Example 6;
Fig. 144 is a chart showing retention coefficients of the columns 1s, 3s, 4s and 5s for samples 2 to 4;
Fig. 145 is a chart showing retention coefficients of the columns 1s, 3s, 4s and 5s for samples 4 to 7;
Fig. 146 is a chart showing retention coefficients of the columns 1s, 3s, 4s and 5s for samples 2, 5 and 8;
Fig. 147 is a chart showing retention coefficients of the columns 1s, 3s, 4s and 5s for samples 8 and 9;
Fig. 148 is a chart showing retention coefficients of the columns 1s, 3s, 4s and 5s for samples 6 and 10; and
Fig. 149 is a chart showing retention coefficients of the columns 1s, 3s, 4s and 5s for samples 11 and 12.

## DESCRIPTION OF THE EMBODIMENTS

The fine particles for chromatography of the present invention comprise solid particles, polymerization initiating groups covalently bound to the surface of the solid particles and graft polymer chains obtained by grafting polymer chains via the polymerization initiating groups.

The solid particles may be particles which allow the polymerization initiating groups being bound via covalent bonds on the surface thereof. Such solid particles may be particles which are used as a carrier for chromatographic separation media and may include, for example, organic carriers such as cross-linked polystyrenes, cross-linked acrylic polymers, epoxy polymers, cellulose, cross-linked cellulose, cross-linked agarose, cross-linked dextran, cross-linked mannan and the like and inorganic carriers such as alumina, silica gel, mesoporous silica gel, zeolite, diatomaceous

earth, silica glass, clay mineral, zirconium, metals and the like.

The average particle diameter of the solid particles is preferably 1.0 μm to 10 mm, more preferable 1.0 to 300 μm and still more preferably 1.0 to 50 μm, in view of the separation ability of the fine particles for chromatography of the present invention. The average particle diameter of the solid particles may be a value measured by the laser diffraction/scattering method, the coulter counter method or the flow type particle image analysis, or may be a value specified in a catalogue. The average particle diameter of the solid particles may be adjusted by, for example, classification or mixing of classified materials.

It is preferable that the solid particles have the shape of true sphere in view of reducing flow disturbance of fluid passing through the packed phase, thereby obtaining sharp chromatogram peaks. True sphere used herein refers to the fact that the solid particles have the average degree of circularity of their planar projection images of 0.8 to 1.0. The average degree of circularity may be a value according to a measured ratio between the long axis and the short axis by the flow type particle image analysis or may be a value specified in a catalogue.

It is preferable that the solid particles are porous in view of increasing the effect of surface modification of the fine particles for chromatography of the present invention and increasing the separation ability. Accordingly, it is preferable that the solid particles have a specific surface area per unit weight of 20 to 450 $m^2/g$ and preferably 40 to 450 $m^2/g$. The specific surface area may be a value measured by the nitrogen adsorption method (BET) or may be a value specified in a catalogue.

In view of the above, it is preferable that the solid particles have a pore volume per unit weight of 0.7 to 1.1 cc/g. The pore volume may be a value measured by, for example, the mercury porosimeter method or may be a value specified in a catalogue.

In view of the above, it is preferable that the solid particles have a pore diameter of 6 to 100 nm and more preferably 12 to 100 nm. The pore diameter may be a representative value of the size of pores on the surface of the solid particles and may be an average value and a maximum value. The pore diameter may be a value measured by, for example, the mercury porosimeter method or may be a value specified in a catalogue.

The solid particles having the shape, specific surface area, pore volume and pore diameter as described above may include, for example, silica gel for HPLC, silica gel for LC, alumina gel for LC, titania gel for LC, polymer gel for LC and polystyrene gel for LC.

The polymerization initiating groups are the groups which provide starting points for living polymerization in order to form the graft polymer chains and can be formed by covalently immobilizing compounds each having a functional group binding to the surface of the solid particles via a covalent bond and the polymerization initiating group on the surface of the solid particles. One or two or more types of the polymerization initiating group may be used. The polymerization initiating groups may be appropriately selected according to the type of the monomers used for living polymerization and the type of living polymerization. The polymerization initiating groups may include, for example, a (2-bromo-2-methyl)propionyloxy group, a 2-(4-chlorosulfonylphenyl)ethyl group, a 2-bromopionyloxy group, a 4-(4-chloromethyl)phenyl group and a 4-(2-bromoethyl)phenyl group. The functional group may be appropriately selected according to the solid particles.

The density of the polymerization initiating groups on the surface of the solid particles is preferably 0.03 to 0.7 per 1 $nm^2$ of the surface of the solid particles in view of increasing the density of the polymer brush. The density of the polymerization initiating groups can be determined from the weight of the polymerization initiating groups on the surface of the solid particles, the molecular weight of the polymerization initiating groups and the surface area of the solid particles. The density of the polymerization initiating groups can be adjusted, for example, by the amount of the above compound, reaction time and reaction temperature of the immobilization reaction of the polymerization initiating groups on the surface of the solid particles.

The graft polymer chains include repeating units represented by the following formula (1) which are the same or different from each other. In the formula (1), $R_1$ independently represents a group represented by the following formula (2) or a phenyl group having one or two or more substituents $R_5$. In the formula (1), $R_2$ to $R_4$ independently represent -H or $-CH_3$.

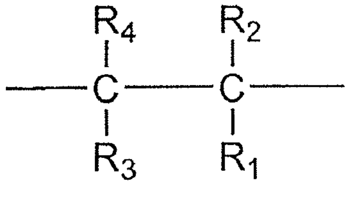

(1)

In the formula (1), $R_5$ independently represents an alkyl group having 1 to 20 carbon atoms, an alkylphenyl group in which the alkyl group has up to 10 carbon atoms, -OH, an alkoxy in which the alkyl group has up to 10 carbon

atoms, a cyano, an amino, a monoalkylamino in which the alkyl group has up to 10 carbon atoms, a dialkylamino in which each alkyl group has up to 10 carbon atoms, a trialkylammonium in which each alkyl group has up to 10 carbon atoms, a carboxyl, a sulfonyl, an acetamino or an acetoxy group.

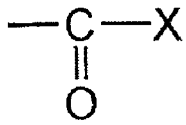

(2)

In the formula (2), X represents -OH, $-OR_6$ or $-NR_7R_8$. $R_6$ represents an alkyl group having 1 to 20 carbon atoms, a phenyl group, a naphthyl group, a phenylalkyl group in which the alkyl group has up to 10 carbon atoms, a naphthylalkyl group in which the alkyl group has up to 10 carbon atoms, an alkylphenyl group in which the alkyl group has up to 10 carbon atoms or an alkylnaphthyl group in which the alkyl group has up to 10 carbon atoms, all of which may have one or two or more substituents. $R_7$ and $R_8$ respectively represent an alkyl group having 1 to 10 carbon atoms, a phenyl group, a phenylalkyl group in which the alkyl group has up to 10 carbon atoms or an alkylphenyl group in which the alkyl group has up to 10 carbon atoms.

The substituent which $R_6$ may have independently is -OH, an alkoxy having 1 to 10 carbon atoms, a cyano, an amino, a monoalkylamino having 1 to 10 carbon atoms, a dialkylamino in which each alkyl group has 1 to 10 carbon atoms, a trialkylammonium in which each alkyl group has 1 to 10 carbon atoms, a carboxyl, a sulfonyl, an acetamino or an acetoxy group.

The graft polymer chains may be formed by living polymerization to the surface of the solid particles of a monomer for graft polymerization. The monomer for graft polymerization can be appropriately selected according to the function desired to be introduced without limitation and may include, for example, styrene-type monomers such as styrene, $\alpha$-methylstyrene, vinylbenzyl chloride, butoxy styrene, vinyl aniline, sodium styrene sulfonate, vinylbenzoic acid, vinyl phosphoric acid, vinylpyridine, dimethylaminomethyl styrene, vinylbenzyl trimethylammonium chloride and the like; vinyl esters such as vinyl acetate, vinyl propionate and the like; nitrile-type monomers such as acrylonitrile; (meth)acrylic monomers such as methyl methacrylate, methacrylic acid, hydroxyethyl methacrylate, ethylene glycol dimethacrylate, perfluoroalkyl methacrylate, methacryloxyethyl trimethylammonium chloride, ethyl acrylate, acrylic acid, dimethylaminoethyl acrylate and the like; (meth)acrylamide monomers such as acrylamide, N-isopropylacrylamide, methacylamide, dimethylaminopropyl acrylamide, acrylamidopropyl trimethyl ammonium chloride, acrylamido-2-methylpropanesulfonic acid and the like.

One or two or more monomers for graft polymerization may be used and the monomer composition may be varied during polymerization. Among these monomers for graft polymerization, styrene-type monomers, (meth)acrylic monomers and (meth)acrylamide monomers are preferable in view of facile formation of graft polymers by living radical polymerization.

The term "(meth)acryl" as used herein refers to one or both of acryl and methacryl.

The graft polymer chains have a number average molecular weight of 500 or more and 300,000 or less. The number average molecular weight of the graft polymer chains is not particularly limited as long as the length allows sufficient interaction of the graft polymer chains with a substance to be separated and is preferably 2,000 to 200,000 and more preferably 5,000 to 100,000.

The graft polymer chains have a molecular weight distribution of 1.4 or more and 5.0 or less and preferably 1.5 or more and 5.0 or less. The molecular weight distribution of the graft polymer chains refer to the ratio (Mw/Mn) of the weight average molecular weight (Mw) to the number average molecular weight (Mn).

The number average molecular weight and the weight average molecular weight of the graft polymer chains can be measured by separating the graft polymer chains from the fine particles for chromatography and subjecting the separated graft polymer chain component to the GPC method. The number average molecular weight of the graft polymer chains can be adjusted by means of the concentration of the polymerization initiating groups, monomer concentration and reaction rate.

By further adding a compound having polymerization initiation ability, the number average molecular weight can be adjusted in a broader range.

The graft polymer chains have a density on the surface of the solid particles of 0.03 chains/$nm^2$ or more and 0.70 chains/$nm^2$ or less. When the graft polymer chains have the density of less than 0.03 chains/$nm^2$, interaction between the graft polymer chains on the particles and a compound to be separated is insufficient, making the particles inappropriate as the separation medium. When the graft polymer chains have the density of more than 0.70 chains/$nm^2$, it is difficult to adjust to that value. The density of the graft polymer chains can be calculated from the weight of the graft polymer chains per unit weight of the solid particles, the number average molecular weight of the graft polymer chains and the specific surface area of the solid particles. The density of the graft polymer chains can be adjusted according

to, for example, the density of the polymerization initiating groups on the surface of the solid particles.

The fine particles for chromatography of the present invention can be obtained by a method comprising the first step of covalently binding the polymerization initiating groups on the surface of the solid particles and the second step of polymerizing the monomer for graft polymerization from the polymerization initiating groups on the solid particles by living polymerization. These steps can be carried out as described in Patent Literature 1. By these steps, the fine particles for chromatography can be obtained which are covered with brush-like polymers which are polymerized by living polymerization from the polymerization initiating groups covalently bound on the solid particles and which are bristled with a high density and a broad molecular weight distribution as defined herein.

In the second step, living polymerization may be living anion polymerization, living radical polymerization, living cation polymerization and the like without limitation. However, living radial polymerization is the most preferable because it is less affected by minute impurities and it can be applied to a broad range of monomers. Formation of the graft polymer chains by living radical polymerization can proceed with the reaction between a radical species generated by cleavage of, by means of heat, light and a catalyst, some of the polymerization initiating groups bound on the surface of the solid particles and the monomer for graft polymerization. Living radical polymerization which can be used may include, for example, atom transfer radical polymerization (ATRP), reversible addition-fragmentation chain transfer polymerization (RAFT) and nitroxide-mediated living radical polymerization (NMP).

The fine particles for chromatography of the present invention may be subjected to further treatment(s) within the range that the effect of the present invention is obtained. Such a treatment may include, for example, surface treatment of the solid particles with a silane coupling agent represented by the following formula (3).

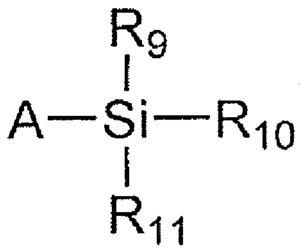

(3)

In the formula (3), $R_9$ to $R_{11}$ respectively represent a saturated or unsaturated hydrocarbon group having 1 to 30 carbon atoms or a saturated or unsaturated hydrocarbon group which has 1 to 8 carbon atoms and may have one or two or more substituents. In the formula (3), A represents a halogen, an alkoxy group having 1 to 10 carbon atoms, a hydroxyl group or an aza-silyl group. The substituent(s) which the hydrocarbon may have independently represents a nitrile group, a hydroxyl group, an amino group, a pyridyl group or an amide group.

One or two or more silane coupling agents may be used. The silane coupling agent represented by the formula (3) may include, for example, trimethylchlorosilane, hexamethyldisilazane and trimethylmethoxysilane. One or both of the solid particles having the polymerization initiating groups and the solid particles having the graft polymer chains formed thereon may be surface-treated by the silane coupling agent. Such surface treatment of the solid particles by the silane coupling agent is preferable in view of suppressing the activity of the polymerization initiating groups and other active groups (e.g., a silanol group when the solid particles are silica gel) on the solid particles toward a substance to be separated in chromatography and further improving chemical stability of the fine particles for chromatography of the present invention in chromatography.

When treating the surface of the solid particles by the above silane coupling agent, it is preferable that the surface of the solid particles having the polymerization initiating groups without the graft polymer chains has been treated with a silane coupling agent other than the silane coupling agent of the formula (3) in view of suppressing the activity of functional groups such as the polymerization initiating groups toward a substance to be separated and reducing non-specific adsorption, thereby making the shape of chromatogram peaks preferable. One or two or more types of such another silane coupling agent may be used. Another coupling agent may include, for example, trimethylchlorosilane, hexamethyldisilazane and trimethylmethoxysilane.

The surface treatment of the solid particles using the above silane coupling agent can be carried out in a similar manner as conventional surface treatment using a silane coupling agent.

The fine particles for chromatography of the present invention can be used as a separation medium in chromatography using a particulate separation medium. Such chromatography may include, for example, gas chromatography, liquid chromatography, thin layer chromatography and super-critical fluid chromatography.

The chromatography can be carried out by a conventional manner except that the fine particles for chromatography of the present invention are used as the separation medium. Namely, the fine particles for chromatography of the present invention can be used as a filler to be packed in a column in the above chromatography other than thin layer

chromatography and can be used for a separation medium layer by constituting a composition optionally with other component(s) such as a binder, which is then applied on a support.

In the above chromatography, a mobile phase may be well known fluid including liquid such as water and various organic solvents, super-critical fluid and subcritical fluid. For example, in the super-critical fluid chromatography according to the present invention, the mobile phase may be super-critical fluid composed of super-critical carbon dioxide, subcritical fluid composed of subcritical liquid carbon dioxide or mixed fluid of super-critical liquid carbon dioxide and an additive. The additive may include, for example, an alcohol having 1 to 8 carbon atoms, acetonitrile, acetone, tetrahydrofuran, chloroform, methylene chloride, acetic esters, tert-butyl methyl ether and water. One or two or more additives may be used.

According to the present invention, the mobile phase is preferably a mixed solvent containing a low polarity organic solvent and an intermediate or high polarity organic solvent having higher polarity than the low polarity organic solvent, i.e., it is preferable to use the fine particles for chromatography of the present invention for normal phase chromatography, in view of preferable separation of a subject substance based on affinity with the surface modifying agent. The low polarity organic solvent as used herein is, for example, a non-aqueous organic solvent and the low polarity organic solvent may include, for example, saturated hydrocarbon solvents represented by hexane and heptane and aromatic hydrocarbon solvents represented by toluene. The intermediate or high polarity organic solvent is, for example, an organic solvent which partially or freely miscible with water and the intermediate or high polarity organic solvent may include, for example, cyclic ether solvents represented by tetrahydrofuran, ketone organic solvents represented by acetone, alcohol solvents represented by methanol, ethanol and 2-propanol, ester solvents represented by ethyl acetate, and amide solvents represented by dimethylformamide. One or two or more organic solvents may be used.

The fine particles for chromatography of the present invention is preferably used for chromatography which aims to separate a low molecular weight compound having the molecular weight of 10,000 or less in view of avoiding adsorption and accumulation of the compound on the carrier.

The fine particles for chromatography of the present invention is also preferably used for chromatography which aims to separate two types of isomers represented by the same compositional formula because it is possible to take advantage of the feature of the fine particles for chromatography of the present invention, i.e., superior molecular geometry recognition ability towards isomers having same composition which frequently have similar physical properties. Two types of isomers represented by the same compositional formula may include, for example, structural isomers, regioisomers, geometric isomers and stereoisomers.

The chromatography of the present invention can be used for, as conventional chromatography, analysis of components in samples, separation of a specific component from mixtures.

EXAMPLES

Example 1: Production of silica gel dense polymer brush 1) Introduction of polymerization initiating groups to silica gel particles

To a 500-mL flask equipped with a Dean-Stark trap were charged 8 g of silica gel particles SP-120-5 (Daiso Co., Ltd.; average particle diameter: 4.3 μm, specific surface area: 332 $m^2/g$, pore volume: 1.02 cc/g, average pore diameter: 12.3 nm) and 100 mL toluene and refluxed at 130°C for 3 hours before addition of 21.3 g of (2-bromo-2-methyl)propionyloxy hexyl trimethoxysilane (BHM) and dehydration by reflux for 3 hours. After cooling to a room temperature, silica gel particles were dispersed in n-hexane prior to precipitation of the particles and recovery of the supernatant. These procedures were repeated for 13 times to purify and obtain silica gel particles (a) comprising polymerization initiating groups covalently bound on the surface thereof.

<Analysis of silica gel particles (a)>

The silica gel particles (a) (4.29 mg) were weighed in a sample holder for thermogravimetric analysis and heated to 900°C under the oxygen gas flow to remove all polymerization initiating groups bound on the surface by oxidative degradation.

It was confirmed by thermogravimetric analysis of untreated silica gel particles carried out separately that water adsorbed on the silica gel particles was almost completely removed by 150°C. Therefore, the weight decreased between 150°C and 900°C corresponds to the weight of the bound polymerization initiating groups. As the weight at 150°C was 4.27 mg and the weight at 900°C was 3.47 mg, it was found that the silica gel particles (a) contained 0.23 g of the bound polymerization initiating groups per 1 g of silica gel. By assuming that one molecule of the polymerization initiating group binds to 1.5 hydroxyl groups on the surface of the silica gel, the amount of the bound polymerization initiating groups per 1 g of silica gel is $4.25 \times 10^{20}$. As the specific surface area of the silica gel particles used is 332 $m^2/g$, the density of the polymerization initiating groups in the silica gel particles (a) can be calculated as 1.28/$nm^2$.

2) Graft reaction from polymerization initiating groups on surface of silica gel particles (a)

The reagents used hereinbelow were preliminarily degassed under reduced pressure, replaced with argon and stored in containers under argon atmosphere.

<Preparation of liquid (A)>

To a 100-mL eggplant-shaped flask (evaporating flask) were charged 1.7 g of copper bromide ($CuBr_2$) and 6.3 g of 4,4-dinonyl-2,2-dipyridyl and the flask was replaced with argon. To this flask was added 40 mL methyl methacrylate (MMA) to prepare liquid (A).

<Preparation of liquid (B)>

To a 30-mL eggplant-shaped flask (evaporating flask) were added 4.8 mL of tin (II) 2-ethylhexanoate and 12.5 mL of toluene to prepare liquid (B).

<Preparation of liquid (C)>

To a 30-mL eggplant-shaped flask (evaporating flask) were added 1.6 mL of ethyl-2-bromoisobutyrate and 12.5 mL of toluene to prepare liquid (C).

<Graft reaction>

To a Schlenk flask was charged 4 g of the silica gel particles (a) and dried under vacuum for 1.5 hours. After replacing the atmosphere in the flask with argon, 10.6 mL of toluene and then 30.0 mL of the liquid (A), 3.0 mL of the liquid (B) and 1.0 mL of the liquid (C) were added. The flask was incubated in an oil bath at 90°C to progress graft reaction. After reaction of 6 hours, the polymerization was terminated by cooling the flask to a room temperature.

<Purification>

To the flask after termination of the polymerization was added 400 mL of chloroform in 10 parts, all particles in the flask were transferred to a 500-mL beaker, the silica gel particles were dispersed in chloroform and the particles were then precipitated to remove the supernatant chloroform. To this flask was added 400 mL chloroform to disperse the silica gel particles therein and dissolve components soluble to chloroform and the particles were then precipitated to again remove the supernatant chloroform. These procedures were repeated 15 times prior to drying under vacuum for 8 hours to obtain silica gel particles comprising PMMA grafted to the polymerization initiating groups on the surface of the silica gel particles (a). The obtained particles are designated as the sample (b).

3) Structural analysis of the produced silica gel dense polymer brush

<Separation of graft chain (silica gel dissolution)>

The silica gel particles (sample (b); 40 mg) which comprise PMMA grafted from the polymerization initiating groups on the surface of the silica gel particles (a) were weighed in a plastic container. A mixed solution prepared by mixing a 17% by weight of ammonium hydrogen fluoride aqueous solution and methanol at the volume ratio of 1:1 was added to the plastic container and left for 3 days to dissolve the substrate silica gel particles. The solution in the container was filtered under reduced pressure, the filtrate was washed with pure water and methanol and the graft chain, PMMA, was collected on a filter paper. PMMA on the filter paper was dissolved in chloroform and then purified and isolated by removing chloroform under reduced pressure. The thus separated graft chain (PMMA) is designated as the sample (c).

<Molecular weight of graft chain>

The molecular weight of the graft chain, sample (c), was measured by the conventional GPC method under the following conditions.

(Measurement conditions)

Solvent: chloroform
Sample concentration: 2 mg/mL
Flow rate: 1.0 mL/min
Temperature: 40°C
Column: Shodex 806L, Showa Denko K.K. (three columns in series)
Detector: TDA302, Viscotek

The number average molecular weight (Mn) and the weight average molecular weight (Mw) were calculated from a calibration curve prepared with the standard PMMA. As a result, the sample (c) had Mn of 13,600, Mw of 48,100 and Mw/Mn of 3.5.

<Graft amount and Graft density>

The sample (c) (7.59 mg) was weighed in a sample holder for thermogravimetric analysis and heated to 900°C under oxygen gas flow to remove all polymerization initiating groups and PMMA components bound on the surface by oxidative degradation.

It was confirmed by thermogravimetric analysis of untreated silica gel particles carried out separately that water adsorbed on the silica gel particles was almost completely removed by 150°C. Therefore, the weight decreased between 150°C and 900°C corresponds to the weight of the graft chain (PMMA). As the weight at 150°C was 7.51 mg and the weight at 900°C was 4.50 mg, it is found that among 7.51 mg of the particles which comprise silica gel particles onto which PMMA is covalently bound via polymerization initiating groups, the graft chain (PMMA) corresponds to 3.01 mg which is calculated by subtracting 4.50 mg from 7.51 mg. The weight of the graft chain per 1 g of the silica gel particles in the sample (c) is 0.67 g.

As the number average molecular weight of the graft chain of the sample (c) was 13,600 and the specific surface area of the silica gel particles used was 332 $m^2/g$, the graft density ($chain/nm^2$) was calculated as follows:

$$\text{Graft density} = 0.67 \times N_A/(13{,}600 \times 332)/10^{18} = 0.09 \ (\text{chains}/\text{nm}^2)$$

wherein $N_A$ represents Avogadro's number.

Example 2: Production of silica gel dense polymer brush

The particles of sample (b) (silica gel particles comprising PMMA grafted from the polymerization initiating groups on the surface of the silica gel particles (a)) were obtained in the same manner as described in Example 1 except that silica gel particles SP-300-5 (Daiso Co., Ltd.; average particle diameter: 4.9 μm, specific surface area: 97 $m^2/g$, pore volume: 0.75 cc/g, maximum pore diameter: 31.8 nm) were used instead of the silica gel particles used in Example 1. The physical properties of the silica gel particles and graft chains of the obtained particles are shown in Table 1.

Table. 1

| Exampl e | Silica gel particles | | | Graft chain | | | | |
|---|---|---|---|---|---|---|---|---|
| | Parti cle diame ter (μm) | Specifi c surface area ($m^2/g$) | Pore diamete r (nm) | Polymer type | Amoun t (g/g-Si) | Density (chains /$nm^2$) | Mn | Mw/Mn |
| 1 | 4.3 | 332 | 12.3 | PMMA | 0.67 | 0.09 | 13,600 | 3.5 |
| 2 | 4.9 | 97 | 31.8 | PMMA | 0.83 | 0.14 | 36,300 | 2.6 |
| 3 | 4.4 | 25 | 99.3 | PMMA | 0.18 | 0.17 | 26,100 | 1.5 |

Example 3: Production of silica gel dense polymer brush

The particles of the samples (b) were obtained in the same manner as described in Example 1 except that the silica gel particles used in Example 1 were changed to silica gel particles SP-1000-5 (Daiso Co., Ltd.; average particle diameter: 4.4 μm, specific surface area: 25 $m^2/g$, pore volume: 0.84 cc/g, maximum pore diameter: 99.3 nm). The physical properties of the silica gel particles and graft chains of the obtained particles are shown in Table 1.

[Packing and evaluation results]

The particles of the samples (b) of Examples 1 and 3 were respectively dispersed in a dispersion solvent, filtered through a mesh and packed in a stainless column having 0.46 mm diameter × 15 cm length to obtain columns 1 and 3 in which the particles of the samples (b) of Examples 1 and 3 were packed respectively. The obtained columns 1 and 3 were used in a liquid chromatography apparatus and test samples 2 to 12 having the following structures, i.e., naphthacene (sample 2), anthracene (sample 3), naphthalene (sample 4), pyrene (sample 5), phenanthrene (sample 6), perylene (sample 7), triphenylene (sample 8), o-terphenyl (sample 9), 9,10-dihydrophenanthrene (sample 10), trans-stilbene (sample 11) and cis-stilbene (sample 12) were analyzed. The analysis conditions are shown in Table 2.

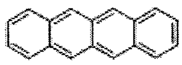
(2)

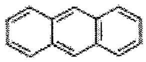
(3)

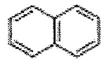
(4)

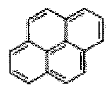
(5)

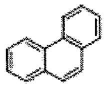
(6)

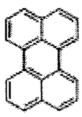
(7)

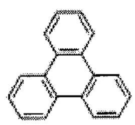
(8)

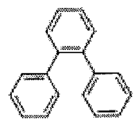
(9)

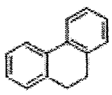
(10)

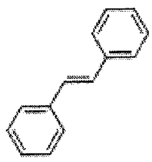
(11)

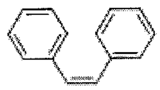
(12)

Table. 2

| | |
|---|---|
| Mobile phase | Hexane / 2-Propanol = 9/1 (v/v) |
| Flow rate of mobile phase | 1.0mL/min. |
| Column temperature | 25°C |
| Detection wavelength | 254nm |

Chromatograms of the sample 2 to 12 analyzed by the columns 1 and 3 are shown in Figs. 1 to 11 and Figs. 12 to 22, respectively. The elution times (min) of the samples from the columns are shown in Table 3.

Table. 3

| Sample | Elution time (min) | | | | | |
|---|---|---|---|---|---|---|
| | Column 1 | Column 3 | Comp. Ex. 1 | Comp. Ex. 2 | Comp. Ex. 3 | Comp. Ex. 4 |
| 2 | 3.383 | 2.850 | 2.217 | 2.075 | 2.158 | 2.892 |
| 3 | 2.800 | 2.558 | 2.208 | 2.017 | 2.233 | 2.583 |
| 4 | 2.467 | 2.367 | 2.208 | 1.992 | 2.158 | 2.392 |
| 5 | 2.983 | 2.633 | 2.217 | 2.050 | 2.333 | 2.708 |
| 6 | 2.842 | 2.575 | 2.208 | 2.017 | 2.250 | 2.600 |
| 7 | 3.267 | 3.050 | 2.225 | 2.108 | 2.517 | 3.175 |
| 8 | 2.850 | 2.800 | 2.225 | 2.058 | 2.392 | 2.942 |
| 9 | 2.008 | 2.308 | 2.192 | 1.950 | 2.108 | 2.367 |
| 10 | 2.050 | 2.308 | 2.200 | 1.992 | 2.133 | 2.408 |
| 11 | 2.208 | 2.417 | 2.200 | 1.983 | 2.158 | 2.254 |
| 12 | 1.975 | 2.267 | 2.200 | 1.958 | 2.092 | 2.333 |

Meanwhile, the following silica gel columns of Comparative Examples 1 to 4 were used to analyze the sample 2 to 12 in the same manner as the columns 1 and 3 in order to serve as comparisons for columns 1 and 3. Chromatograms of the sample 2 to 12 analyzed by Comparative Examples 1 to 4 are shown in Figs. 23 to 33, Figs. 34 to 44, Figs. 45 to 55 and Figs. 56 to 66, respectively. The elution times (min) of the samples from the columns are shown in Table 3.

Comparative Example 1: a silica gel column obtained by packing surface unbound silica gel having a particle diameter of 5 μm in a stainless column having 0.46 mm diameter × 15 cm length.

Comparative Example 2: a silica gel column obtained by packing octadecylsilyl group-bound silica gel having a particle diameter of 5 μm in a stainless column having 0.46 mm diameter × 15 cm length.

Comparative Example 3: a commercially available silica gel column for normal phase having a particle diameter of 5 μm and having dihydroxypropyl groups bound on the surface (YMC-Pack Diol-NP, YMC Co., Ltd.).

Comparative Example 4: a commercially available silica gel column for normal phase and reverse phase having a particle diameter of 5 μm and having cyanopropyl groups bound on the surface (YMC-Pack CN, YMC Co., Ltd.).

Based on the respective chromatograms, the retention coefficient (k') of the samples were determined from the dead volume (to) corresponding to the elution time of tri-tert-butylbenzene (TTB (1)) represented by the following formula and the elution times (t) of the samples according to the following formula. The retention coefficients of the columns 1 and 3 and Comparative Examples 1 to 4 for the samples are shown in Table 4 and the distribution of the retention coefficients of the columns for the samples are shown in Figs. 67 to 72. In Figs. 67 to 72, samples which have discrete k' values in a column can be separated in the column.

$$k' = (t - t_0)/t_0$$

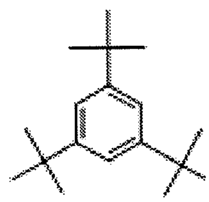

TTB (1)

Table. 4

| Sample | Retention coefficient (-) | | | | | |
|---|---|---|---|---|---|---|
| | Column 1 | Column 3 | Comp. Ex. 1 | Comp. Ex. 2 | Comp. Ex. 3 | Comp. Ex. 4 |
| 2 | 1.159 | 0.425 | 0.031 | 0.078 | 0.036 | 0.377 |
| 3 | 0.787 | 0.279 | 0.027 | 0.048 | 0.072 | 0.230 |
| 4 | 0.574 | 0.184 | 0.027 | 0.035 | 0.036 | 0.139 |
| 5 | 0.904 | 0.317 | 0.031 | 0.065 | 0.120 | 0.290 |
| 6 | 0.814 | 0.288 | 0.027 | 0.048 | 0.080 | 0.238 |
| 7 | 1.085 | 0.525 | 0.035 | 0.095 | 0.208 | 0.512 |
| 8 | 0.819 | 0.400 | 0.035 | 0.069 | 0.148 | 0.401 |
| 9 | 0.281 | 0.154 | 0.020 | 0.013 | 0.012 | 0.127 |
| 10 | 0.308 | 0.154 | 0.023 | 0.035 | 0.024 | 0.147 |
| 11 | 0.409 | 0.209 | 0.023 | 0.030 | 0.036 | 0.073 |
| 12 | 0.260 | 0.134 | 0.023 | 0.017 | 0.004 | 0.111 |

As apparent from Figs. 67 to 72, the columns 1 and 3 both have separation ability for structural isomers and compounds having similar structures among polycyclic aromatic hydrocarbons. Particularly, the column 1 has higher separation ability than the column 3. The column 3 has separation ability equivalent to or higher than the column of Comparative Example 4 which has the highest separation ability among the columns of Comparative Examples.

Example 4: Production of silica gel dense polymer brush 1) Graft reaction from polymerization initiating groups on surface of silica gel particles (a)

The silica gel particles (a) which comprise polymerization initiating groups covalently bound to the surface prepared with the same silica gel particles SP-120-5 (average particle diameter: 4.3 μm, specific surface area: 332 $m^2/g$, pore volume: 1.02 cc/g, average pore diameter: 12.3 nm) as Example 1 were used for graft reaction from the polymerization initiating groups on the surface of the silica gel particles as follows.

<Graft reaction>

To a 300-mL eggplant-shaped flask (evaporating flask) were added 7 g of silica gel particles (a), 6.0 g of copper bromide ($CuBr_2$) and 8.4 g of 2,2-dipyridyl and were dried under vacuum for 1.5 hours. The flask was replaced with argon internally. To the flask was added 165 mL of hydroxyethyl methacrylate (HEMA). This flask was further added with 64 mL of methanol, 4.5 mL of tin (II) 2-ethylhexanoate and then 3.0 mL of ethyl-2-bromoisobutyrate and incubated in an oil bath at 60°C to progress graft reaction. After reaction of 6 hours, the polymerization was terminated by cooling the flask to a room temperature.

<Purification>

To the flask after termination of the polymerization was added 100 mL of methanol, all particles in the flask were transferred to a 300-mL beaker, the silica gel particles were dispersed in methanol and the particles were precipitated to remove the supernatant methanol. To this flask was added 100 mL methanol to disperse the silica gel particles therein and dissolve components soluble to methanol and the particles were then precipitated to again remove the supernatant methanol. These procedures were repeated 15 times prior to drying under vacuum for 8 hours to obtain silica gel particles comprising PHEMA grafted to the polymerization initiating groups on the surface of the silica gel particles (a). The obtained particles are designated as the sample (b).

2) Structural analysis of the produced silica gel dense polymer brush

In the same manner as described in Example 1, the graft chain was separated from the silica gel particles

(sample (b)) comprising PHEMA grafted from the polymerization initiating groups on the surface of the silica gel particles (a). The separated graft chain (PHEMA) is designated as the sample (c).

The sample (c) was analyzed in the same manner as described in Example 1 except that the GPC solvent for molecular weight measurement used was DMSO. The obtained results are shown in Table 5.

Example 5: Production of silica gel dense polymer brush

The silica gel particles which comprise polymerization initiating groups covalently bound to the surface prepared with the same silica gel particles SP-1000-5 (Daiso Co., Ltd.; average particle diameter: 4.4 μm, specific surface area: 25 $m^2$/g, pore volume:(0.84) cc/g, maximum pore diameter: 99.3 nm) as Example 3 were used in the same procedures as described in Example 4 to obtain the silica gel particles (sample (b)) comprising PHEMA grafted to the polymerization initiating groups on the surface of the silica gel particles. The physical properties of the silica gel particles and graft chains of the obtained particles are shown in Table 5.

Table. 5

| Example | Silica gel particles | | | Graft chain | | | | |
|---|---|---|---|---|---|---|---|---|
| | Particle diameter (μm) | Specific surface area ($m^2$/g) | Pore diameter (nm) | Polymer type | Amount (g/g/Si) | Density (chains /$nm^2$) | Mn | Mw/Mn |
| 4 | 4.3 | 332 | 12.3 | PHEMA | 0.82 | 0.05 | 17,800 | 1.43 |
| 5 | 4.4 | 25 | 99.3 | PHEMA | 0.21 | 0.18 | 17,300 | 1.46 |

[Packing and evaluation results]

The particles of the samples (b) of Examples 4 and 5 were respectively dispersed in a dispersion solvent, filtered through a mesh and packed in a stainless column having 0.46 mm diameter × 25 cm length to obtain columns 4 and 5 in which the particles of the samples (b) of Examples 4 and 5 were packed respectively. The obtained columns 4 and 5 were used in a liquid chromatography apparatus and test samples 2 to 12 having the above structures, i.e., naphthacene (sample 2), anthracene (sample 3), naphthalene (sample 4), pyrene (sample 5), phenanthrene (sample 6), perylene (sample 7), triphenylene (sample 8), o-terphenyl (sample 9), 9,10-dihydrophenanthrene (sample 10), trans-stilbene (sample 11) and cis-stilbene (sample 12) were analyzed. The analysis conditions are shown in Table 6.

Table. 6

| | |
|---|---|
| Mobile phase | Hexane / 2-Propanol = 90/10 (v/v) |
| Flow rate | 1.0 ml/min. |
| Column temperature | 25°C |
| Detection wavelength | 254nm |

Chromatograms of the sample 2 to 12 analyzed by the columns 4 and 5 are shown in Figs. 73 to 83 and Figs. 84 to 94, respectively. The elution times (min) of the samples from the columns are shown in Table 7.

Table. 7

| Sample | Elution time (min) | |
|---|---|---|
| | Column 4 | Column 5 |
| 2 | 1.84 | 3.26 |
| 3 | 3.14 | 3.23 |

(continued)

| Sample | Elution time (min) | |
|---|---|---|
| | Column 4 | Column 5 |
| 4 | 1.83 | 3.23 |
| 5 | 1.83 | 3.18 |
| 6 | 1.97 | 3.22 |
| 7 | 1.84 | 3.23 |
| 8 | 1.83 | 3.16 |
| 9 | 1.79 | 3.07 |
| 10 | 1.83 | 3.14 |
| 11 | 1.78 | 3.18 |
| 12 | 1.79 | 3.10 |

Based on the respective chromatograms, the retention coefficient (k') of the samples were determined from the dead volume ($t_0$) corresponding to the elution time of tri-tert-butylbenzene (TTB (1)) represented by the above formula and the elution times (t) of the samples according to the following formula. The retention coefficients of the columns 4 and 5 for the samples are shown in Table 8 and the distribution of the retention coefficients of the columns for the samples is shown in Figs. 95 to 100. In Figs. 95 to 100, samples which have discrete k' values in a column can be separated in the column.

$$k' = (t - t_0)/t_0$$

Table. 8

| Sample | Retention coefficient (-) | |
|---|---|---|
| | Column 4 | Column 5 |
| 2 | 0.038 | 0.092 |
| 3 | 0.770 | 0.084 |
| 4 | 0.028 | 0.084 |
| 5 | 0.028 | 0.064 |
| 6 | 0.108 | 0.078 |
| 7 | 0.038 | 0.084 |
| 8 | 0.028 | 0.059 |
| 9 | 0.010 | 0.028 |
| 10 | 0.005 | 0.053 |
| 11 | 0.005 | 0.067 |
| 12 | 0.010 | 0.039 |

As apparent from Figs. 95 to 100, columns 4 and 5 both have separation ability for structural isomers and compounds having similar structures among polycyclic aromatic hydrocarbons.

Example 6: Analysis by super-critical fluid chromatography (SFC)

[Packing and evaluation results]

The particles of the samples (b) of Examples 1 and 3 were respectively dispersed in a dispersion solvent, filtered through a mesh and packed in a stainless column having 0.46 mm diameter × 25 cm length to obtain columns 1s and 3s in which the particles of the samples (b) of Examples 1 and 3 were packed respectively. The obtained columns 1s and 3s were used in a super-critical fluid chromatography apparatus and test samples 2 to 12 having the following structures, i.e., naphthacene (sample 2), anthracene (sample 3), naphthalene (sample 4), pyrene (sample 5), phenanthrene (sample 6), perylene (sample 7), triphenylene (sample 8), o-terphenyl (sample 9), 9,10-dihydrophenanthrene (sample 10), trans-stilbene (sample 11) and cis-stilbene (sample 12) were analyzed. The analysis conditions are shown in Table 9.

The particles of the samples (b) of Examples 4 and 5 were respectively dispersed in a dispersion solvent, filtered through a mesh and packed in a stainless column having 0.46 mm diameter × 25 cm length to obtain columns 4s and 5s in which the particles of the samples (b) of Examples 4 and 5 were packed respectively. The obtained columns 4s and 5s were used in a super-critical fluid chromatography apparatus and test samples 2 to 12 having the above structures, i.e., naphthacene (sample 2), anthracene (sample 3), naphthalene (sample 4), pyrene (sample 5), phenanthrene (sample 6), perylene (sample 7), triphenylene (sample 8), o-terphenyl (sample 9), 9,10-dihydrophenanthrene (sample 10), trans-stilbene (sample 11) and cis-stilbene (sample 12) were analyzed. The analysis conditions are shown in Table 9.

Table. 9

| | |
|---|---|
| Mobile phase | scf-$CO_2$/MeOH=90/10 (v/v) |
| Flow rate | 3.0ml/min |
| Column temperature | 25°C |
| Operating pressure (back pressure) | 15MPa |
| Detection wavelength | 254nm |

Chromatograms of the sample 2 to 12 analyzed by the columns 1s and 3s are shown in Figs. 101 to 110 and Figs. 111 to 121, respectively. The elution times (min) of the samples from the columns are shown in Table 10.

Chromatograms of the sample 2 to 12 analyzed by the columns 4s and 5s are shown in Figs. 122 to 132 and Figs. 133 to 143, respectively. The elution times (min) of the samples from the columns are shown in Table 11.

Table. 10

| Sample | Elution time (min) | |
|---|---|---|
| | Column 1s | Column 3s |
| 2 | 0.83 | 2.15 |
| 3 | 1.61 | 2.46 |
| 4 | 1.68 | 1.70 |
| 5 | 2.30 | 3.34 |
| 6 | 1.63 | 2.49 |
| 7 | No data | 7.40 |
| 8 | 3.11 | 4.80 |
| 9 | 2.23 | 2.25 |
| 10 | 2.62 | 2.09 |
| 11 | 1.28 | 2.10 |
| 12 | 2.90 | 1.83 |

Table. 11

| Sample | Elution time (min) | |
|---|---|---|
| | Column 4s | Column 5s |
| 2 | 1.17 | 1.21 |
| 3 | 1.63 | 1.59 |
| 4 | 1.29 | 1.28 |
| 5 | 2.19 | 2.16 |
| 6 | 1.69 | 1.66 |
| 7 | 1.93 | 4.30 |
| 8 | 2.71 | 2.70 |
| 9 | 1.28 | 1.30 |
| 10 | 1.37 | 1.37 |
| 11 | 1.33 | 1.32 |
| 12 | 1.23 | 1.23 |

Based on the respective chromatograms, the retention coefficient (k') of the samples were determined from the dead volume (to) corresponding to the elution time of tri-tert-butylbenzene (TTB (1)) represented by the above formula and the elution times (t) of the samples according to the following formula. The retention coefficients of the columns 1s, 3s, 4s and 5s for the samples are shown in Tables 12 and 13 and the distribution of the retention coefficients of the columns for the samples are shown in Figs. 144 to 149. In Figs. 144 to 149, samples which have discrete k' values in a column can be separated in the column.

$$k' = (t - t_0)/t_0$$

Table. 12

| Sample | Retention coefficient (-) | |
|---|---|---|
| | Column 1s | Column 3s |
| 2 | 0.092 | 0.903 |
| 3 | 1.118 | 1.177 |
| 4 | 1.211 | 0.504 |
| 5 | 2.026 | 1.956 |
| 6 | 1.145 | 1.204 |
| 7 | Not eluted | 5.549 |
| 8 | 3.092 | 3.248 |
| 9 | 1.934 | 0.991 |
| 10 | 2.447 | 0.850 |
| 11 | 0.684 | 0.858 |
| 12 | 2.816 | 0.619 |

Table. 13

| Sample | Retention coefficient (-) | |
|---|---|---|
| | Column 4s | Column 5s |
| 2 | 0.696 | 0.071 |
| 3 | 1.362 | 0.407 |
| 4 | 0.870 | 0.133 |
| 5 | 2.174 | 0.912 |
| 6 | 1.449 | 0.469 |
| 7 | 1.797 | 2.805 |
| 8 | 2.928 | 1.389 |
| 9 | 0.855 | 0.150 |
| 10 | 0.986 | 0.212 |
| 11 | 0.928 | 0.168 |
| 12 | 0.783 | 0.088 |

As apparent from Figs. 144 to 149, the columns 1s, 3s, 4s and 5s all have separation ability for structural isomers and compounds having similar structures among polycyclic aromatic hydrocarbons.

INDUSTRIAL APPLICABILITY

The fine particles for chromatography of the present invention have broader molecular weight distribution of graft polymer chains than that of conventional polymer brush-type solids, and therefore are expected to have different or better separation ability than the conventional separation media such as the realization of the separation ability for more compounds than the separation media having conventional graft polymer chains, and are expected to increase the versatility for polymer brush-type separation media.

## Claims

**1.** Fine particles for chromatography comprising solid particles, polymerization initiating groups covalently bound to the surface of the solid particles and graft polymer chains obtained by grafting polymer chains via the polymerization initiating groups, wherein:

a) the graft polymer chains include repeating units represented by the following formula (1) which are the same or different from each other;
b) the graft polymer chains have a number average molecular weight of 500 or more and 300,000 or less;
c) the graft polymer chains have a molecular weight distribution of 1.4 or more and 5.0 or less; and
d) the graft polymer chains have a density on the surface of the solid particles of 0.03 chains/$nm^2$ or more and 0.70 chains/$nm^2$ or less:

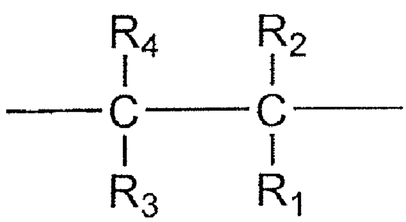

(1)

(in formula (1):

$R_1$ independently represents a group represented by the following formula (2) or a phenyl or naphthyl group having one or two or more substituents $R_5$;
$R_2$ to $R_4$ independently represent -H or $-CH_3$; and
$R_5$ independently represents an alkyl group having 1 to 20 carbon atoms, an alkylphenyl group in which the alkyl group has up to 10 carbon atoms, -OH, an alkoxy in which the alkyl group has up to 10 carbon atoms, a cyano, an amino, a monoalkylamino in which the alkyl group has up to 10 carbon atoms, a dialkylamino in which each alkyl group has up to 10 carbon atoms, a trialkylammonium in which each alkyl group has up to 10 carbon atoms, a carboxyl, a sulfonyl, an acetamino or an acetoxy group):

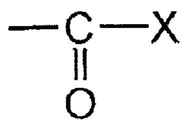

(2)

(in formula (2):

X represents -OH, $-OR_6$ or $-NR_7R_8$;
$R_6$ represents an alkyl group having 1 to 20 carbon atoms, a phenyl group, a naphthyl group, a phenylalkyl group in which the alkyl group has up to 10 carbon atoms, a naphthylalkyl group in which the alkyl group has up to 10 carbon atoms, an alkylphenyl group in which the alkyl group has up to 10 carbon atoms or an alkylnaphthyl group in which the alkyl group has up to 10 carbon atoms, all of which may have one or two or more substituents;
$R_7$ and $R_8$ respectively represent an alkyl group having 1 to 10 carbon atoms, a phenyl group, a phenylalkyl group in which the alkyl group has up to 10 carbon atoms or an alkylphenyl group in which the alkyl group has up to 10 carbon atoms; and
the substituent(s) which $R_6$ may have independently represents -OH, an alkoxy having 1 to 10 carbon atoms, a cyano, an amino, a monoalkylamino having 1 to 10 carbon atoms, a dialkylamino in which each alkyl group has 1 to 10 carbon atoms, a trialkylammonium in which each alkyl group has 1 to 10 carbon atoms, a carboxyl, a sulfonyl, an acetamino or an acetoxy group).

**2.** The fine particles for chromatography according to claim 1, wherein the graft polymer chains have a molecular weight distribution of 1.5 or more and 5.0 or less.

**3.** The fine particles for chromatography according to claim 1 or 2, wherein the solid particles have the shape of true sphere, a specific surface area per unit weight of the solid particles of 20 to 450 $m^2/g$ and a pore volume per unit weight of the solid particles of 0.7 to 1.1 cc/g.

**4.** The fine particles for chromatography according to any one of claims 1 to 3, wherein the solid particles have been surface-treated with a silane coupling agent represented by the following formula (3):

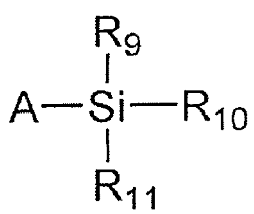

(3)

(in formula (3):

$R_9$ to $R_{11}$ respectively represent a saturated or unsaturated hydrocarbon group having 1 to 30 carbon atoms or a saturated or unsaturated hydrocarbon group which has 1 to 8 carbon atoms and may have one or two or more substituents;
A represents a halogen, an alkoxy group having 1 to 10 carbon atoms, a hydroxyl group or an aza-silyl group; and the substituent(s) which the hydrocarbon may have independently represents a nitrile group, a hydroxyl group, an amino group, a pyridyl group or an amide group).

**5.** Chromatography using a particulate separation medium,
wherein the separation medium is the fine particles for chromatography according to any one of claims 1 to 4, and the chromatography is gas chromatography, liquid chromatography, thin layer chromatography or super-critical fluid chromatography.

**6.** The chromatography according to claim 5, wherein a mobile phase for the super-critical fluid chromatography is super-critical fluid composed of super-critical carbon dioxide, subcritical fluid composed of subcritical liquid carbon dioxide or mixed fluid of super-critical liquid carbon dioxide and an additive.

**7.** The chromatography according to claim 5, which is normal phase chromatography using, as a mobile phase, a mixed solvent containing a low polarity organic solvent and an intermediate or high polarity organic solvent having higher polarity than the low polarity organic solvent.

**8.** The chromatography according to any one of claims 5 to 7, which aims to separate a low molecular weight compound having a molecular weight of 10,000 or less.

**9.** The chromatography according to any one of claims 5 to 8, which aims to separate two types of isomers represented by the same compositional formula.

Fig.1

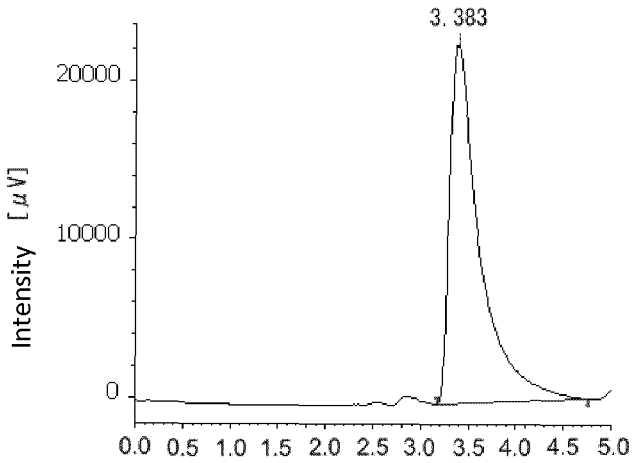


Fig. 2

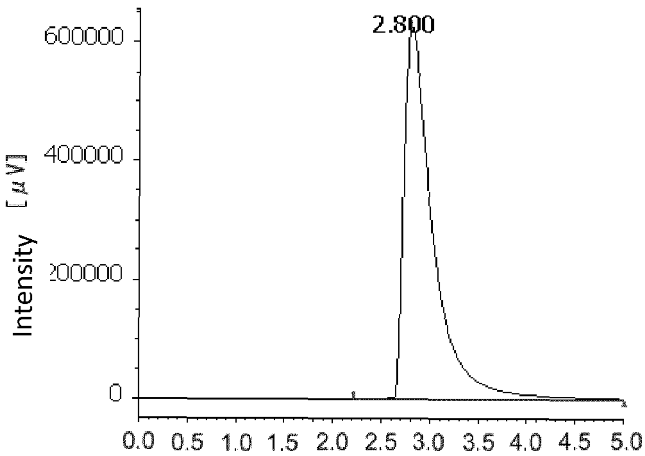


Fig. 3

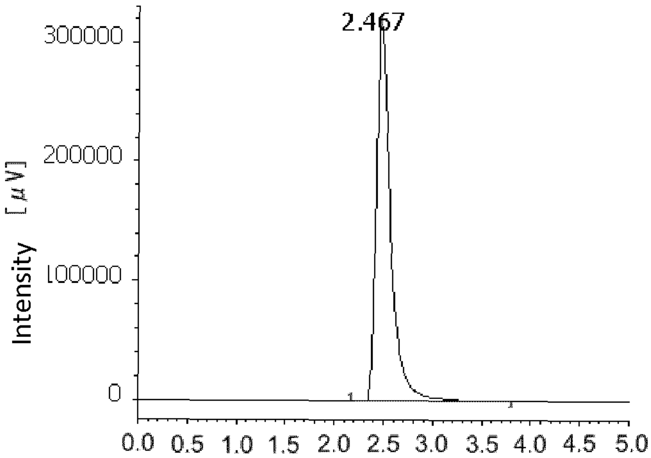

Fig.4

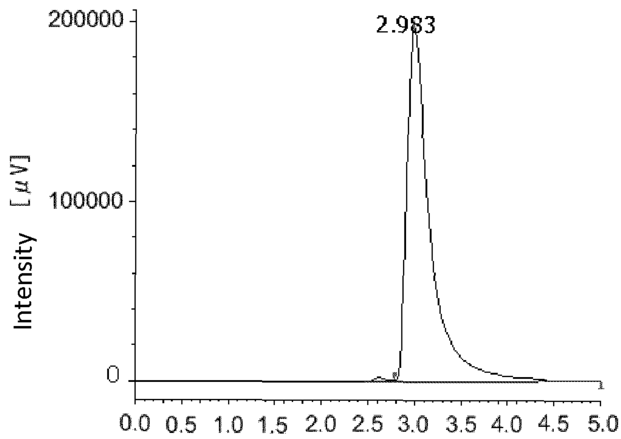


Fig. 5

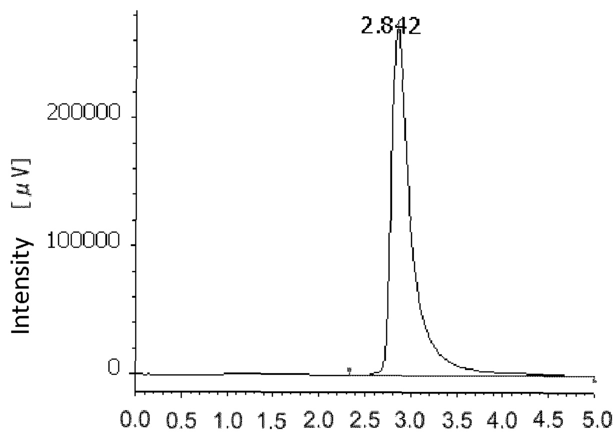


Fig. 6

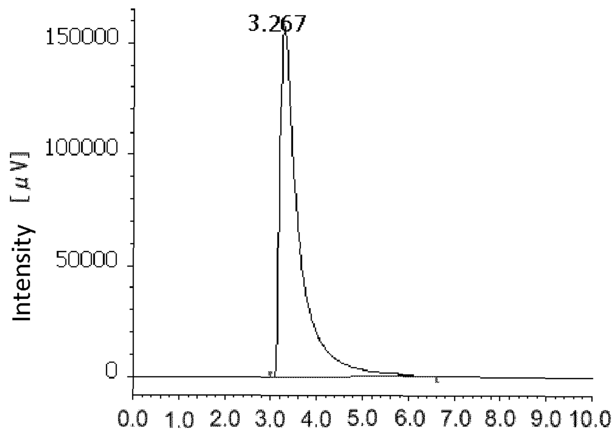

Fig.7

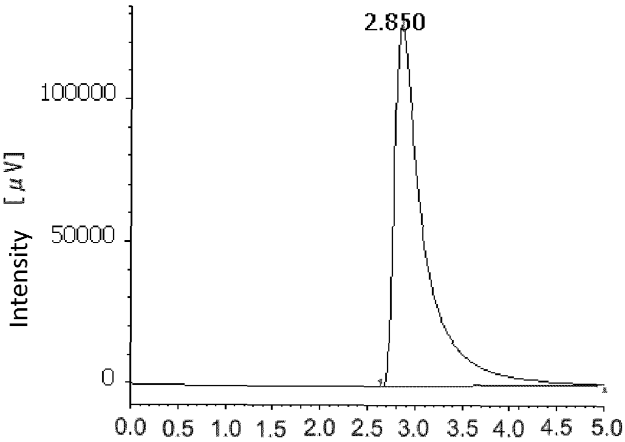


Fig. 8

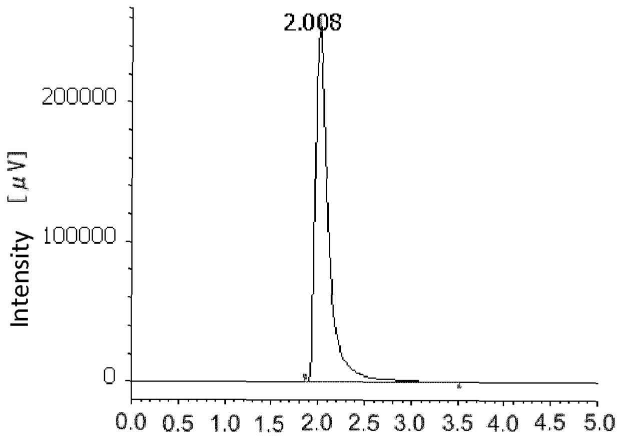


Fig. 9

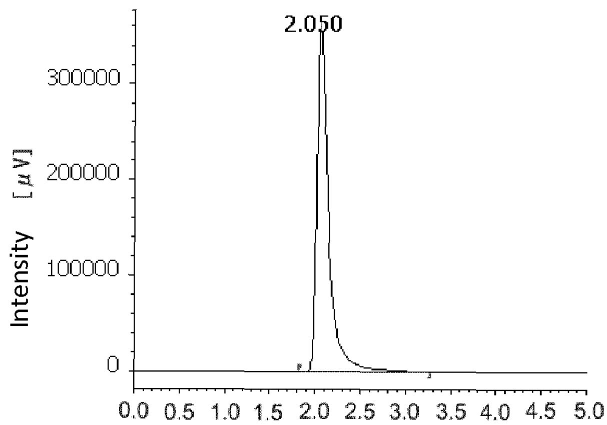

Fig.10

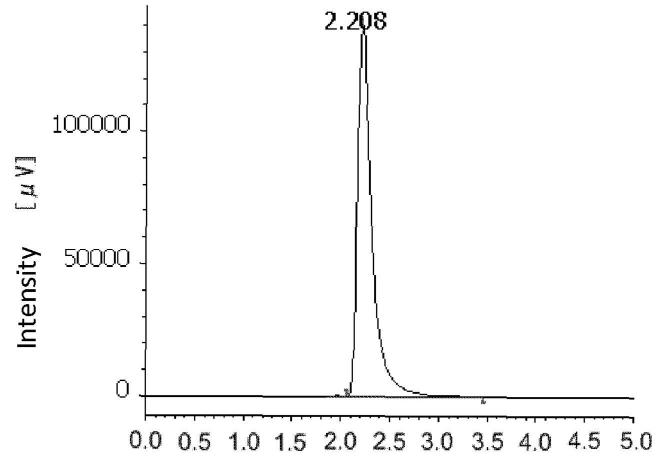


Fig. 11

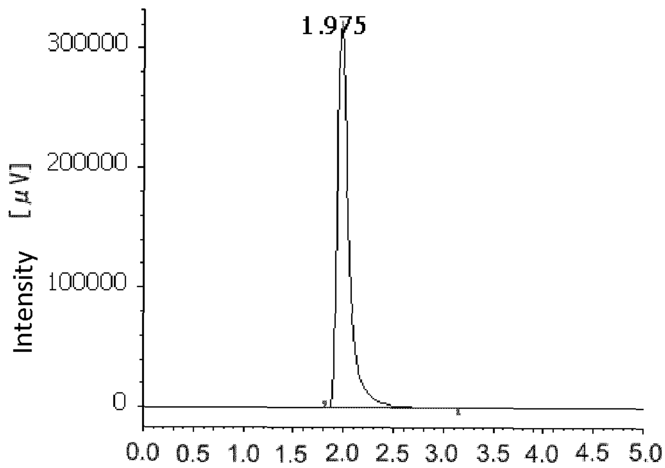


Fig. 12

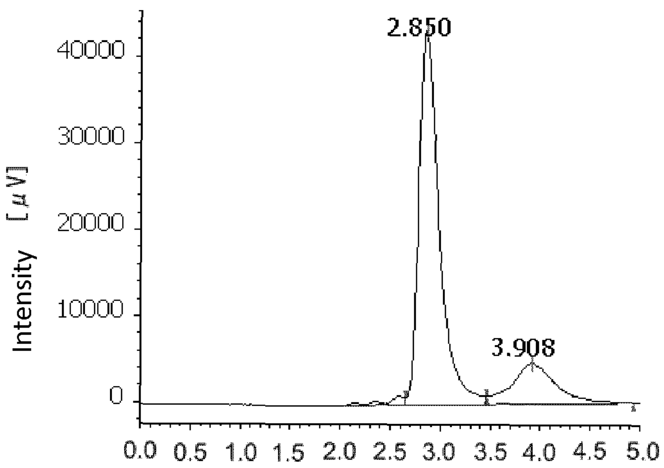

Fig.13

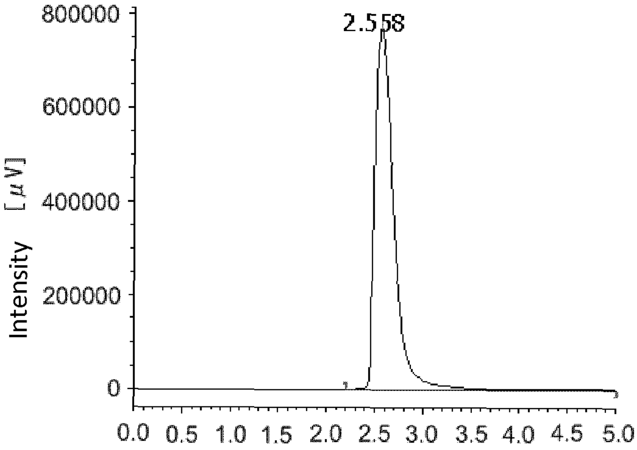


Fig. 14

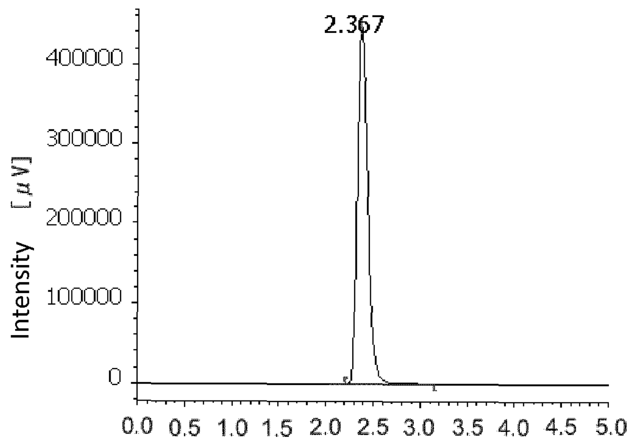


Fig. 15

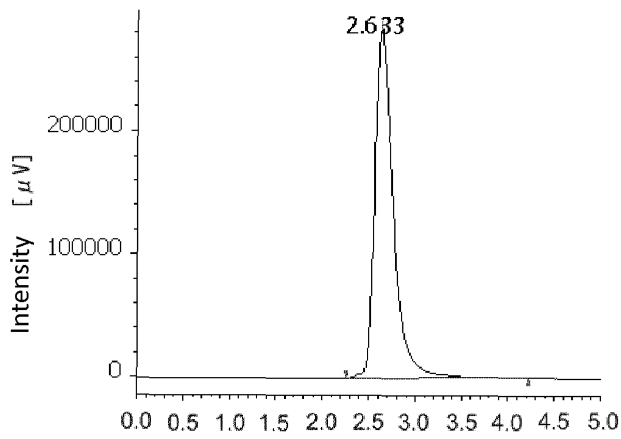

Fig.16

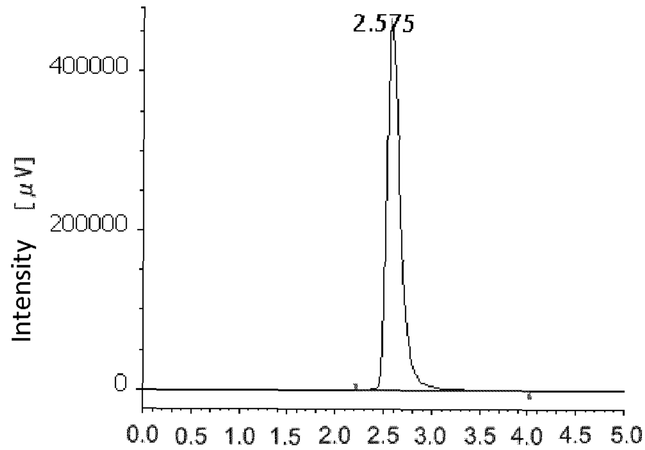


Fig. 17

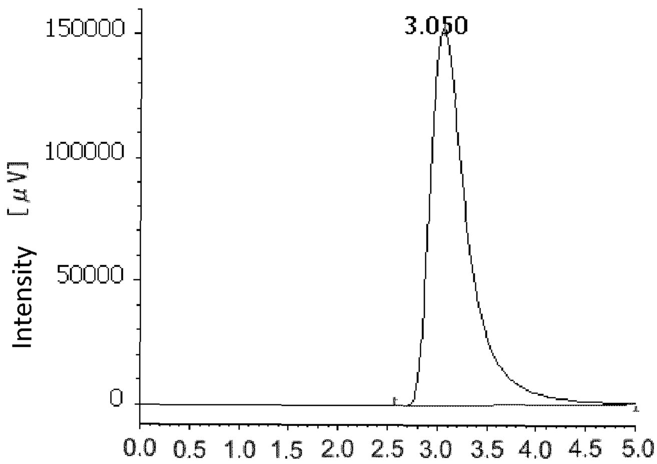


Fig. 18

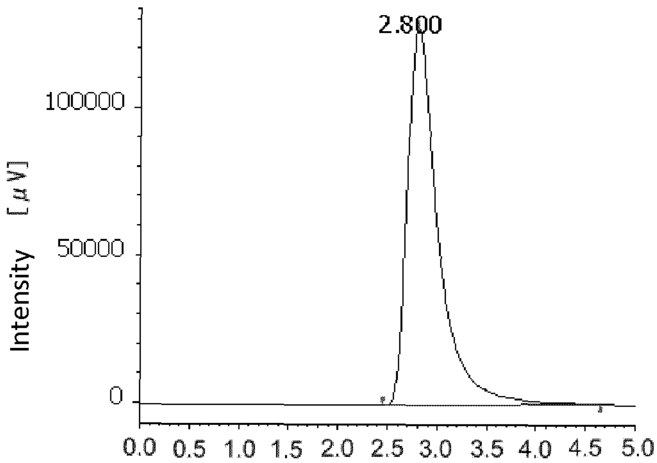

Fig.19

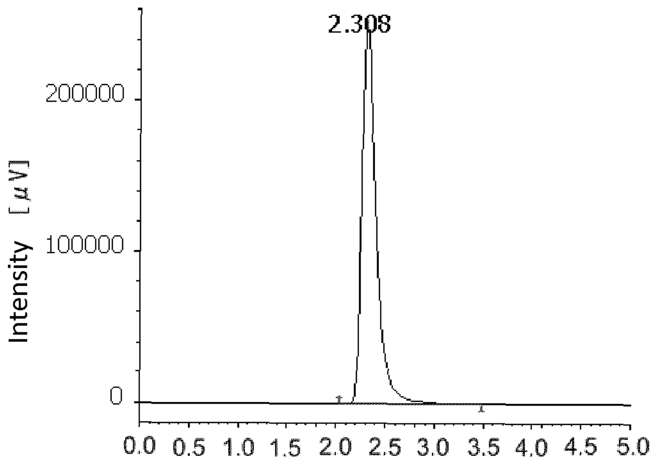


Fig. 20

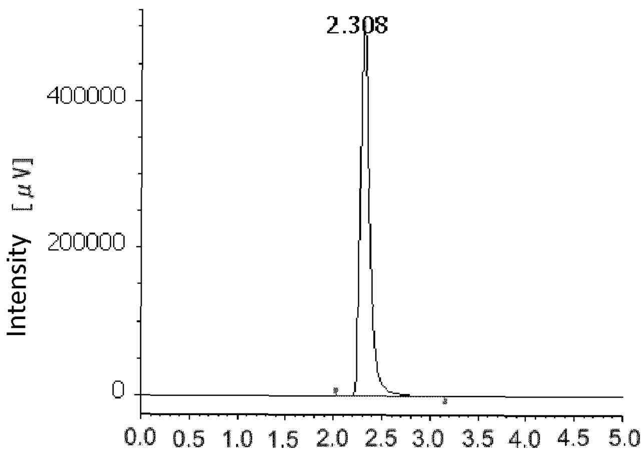


Fig. 21

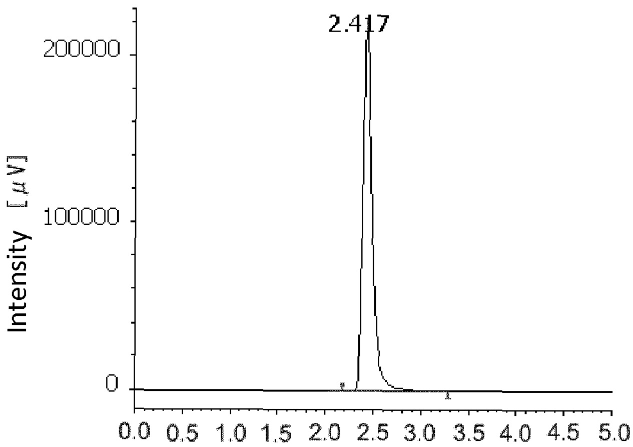

Fig.22

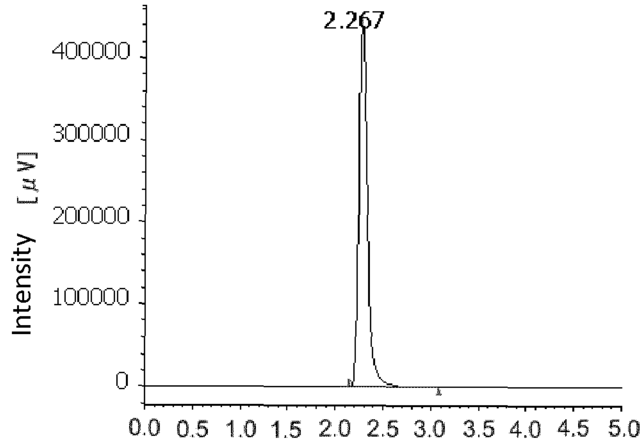


Fig. 23

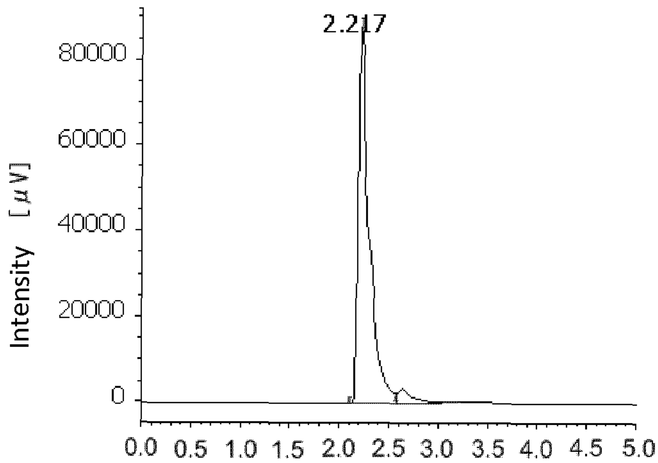


Fig. 24

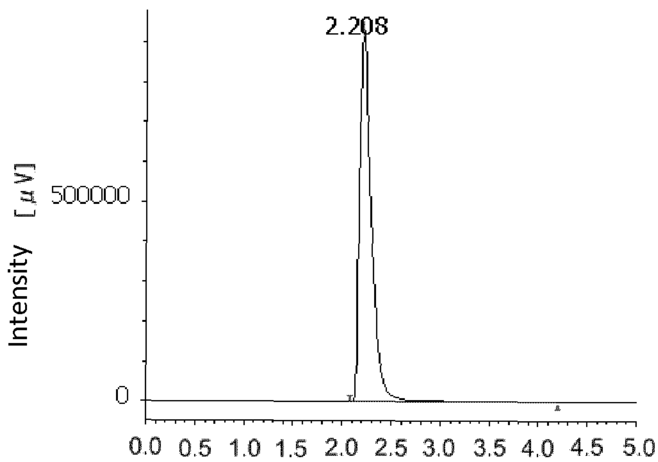

Fig.25

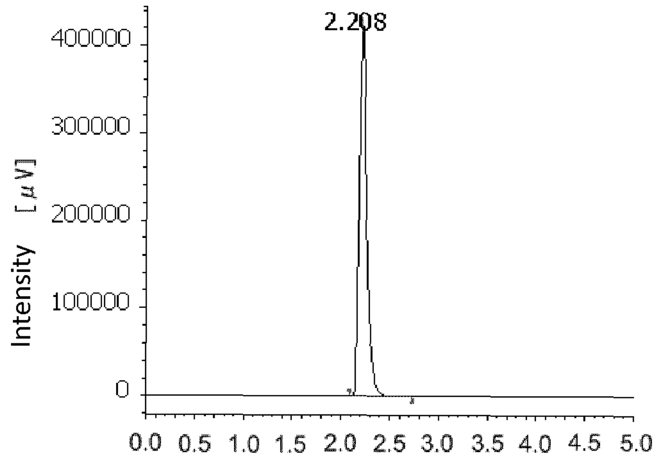


Fig. 26

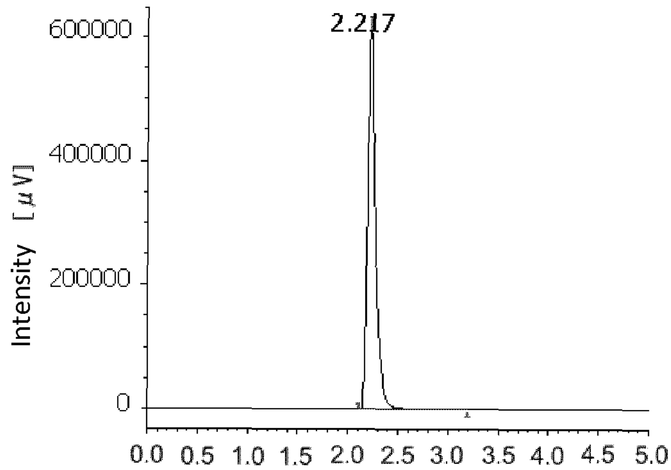


Fig. 27

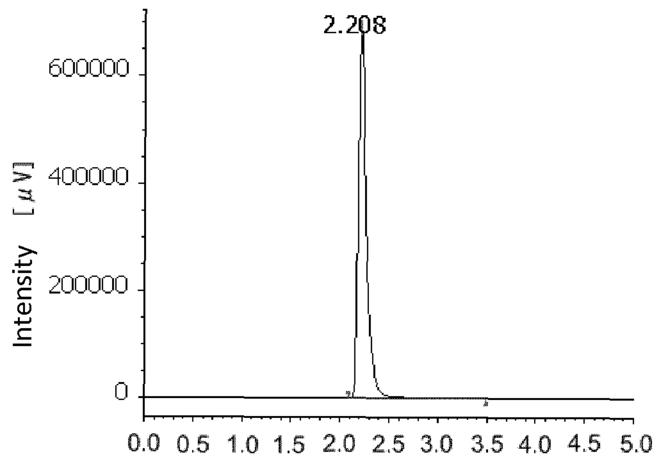

Fig.28

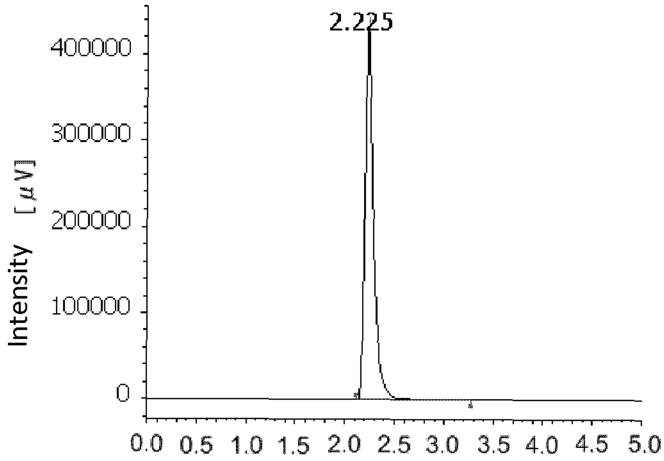


Fig. 29

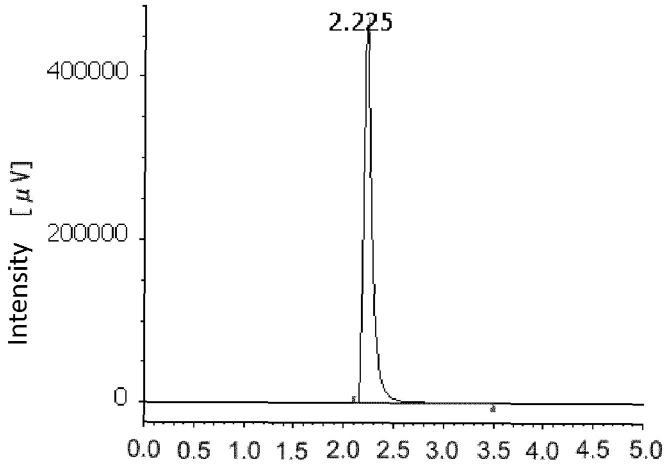


Fig. 30

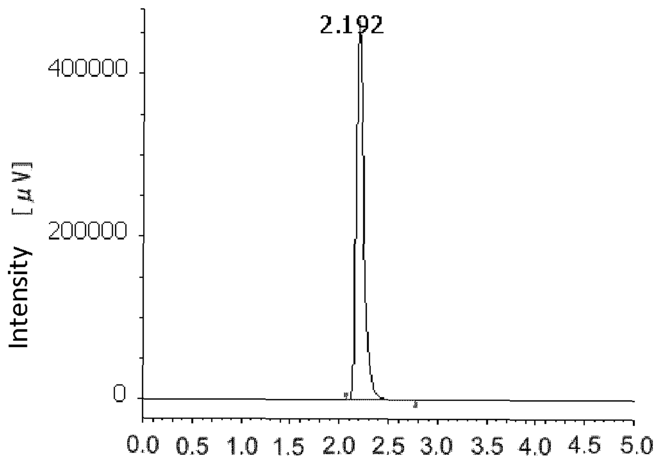

Fig.31

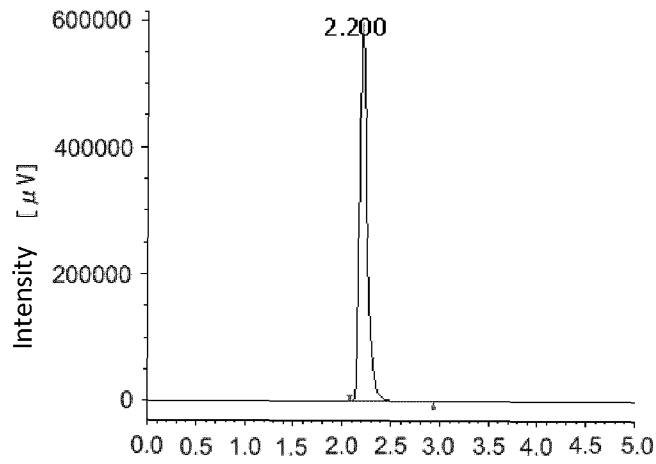


Fig. 32

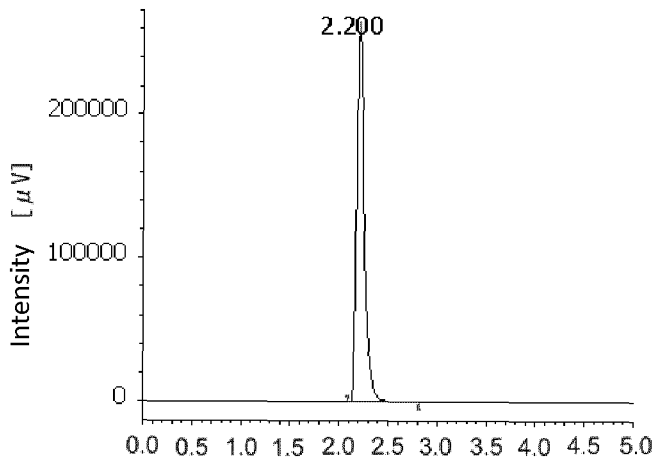


Fig. 33

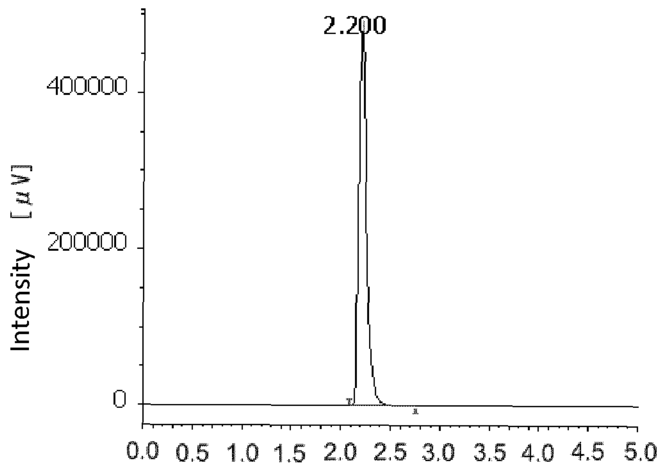

Fig.34

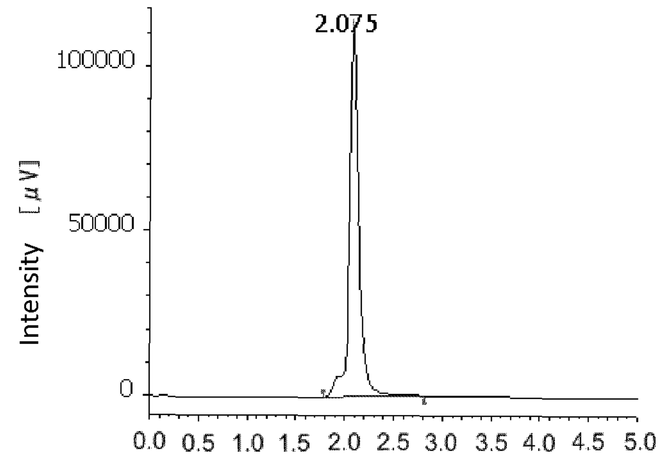


Fig. 35

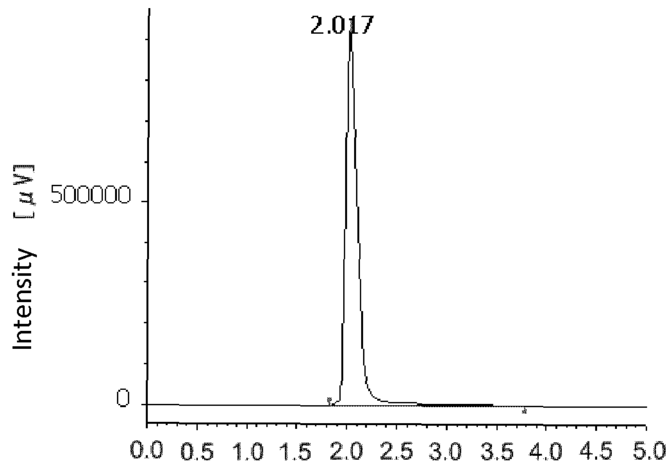


Fig. 36

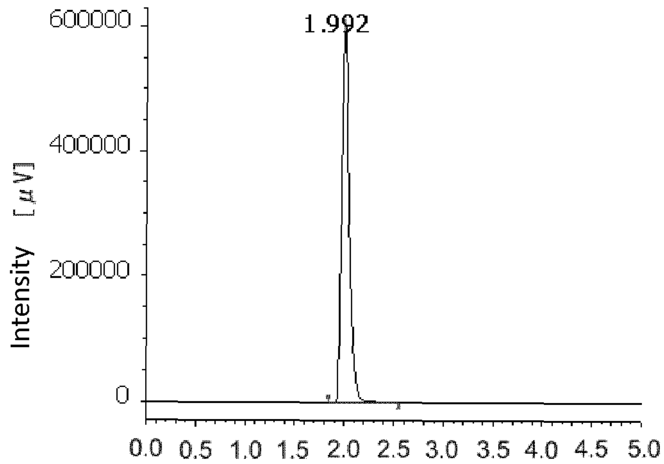

Fig.37

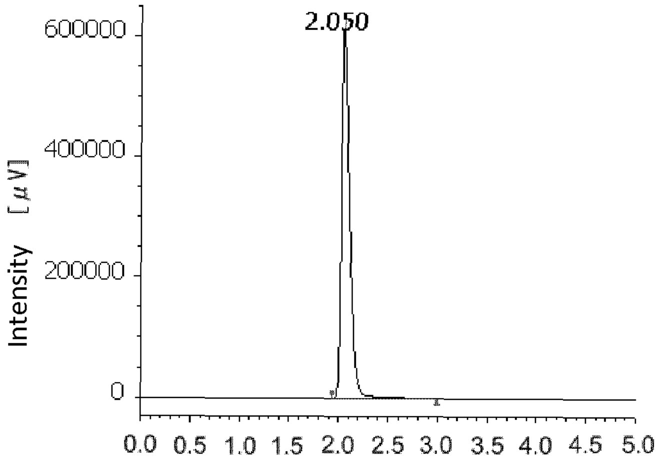


Fig. 38

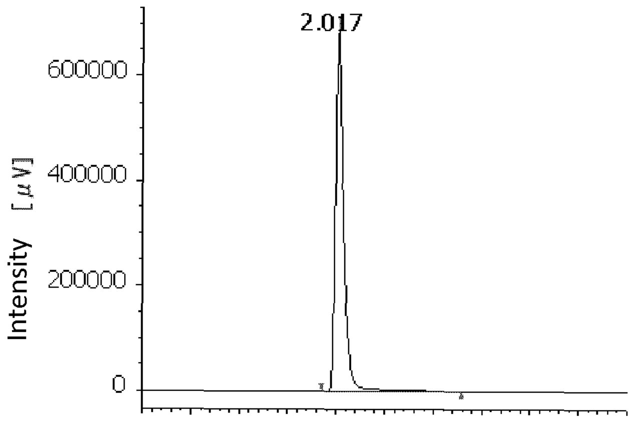


Fig. 39

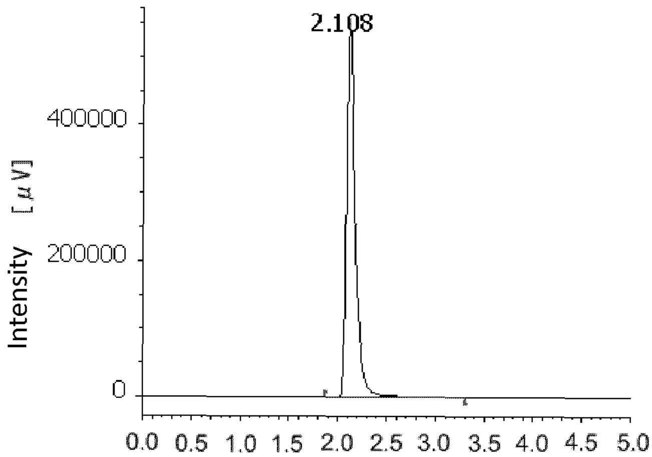

Fig.40

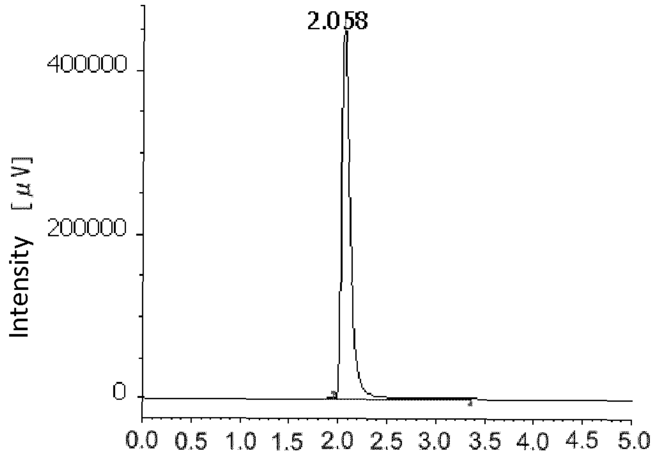


Fig. 41

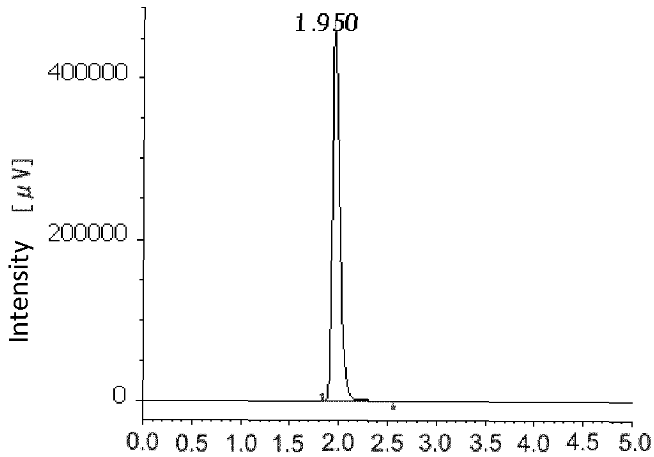


Fig. 42

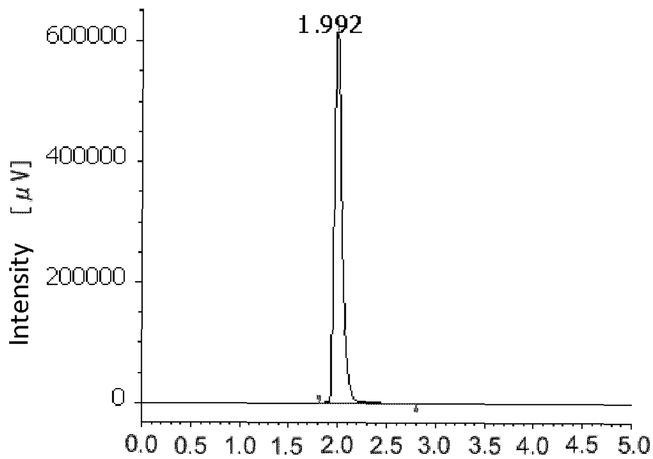

Fig.43

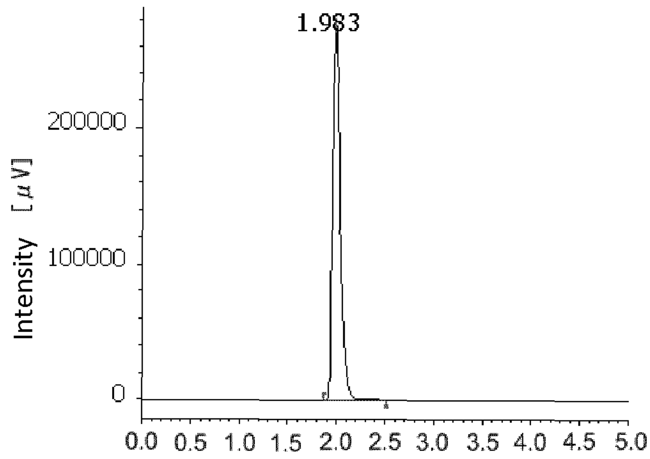


Fig. 44

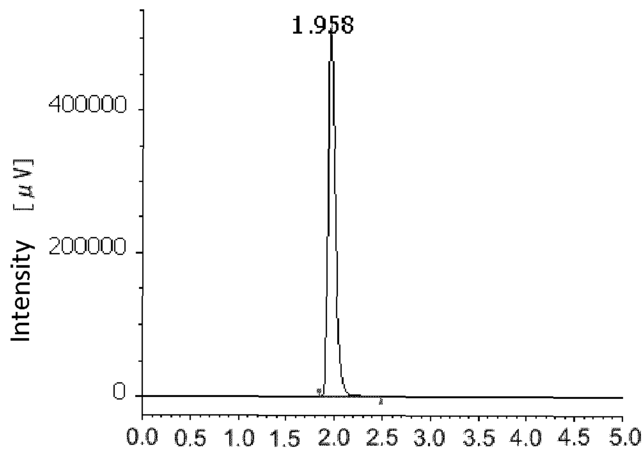


Fig. 45

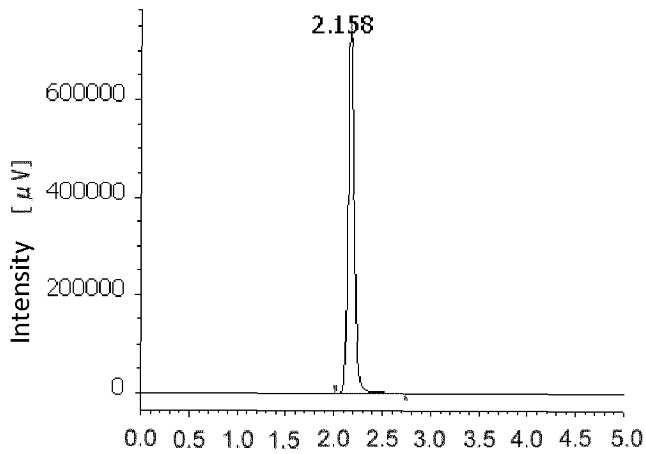

Fig.46

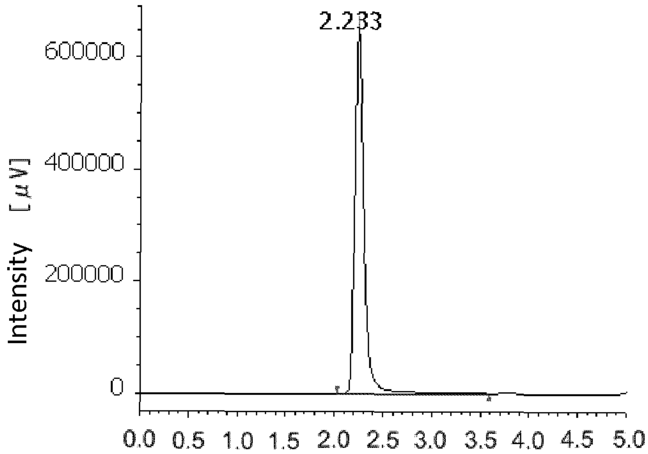


Fig. 47

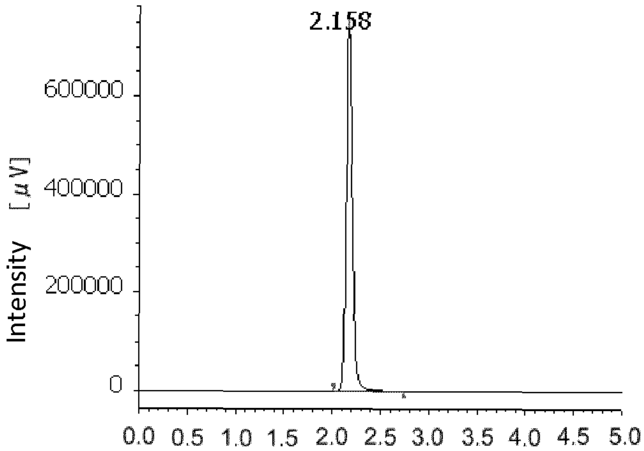


Fig. 48

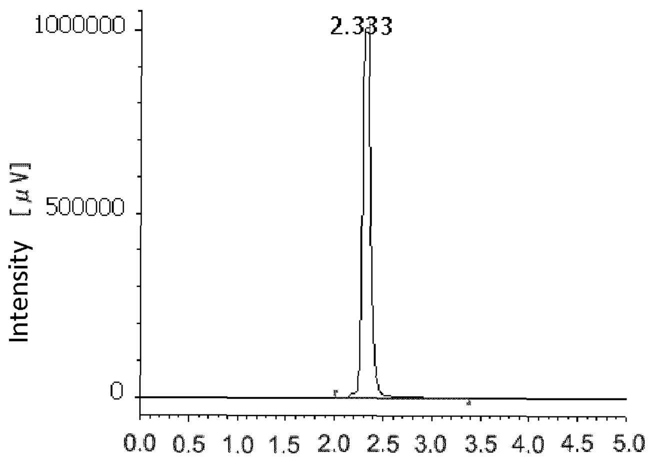

Fig.49

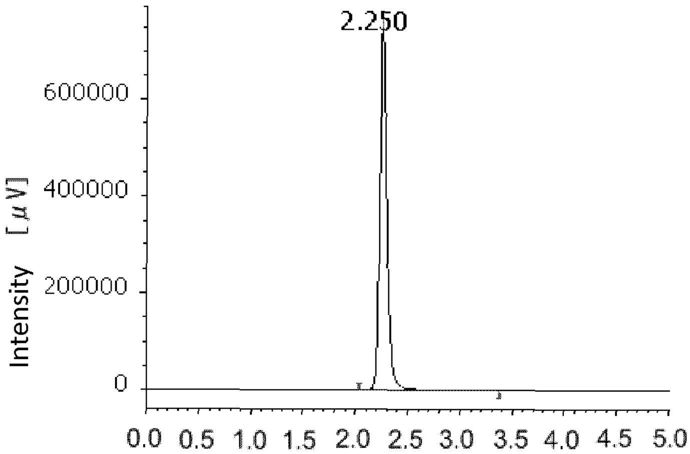


Fig. 50

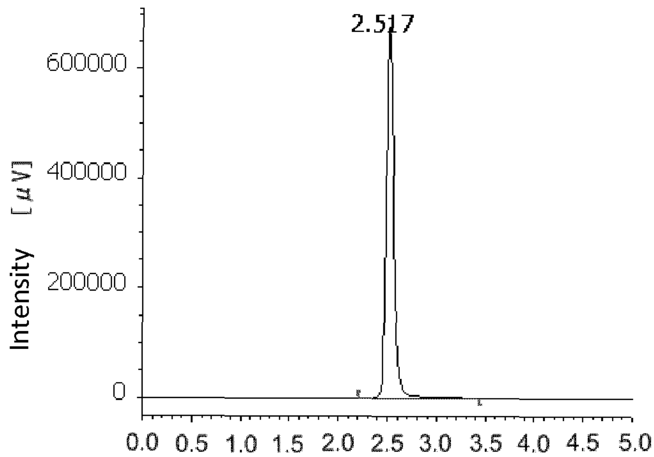


Fig. 51

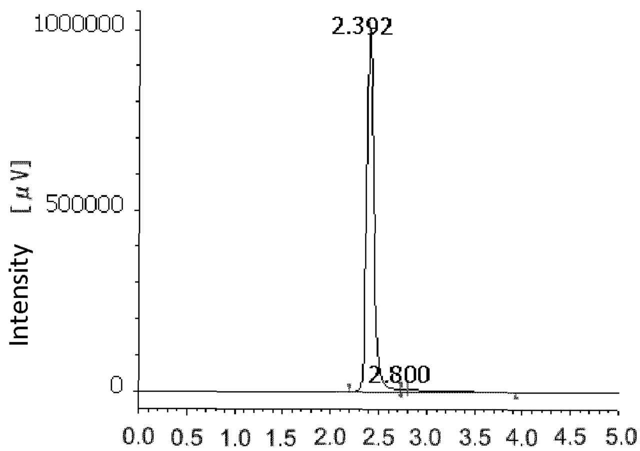

Fig.52

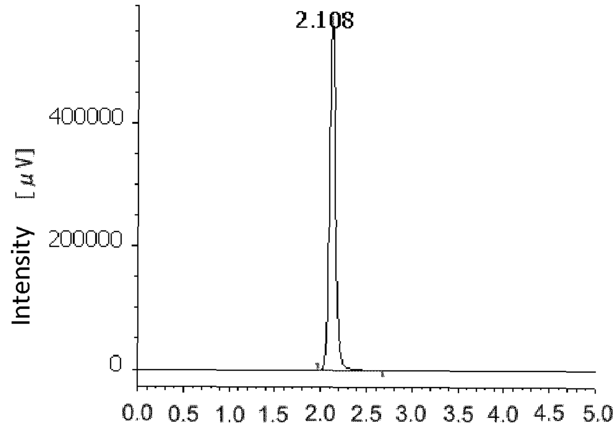


Fig. 53

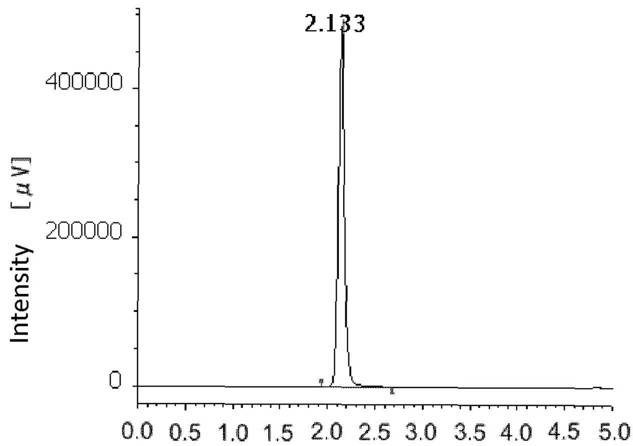


Fig. 54

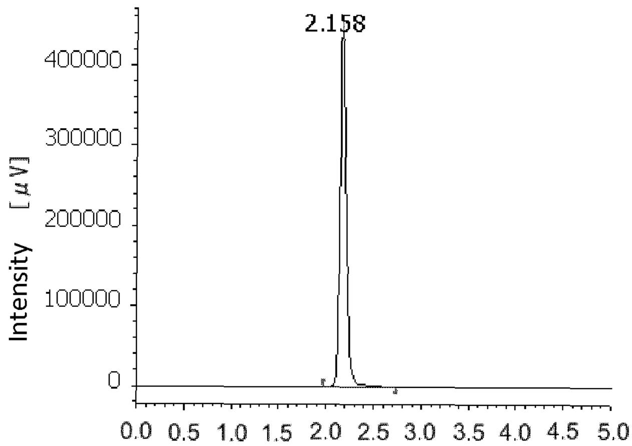

Fig.55

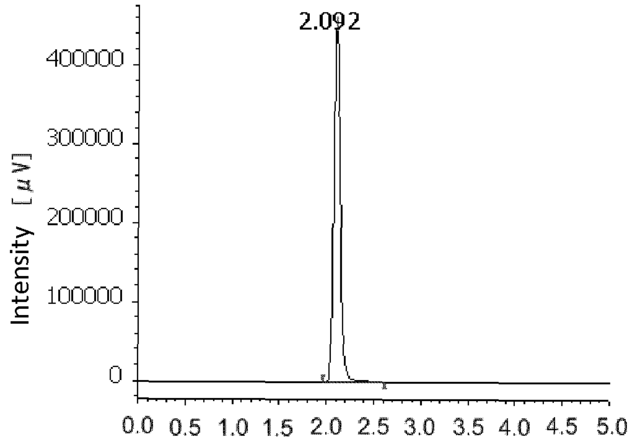


Fig. 56

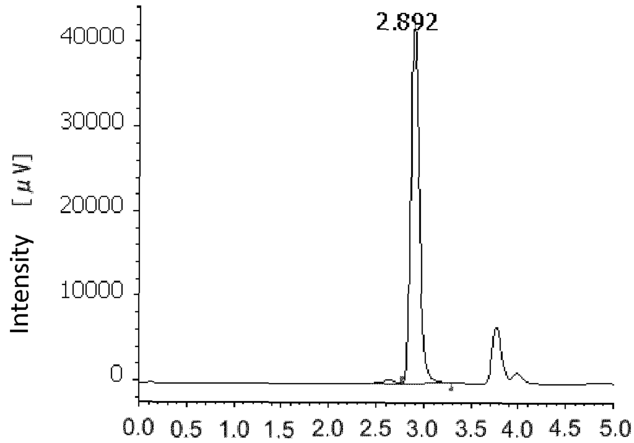


Fig. 57

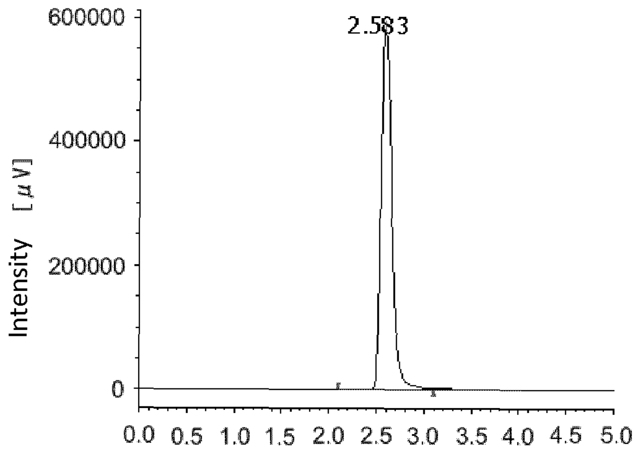

Fig.58

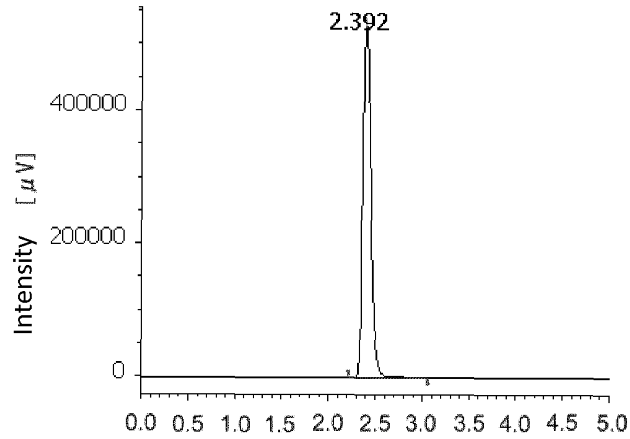


Fig. 59

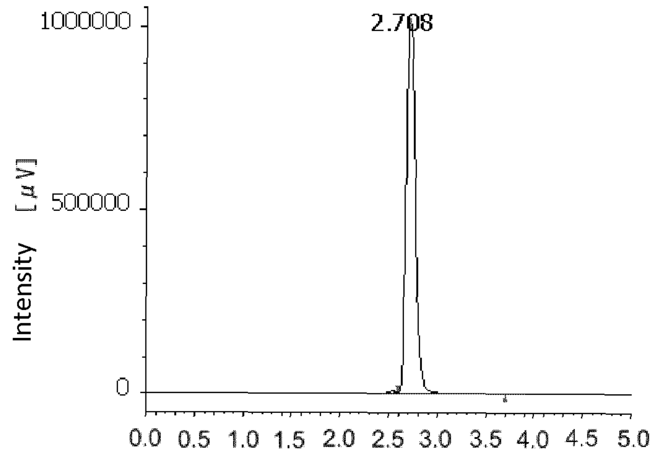


Fig. 60

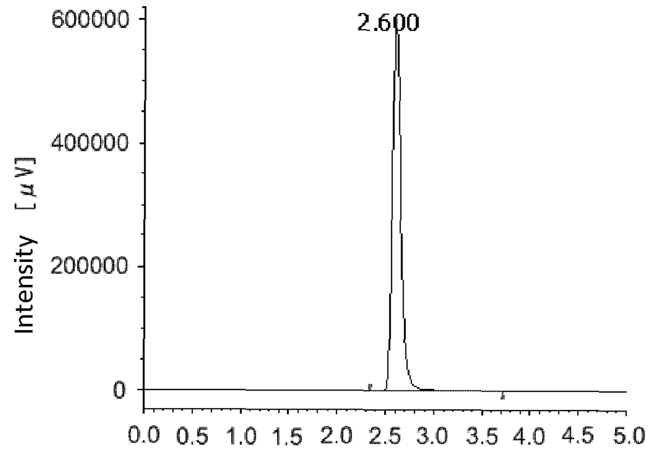

Fig.61

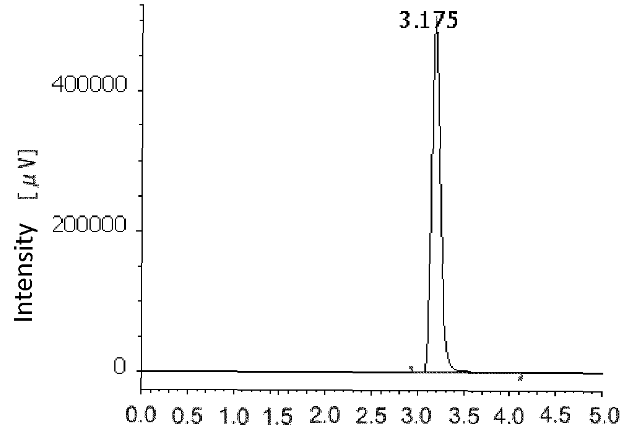


Fig. 62

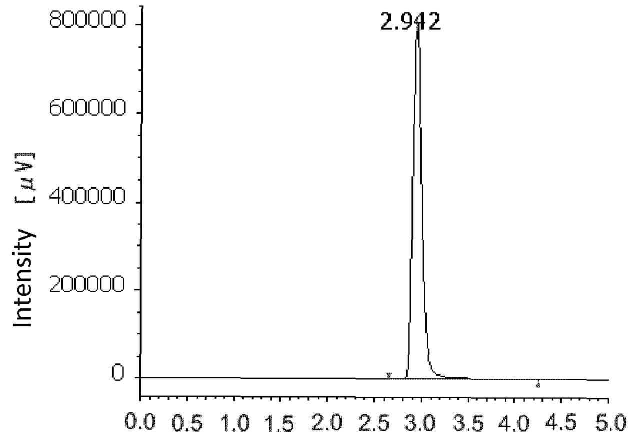


Fig. 63

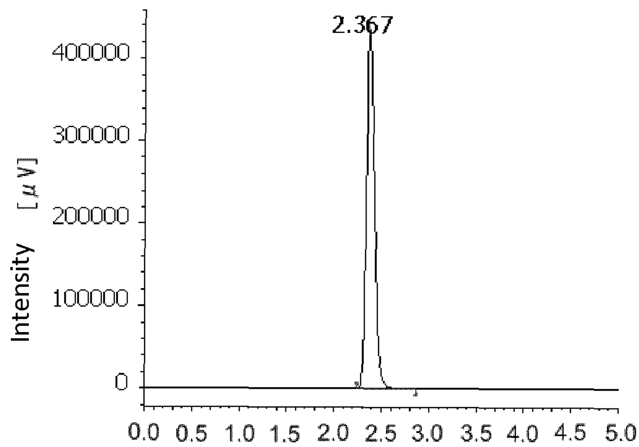

Fig.64

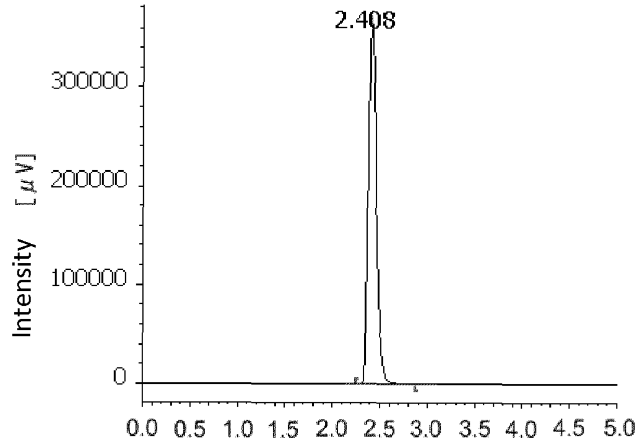


Fig. 65

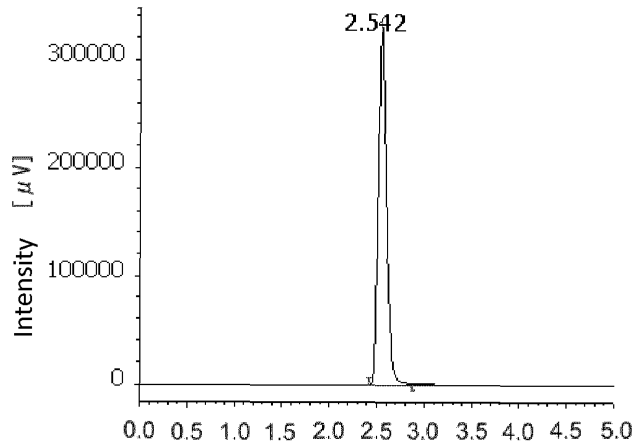


Fig. 66

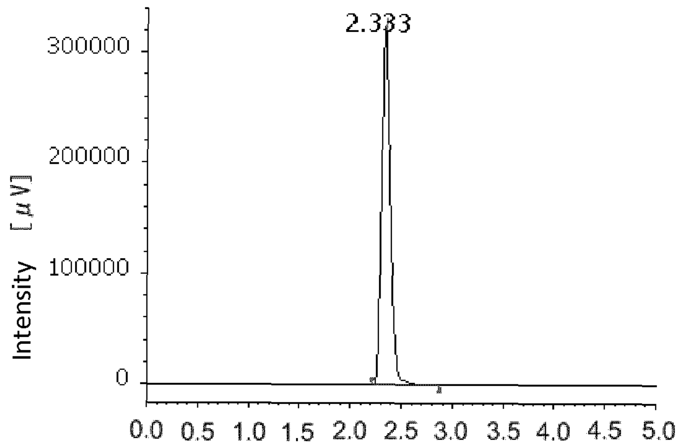

Fig.67

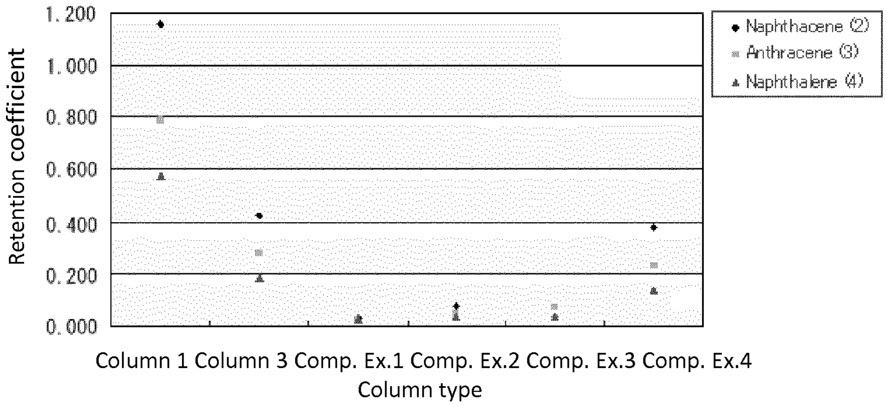


Fig. 68

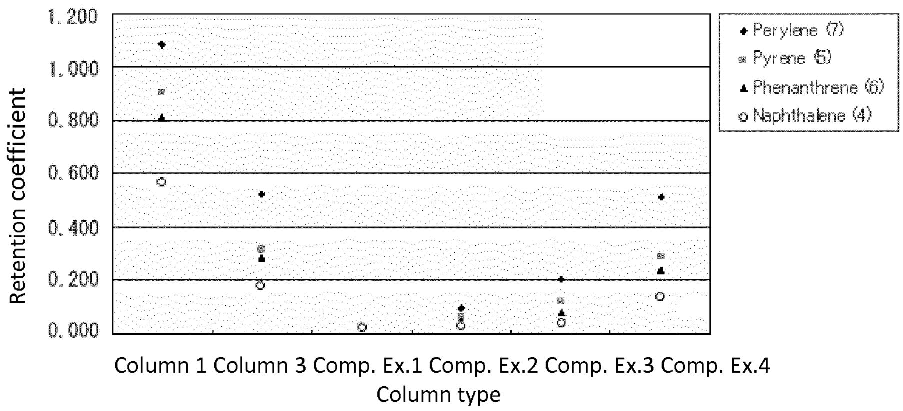


Fig. 69

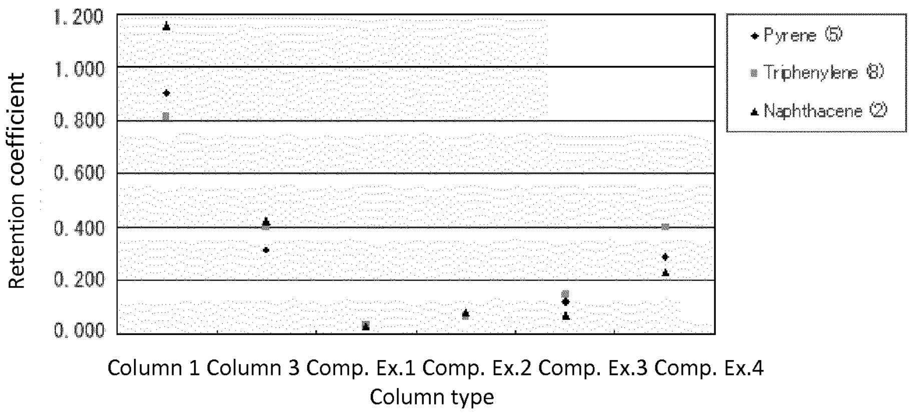

Fig.70

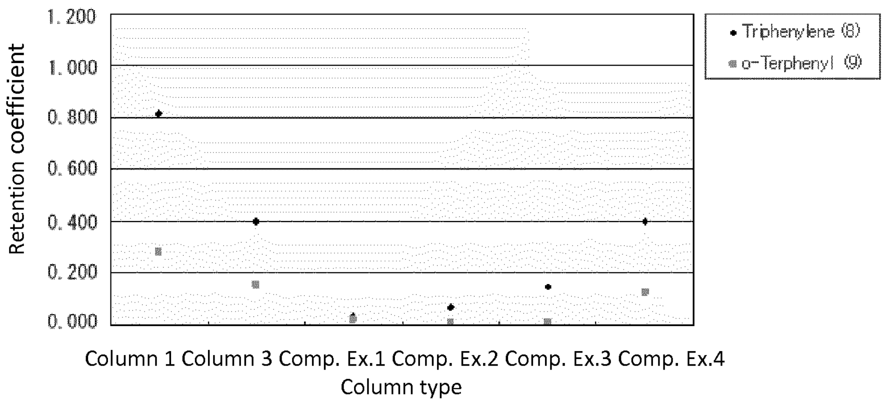


Fig. 71

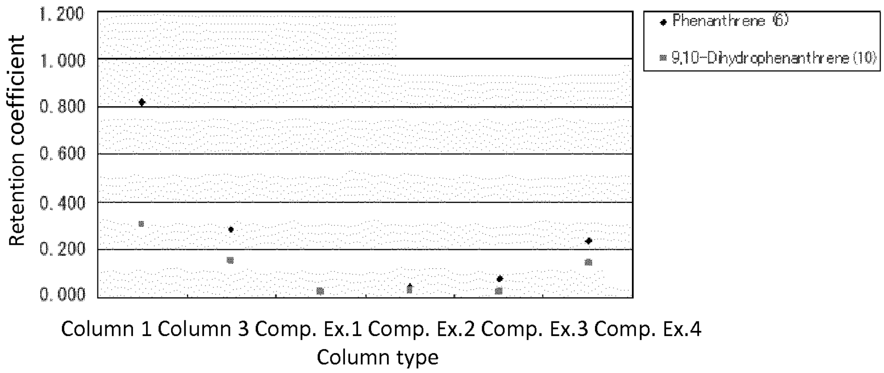


Fig. 72

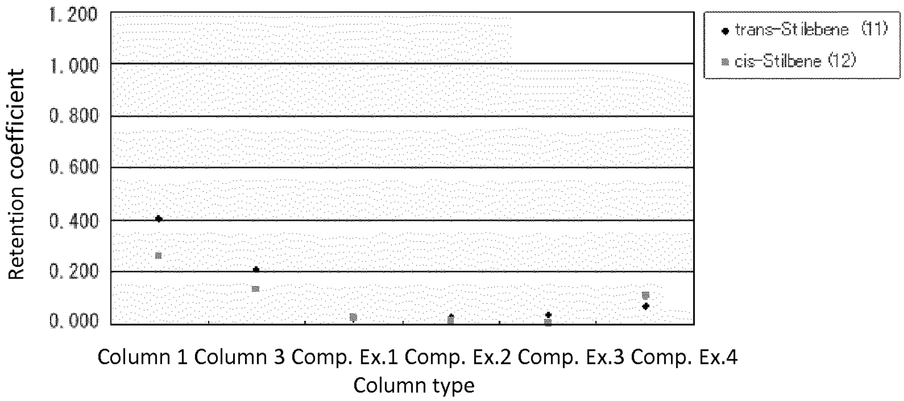

Fig.73

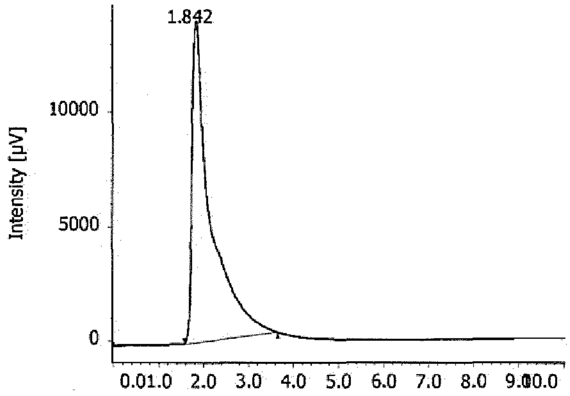


Fig. 74

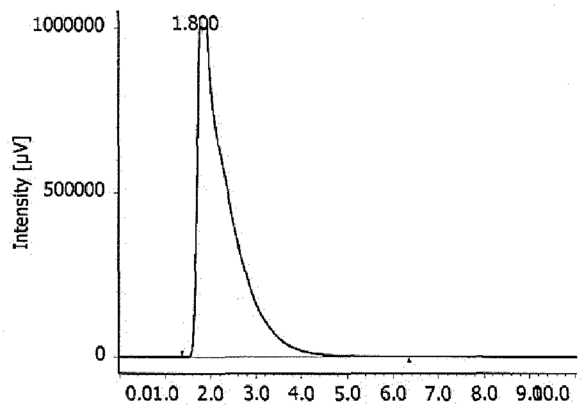


Fig. 75

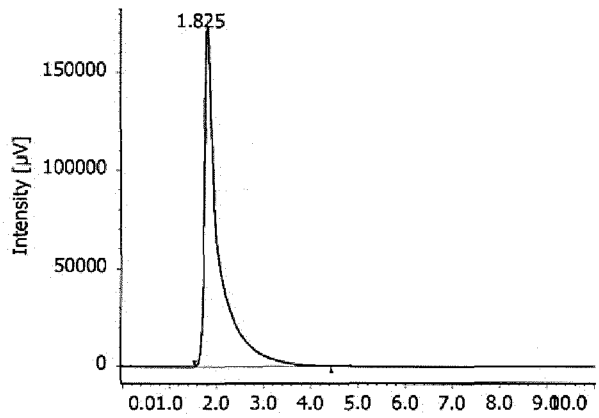

Fig.76

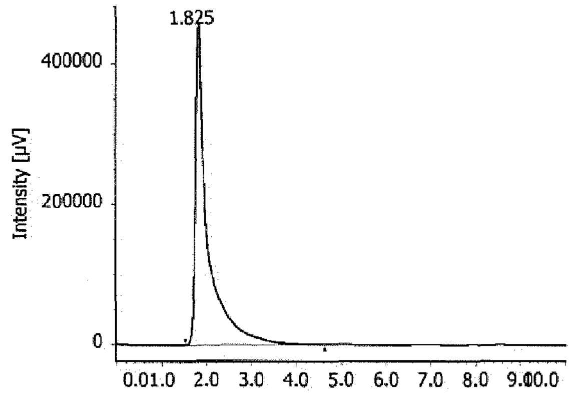


Fig. 77

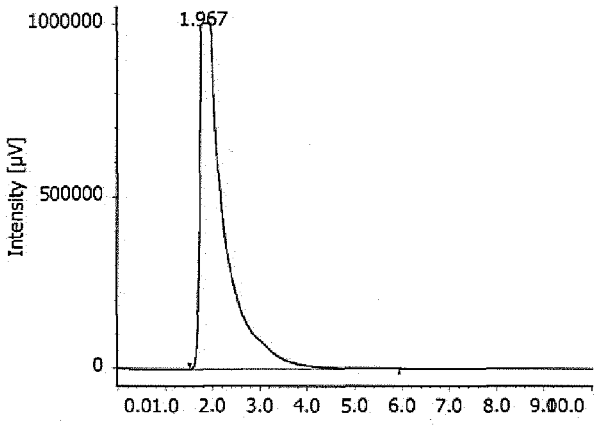


Fig. 78

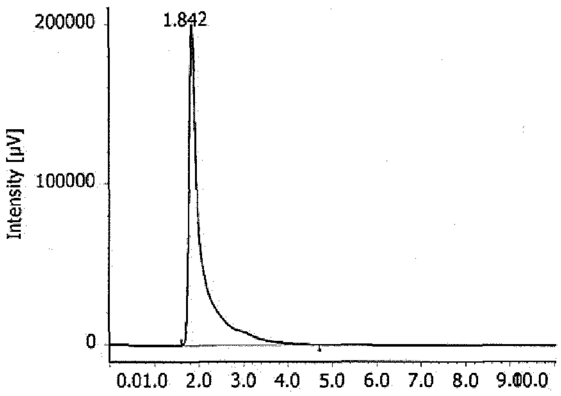

Fig.79

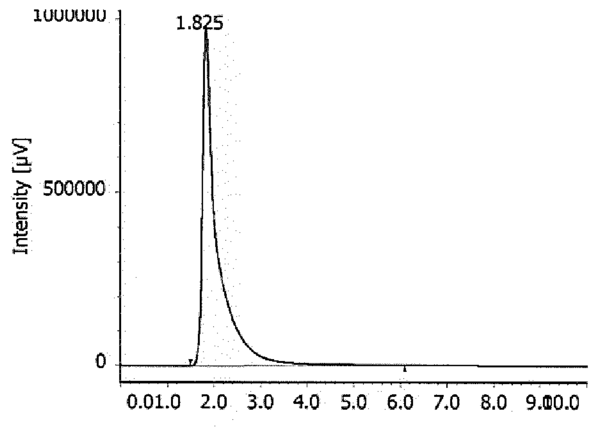


Fig. 80

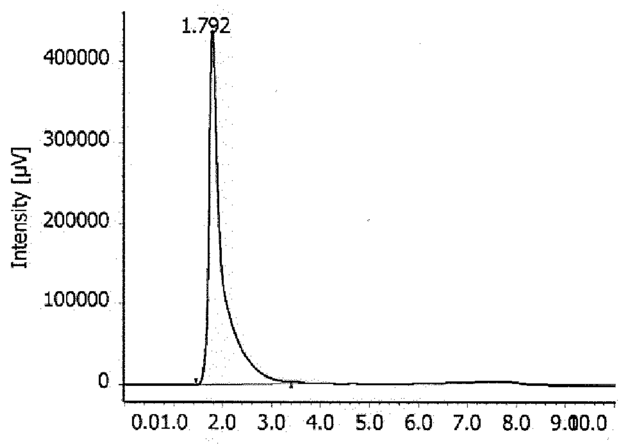


Fig. 81

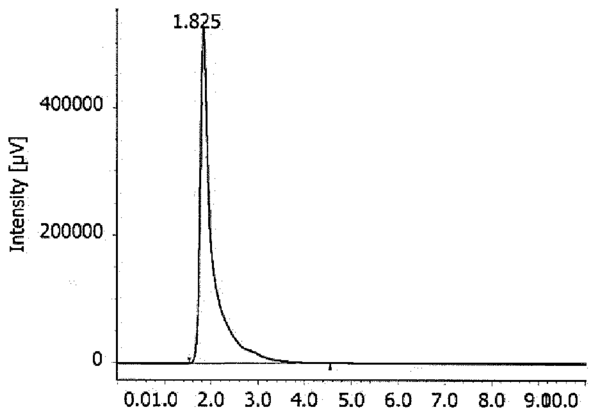

Fig.82

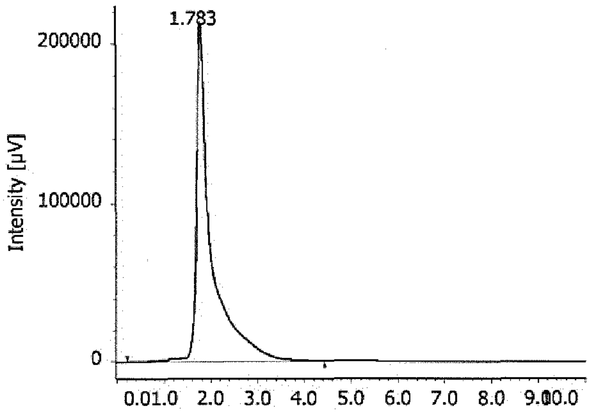


Fig. 83

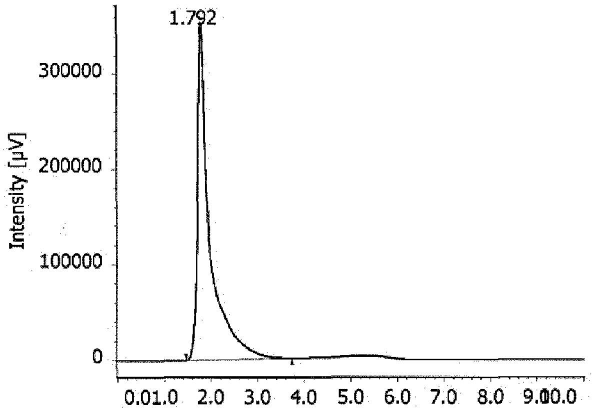


Fig. 84

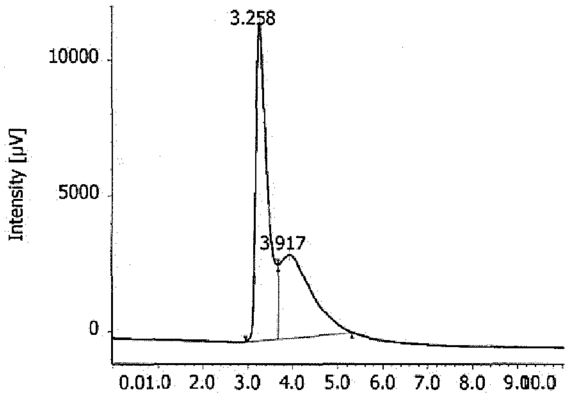

Fig.85

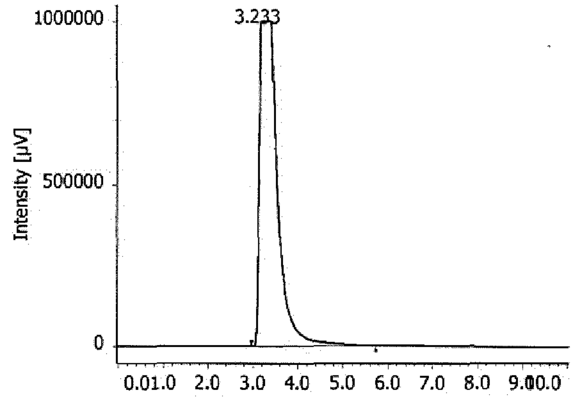


Fig. 86

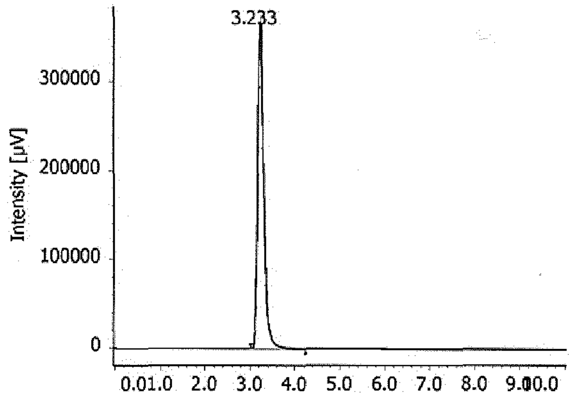


Fig. 87

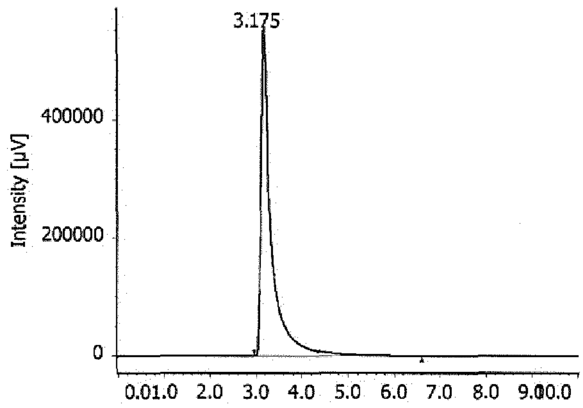

Fig.88

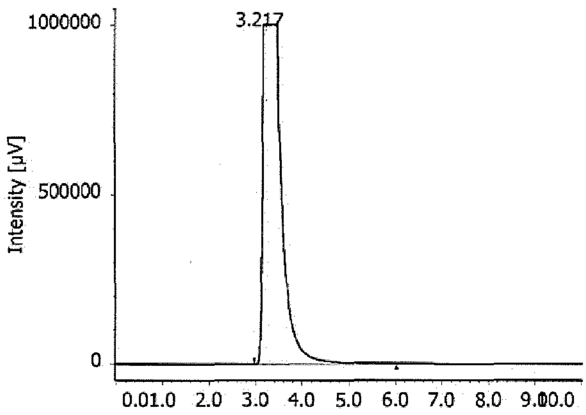


Fig. 89

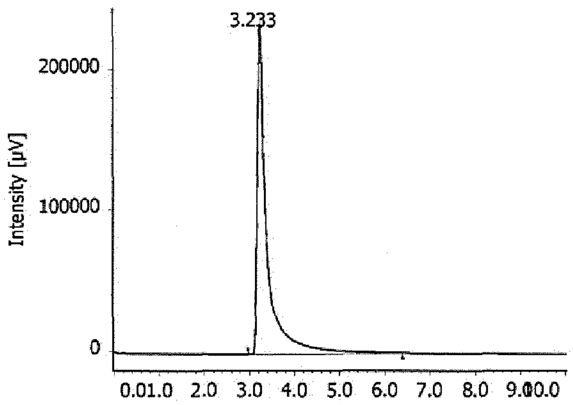


Fig. 90

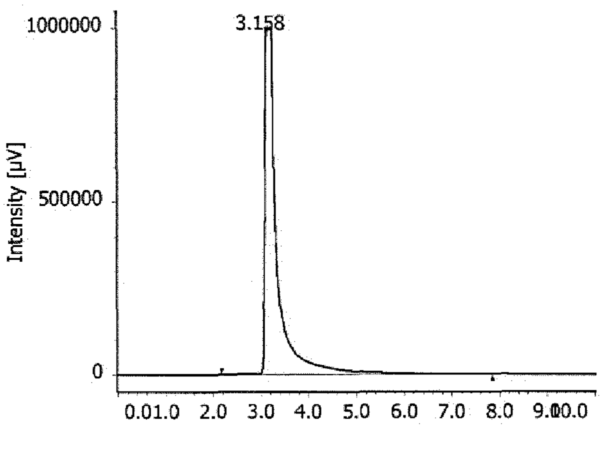

Fig.91

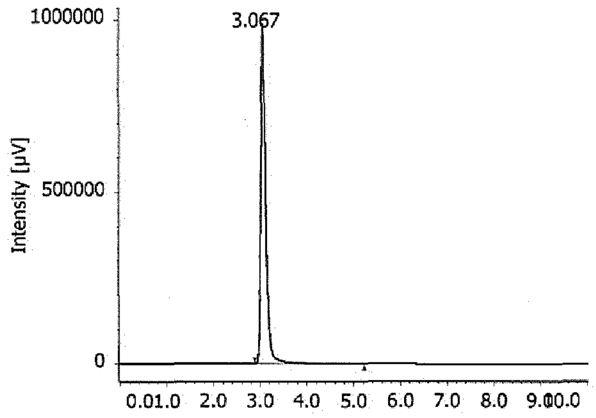


Fig. 92

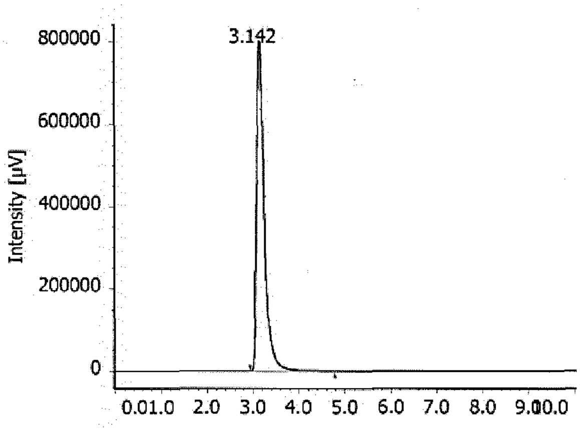


Fig. 93

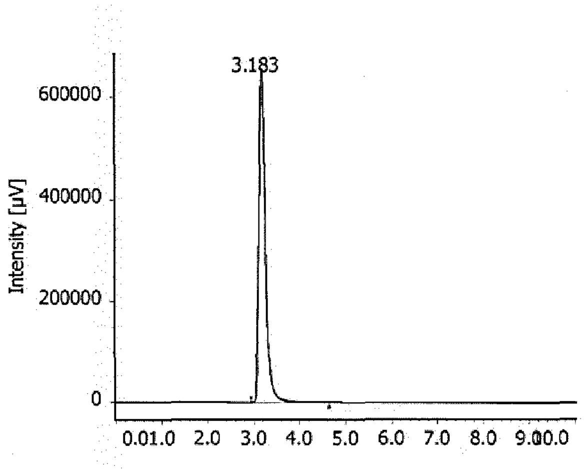

Fig.94

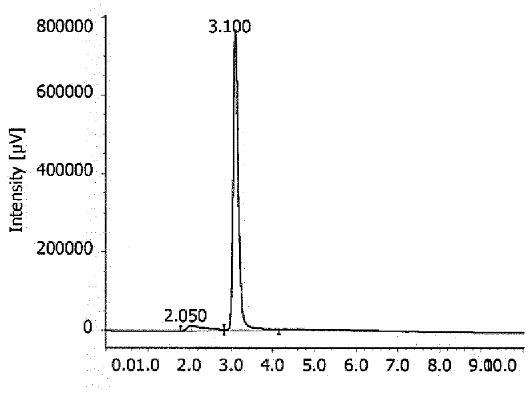


Fig. 95

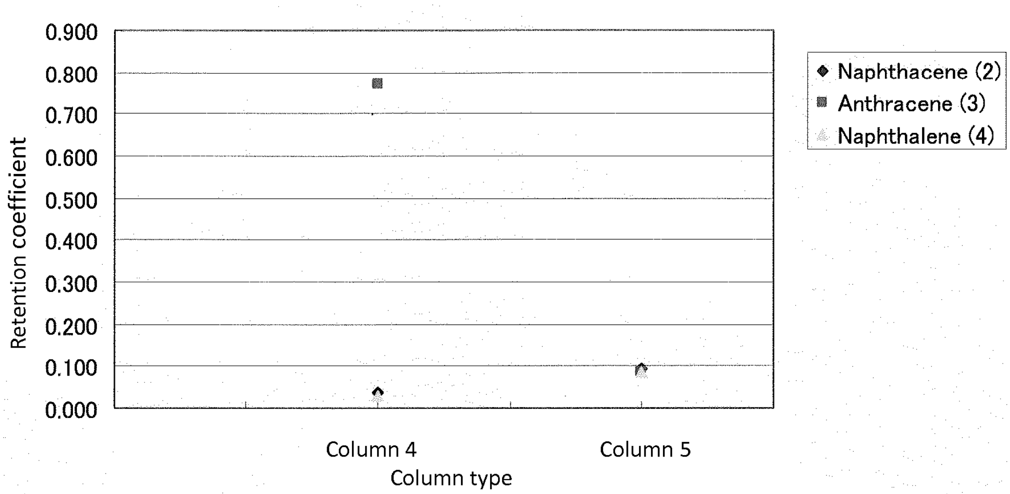


Fig. 96

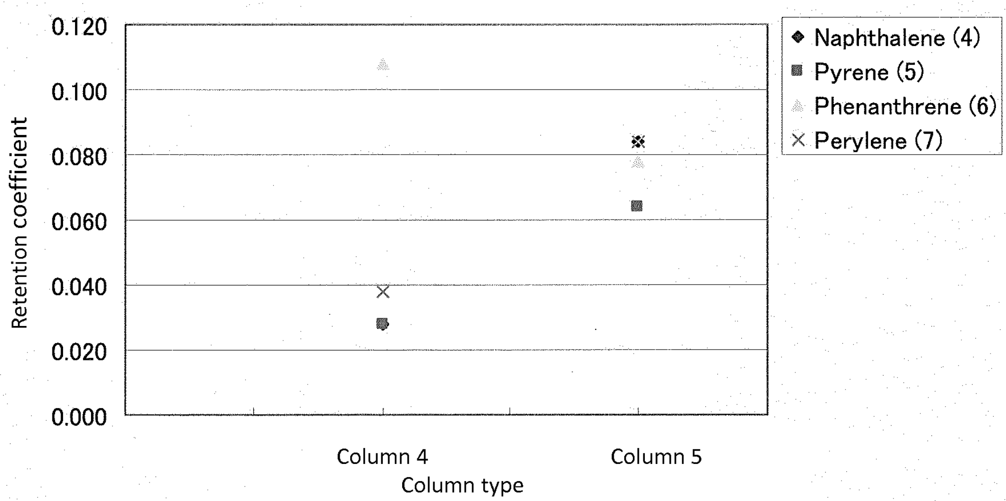

Fig.97

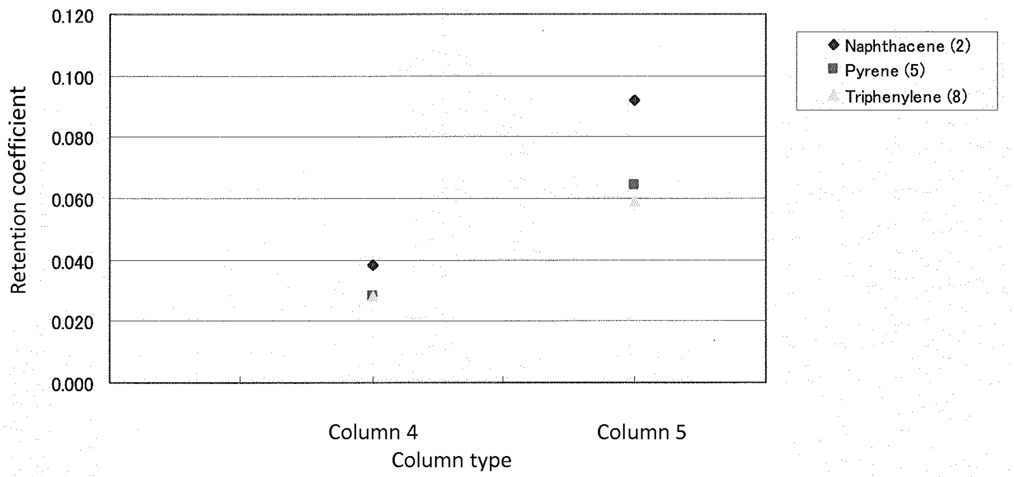


Fig. 98

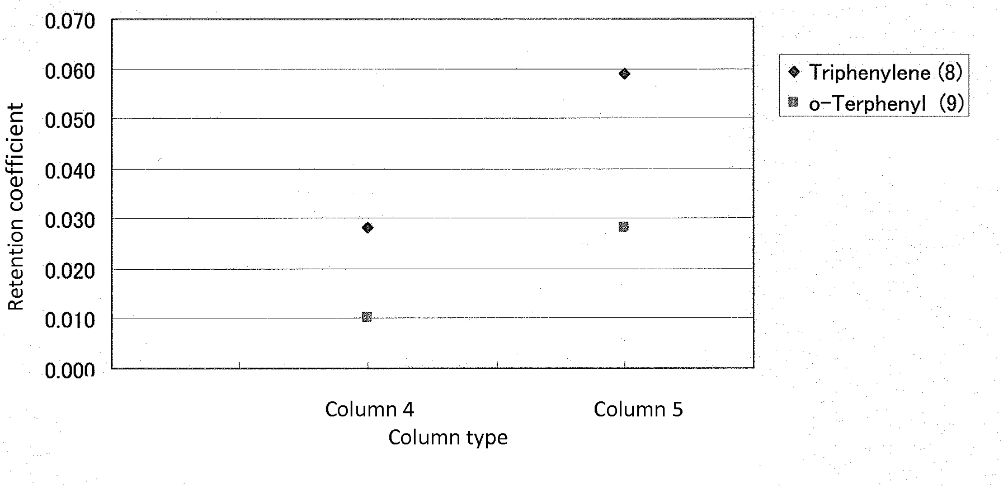


Fig. 99

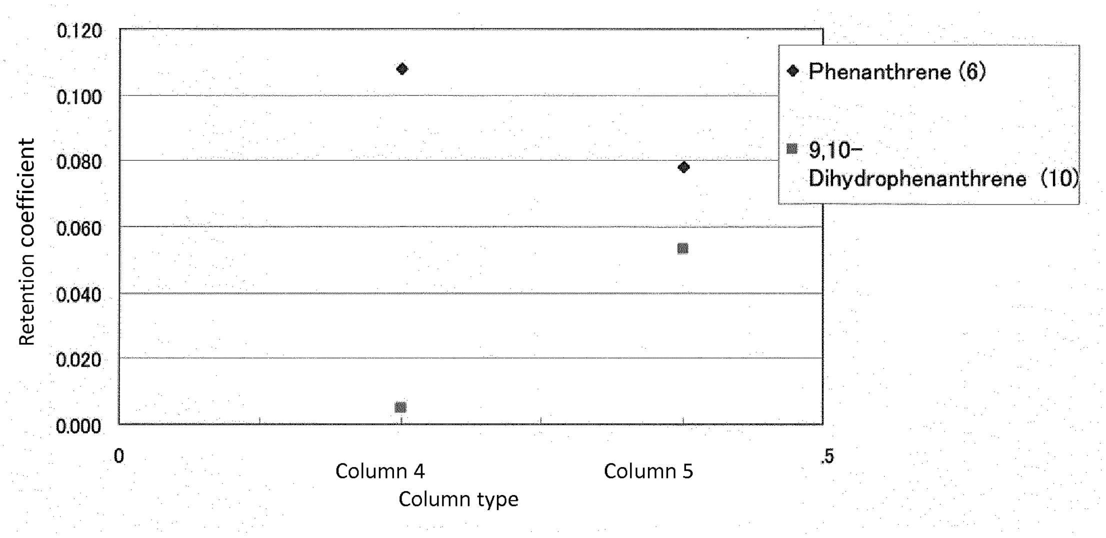

Fig.100

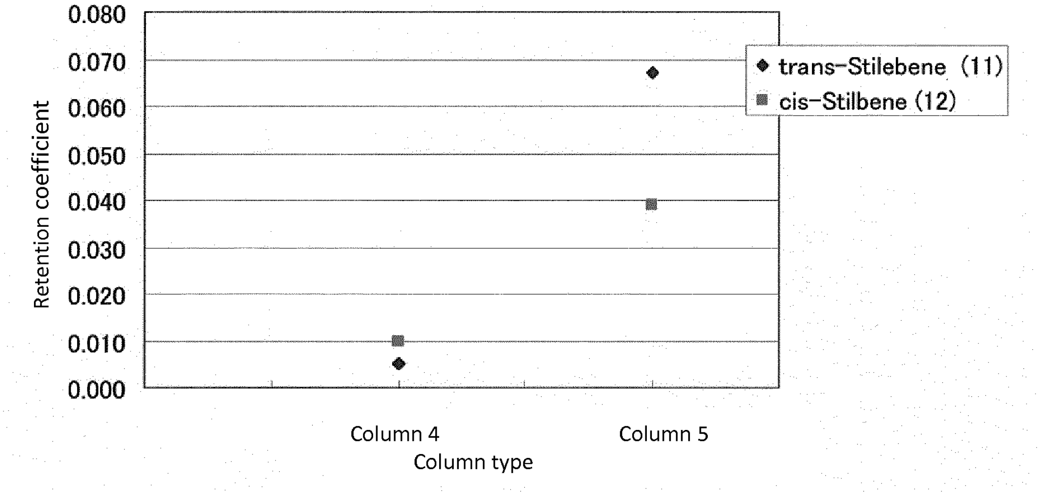


Fig. 101

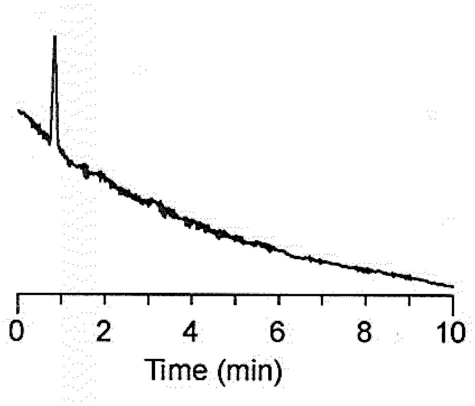


Fig. 102

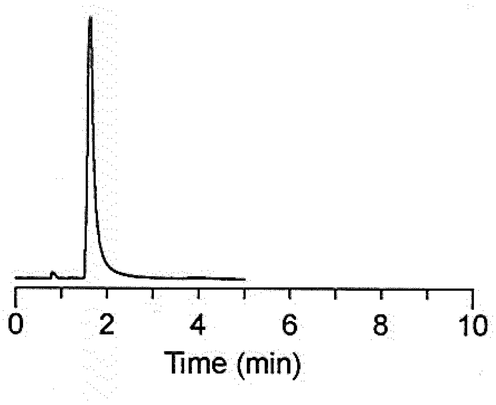

Fig.103

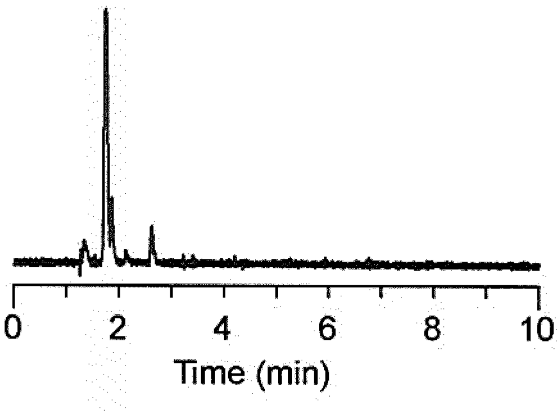


Fig. 104

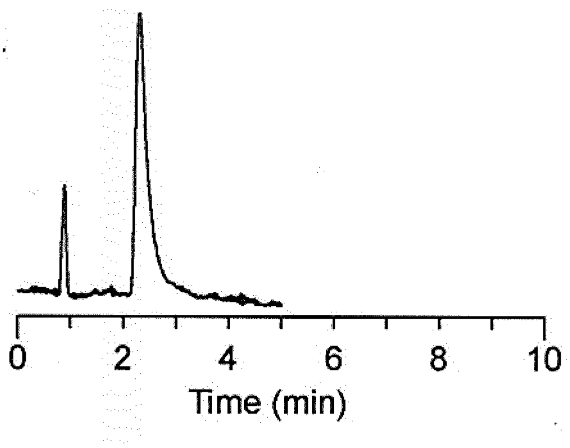


Fig. 105

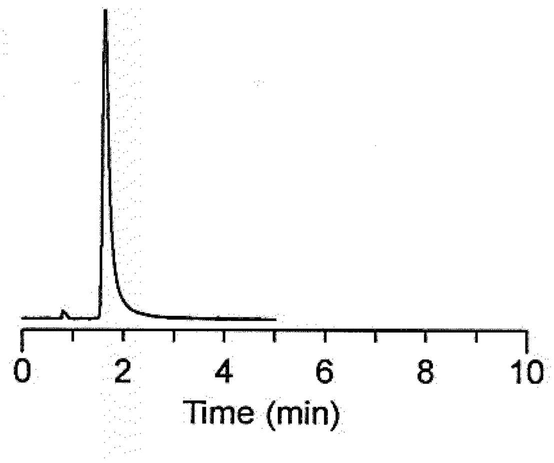

Fig.106

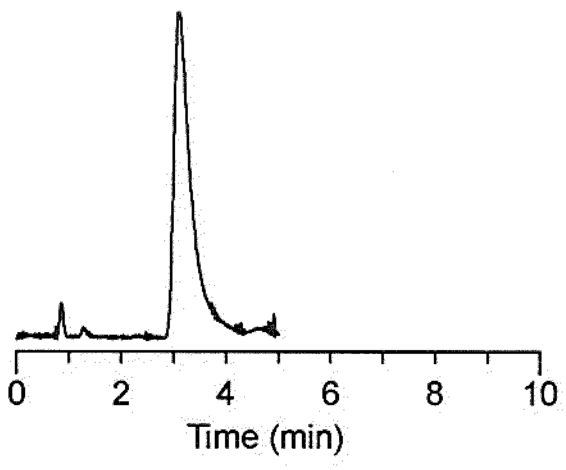


Fig. 107

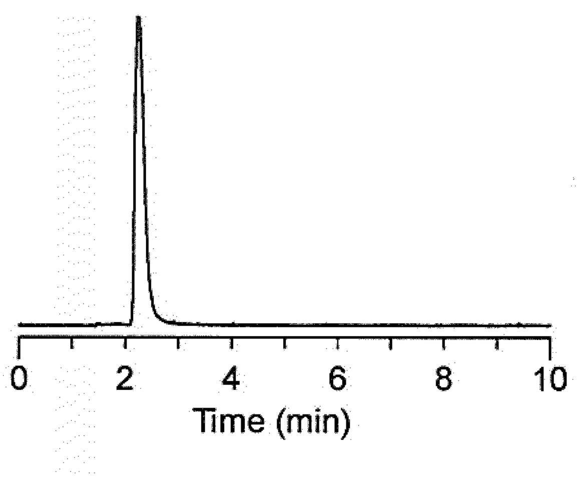


Fig. 108

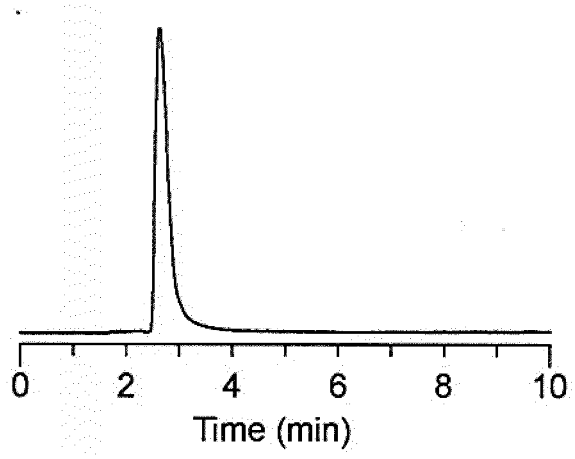

Fig.109

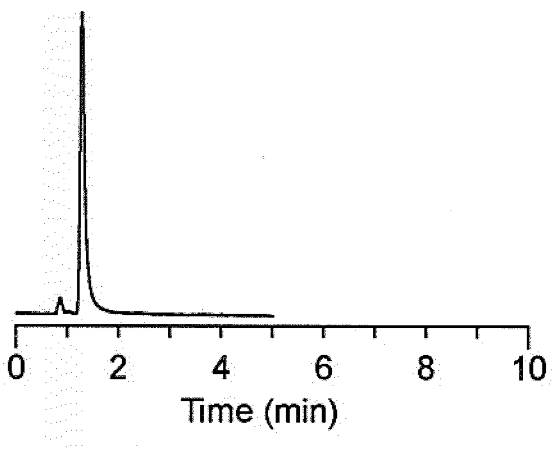


Fig. 110

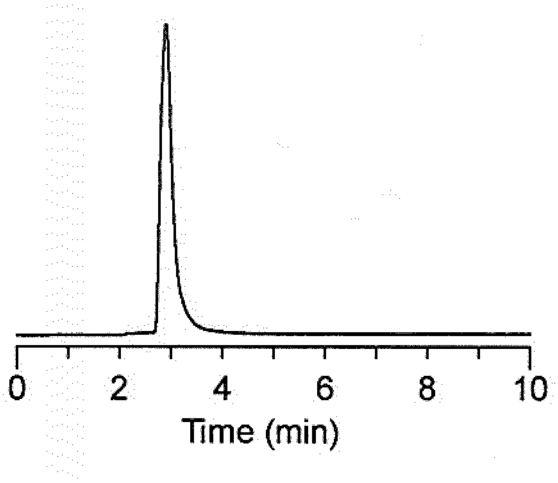


Fig. 111

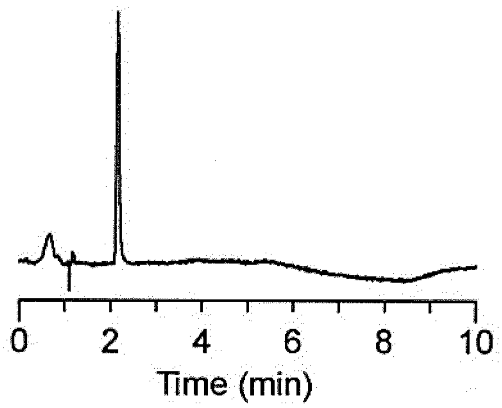

Fig.112

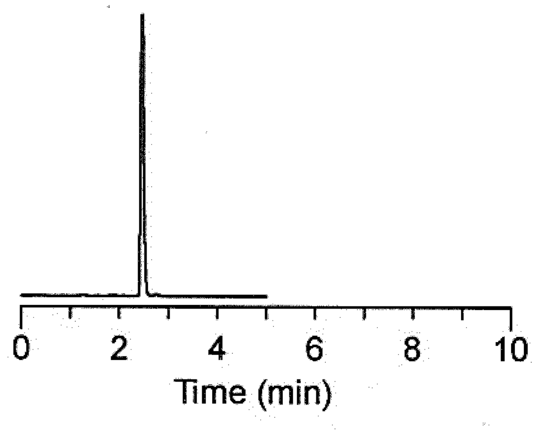


Fig. 113

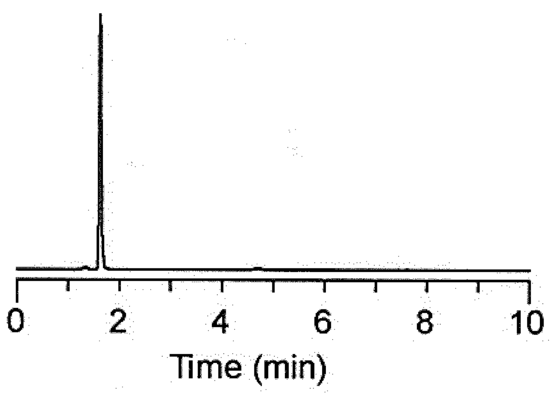


Fig. 114

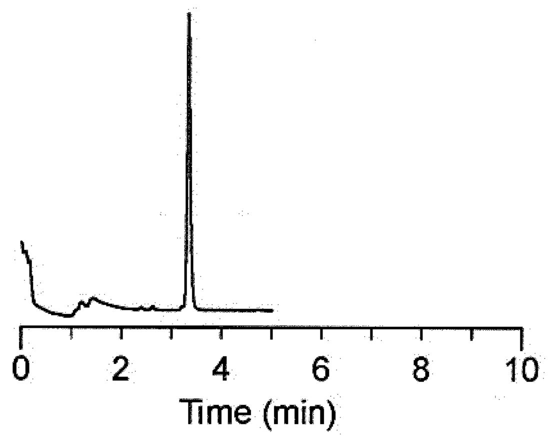

Fig.115

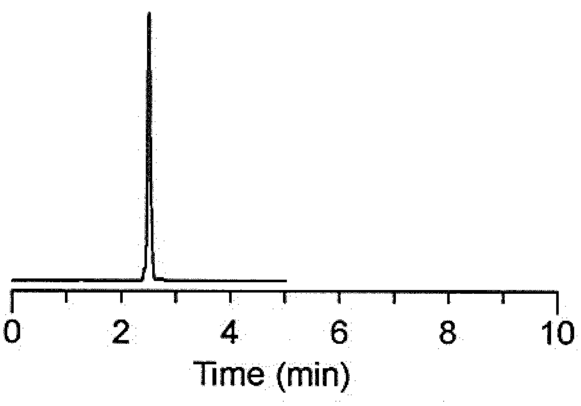


Fig. 116

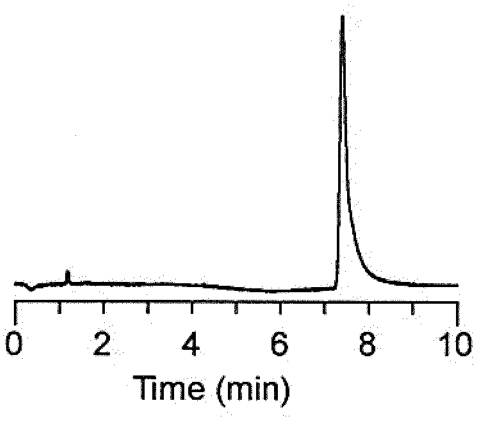


Fig. 117

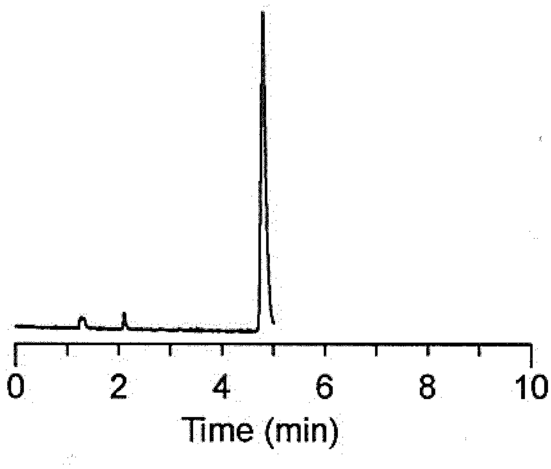

Fig.118

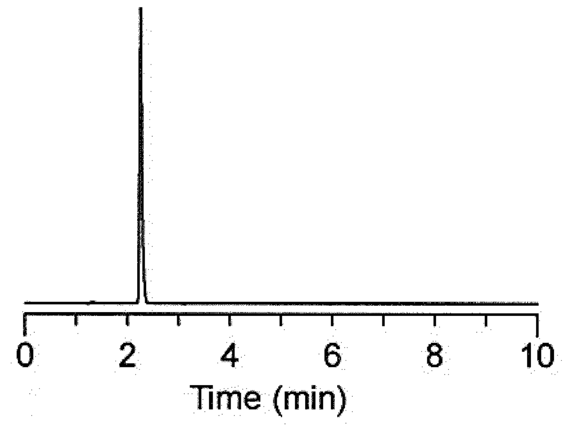


Fig. 119

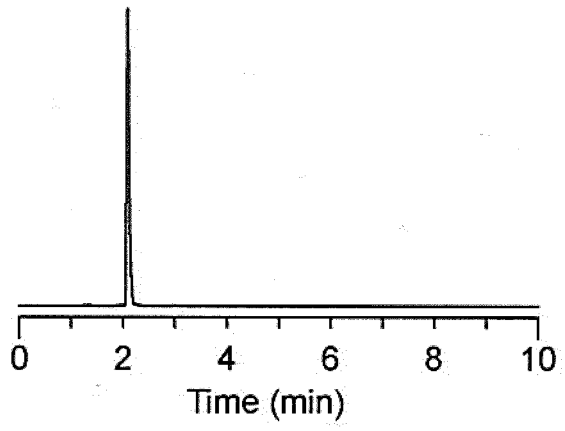


Fig. 120

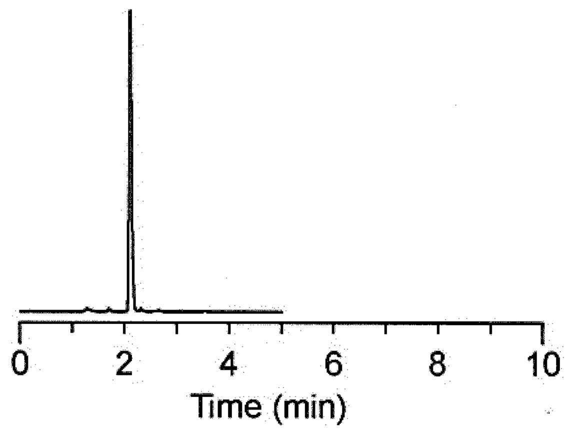

Fig.121

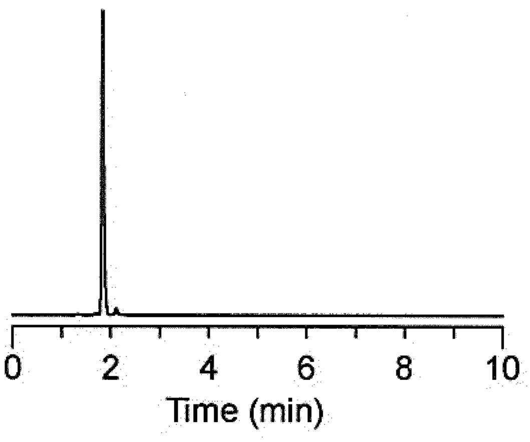


Fig. 122

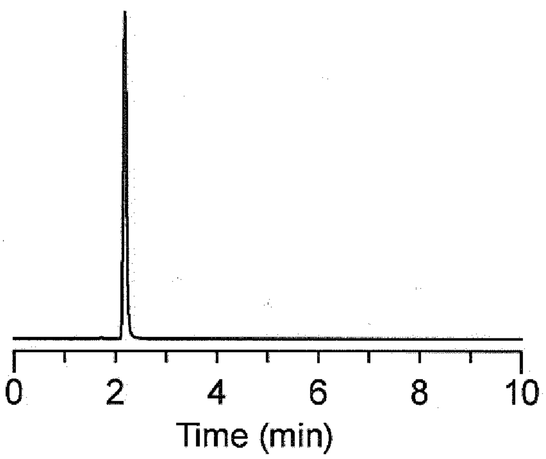


Fig. 123

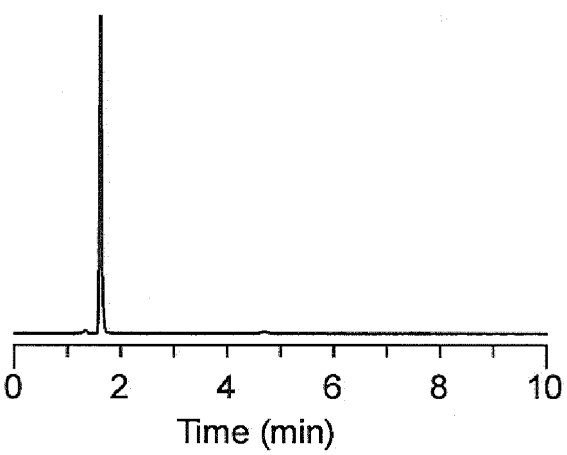

Fig.124

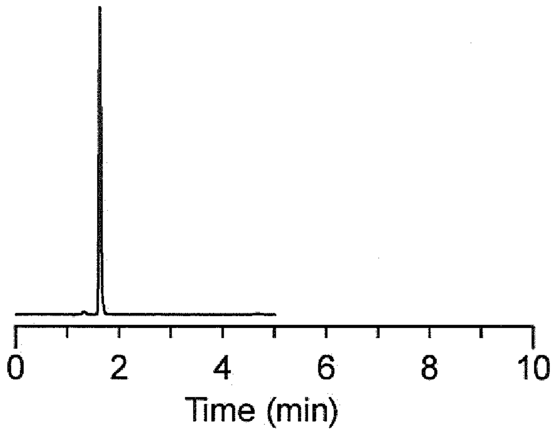


Fig. 125

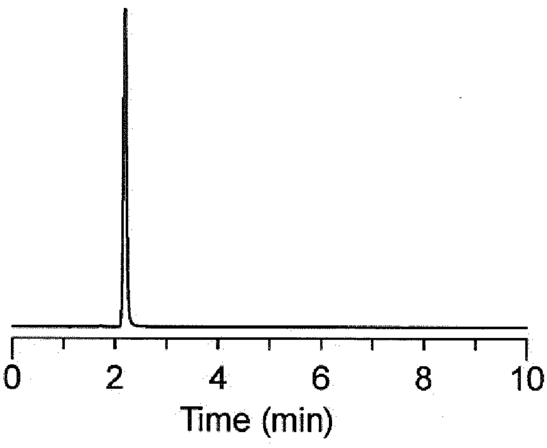


Fig. 126

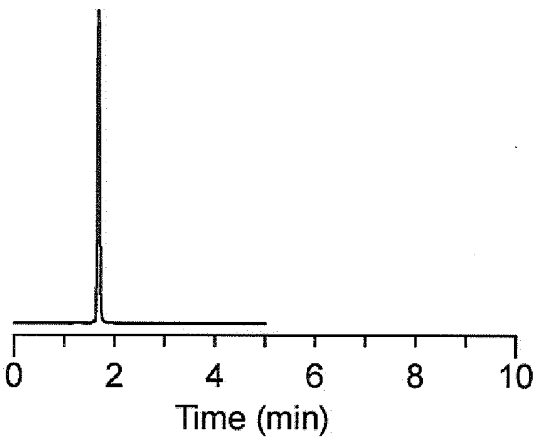

Fig.127

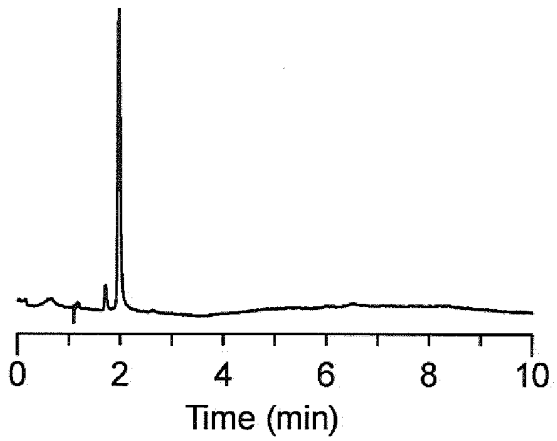


Fig. 128

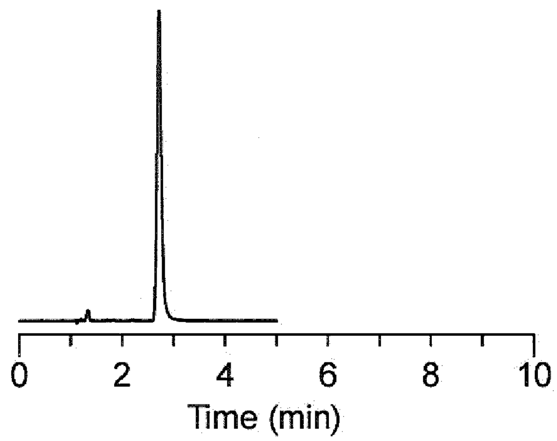


Fig. 129

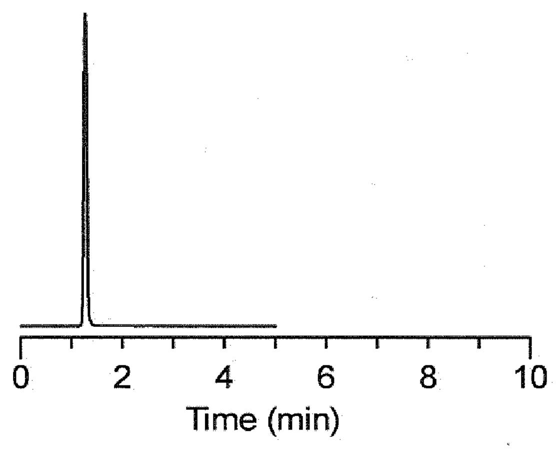

Fig.130

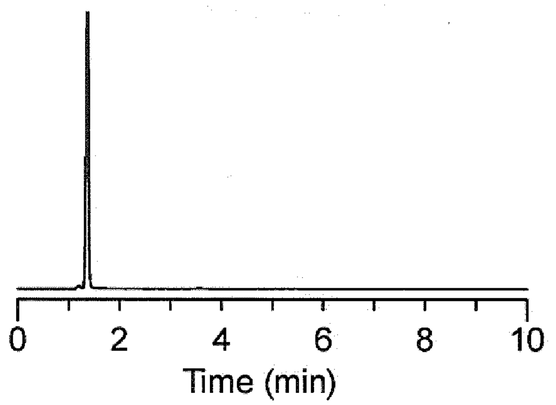


Fig. 131

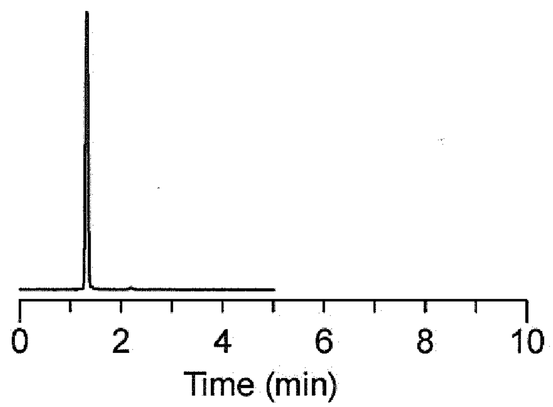


Fig. 132

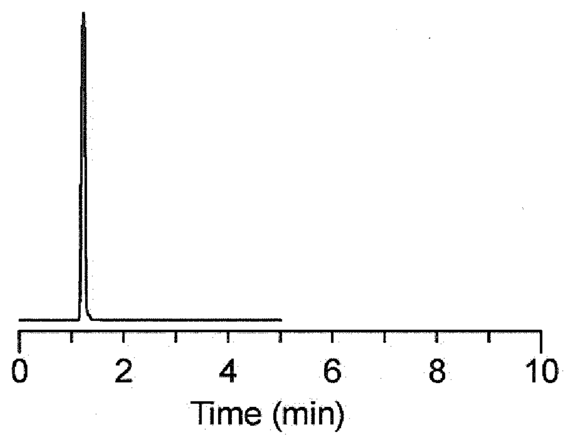

Fig.133

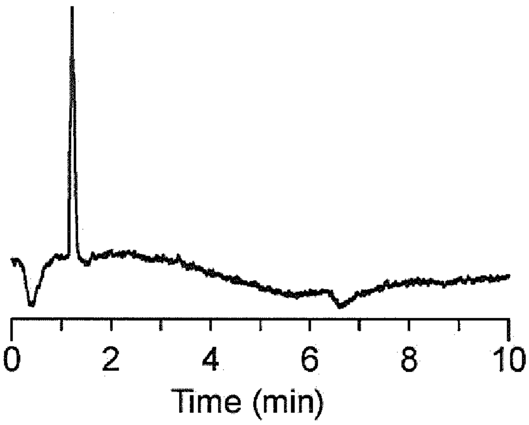


Fig. 134

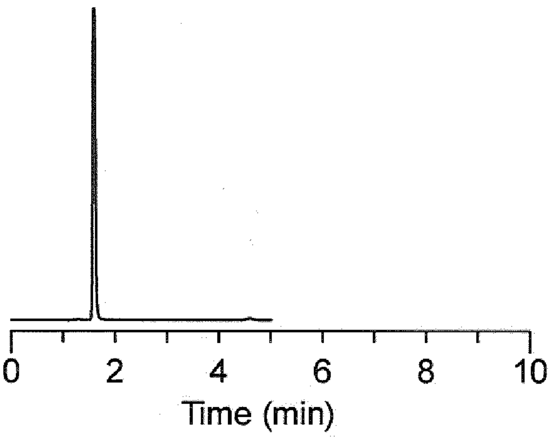


Fig. 135

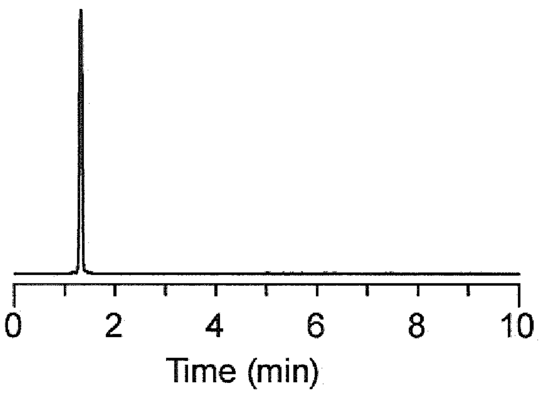

Fig.136

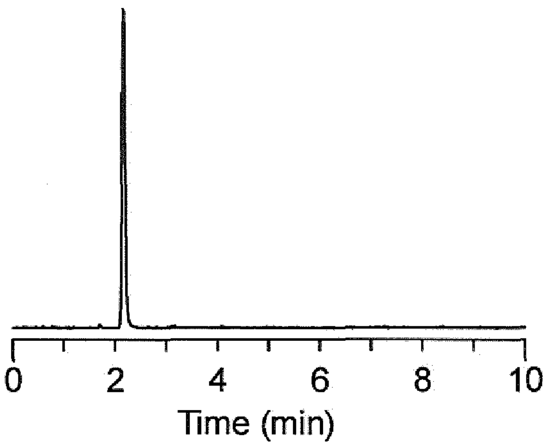


Fig. 137

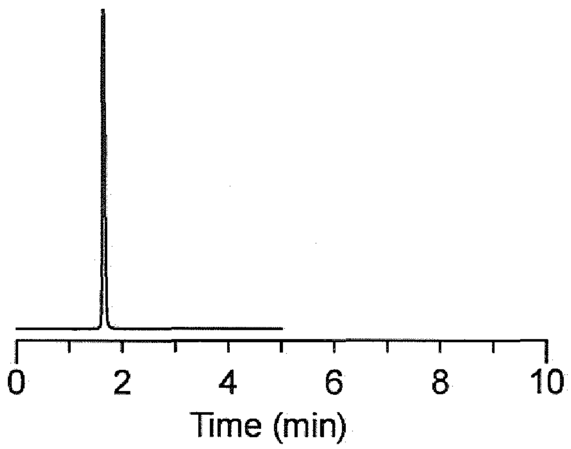


Fig. 138

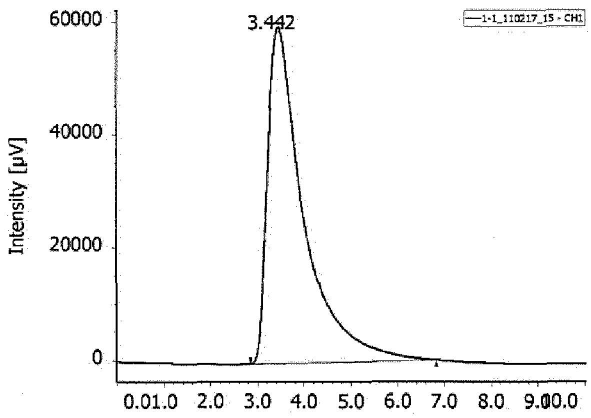

Fig.139

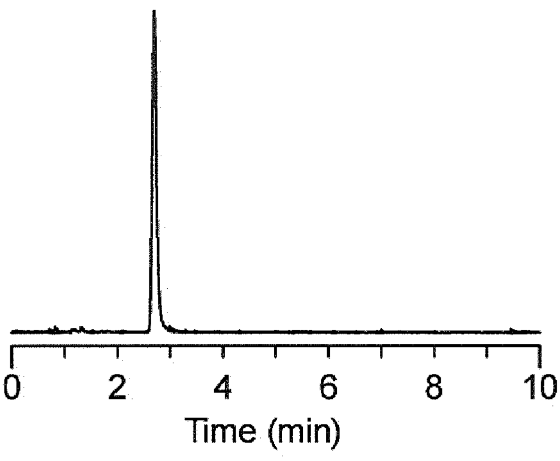


Fig. 140

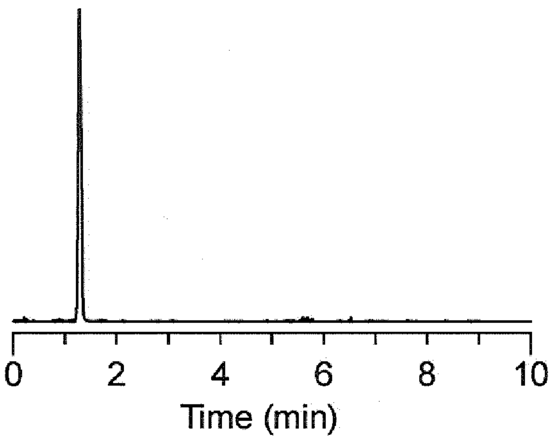


Fig. 141

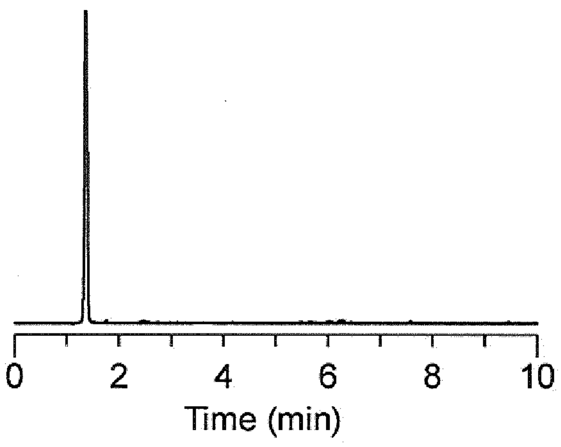

Fig.142

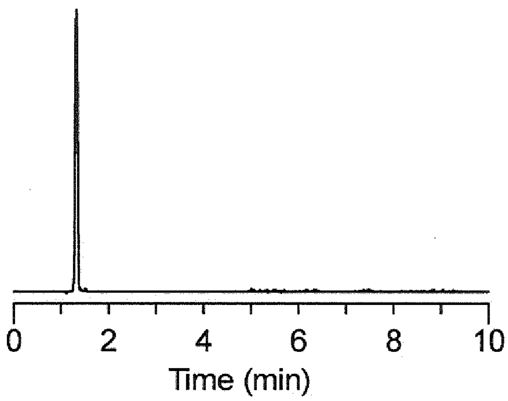


Fig. 143

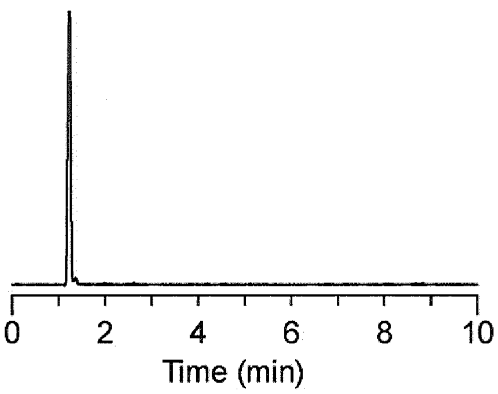


Fig. 144

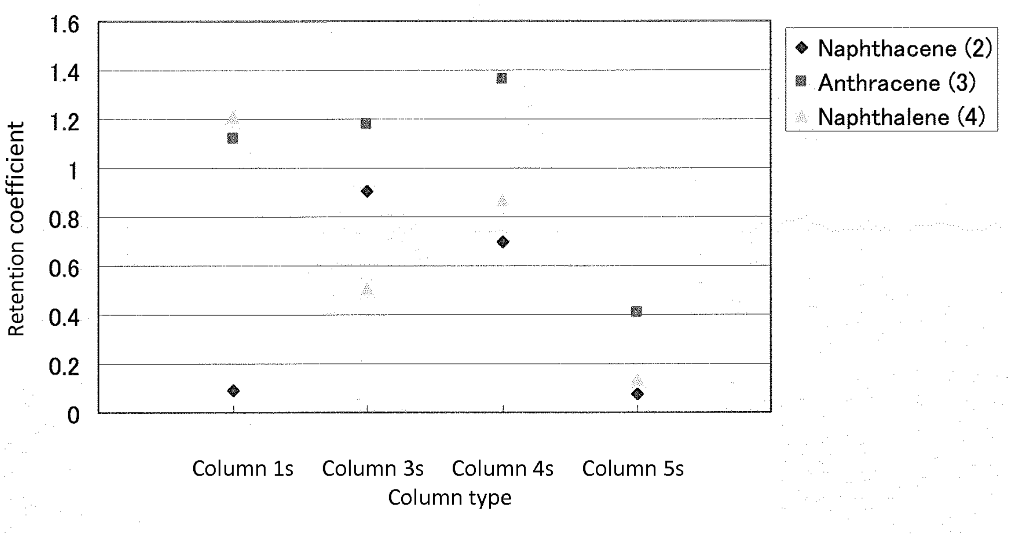

Fig.145

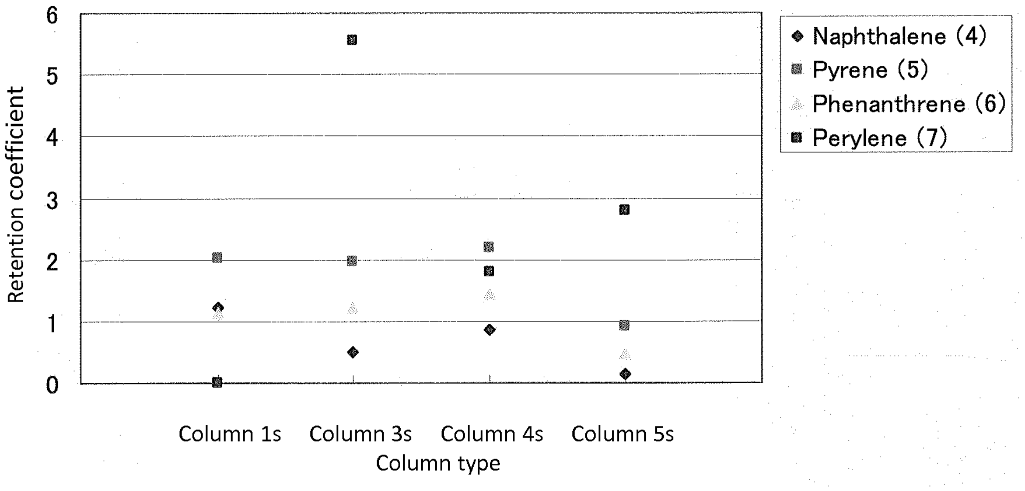


Fig. 146

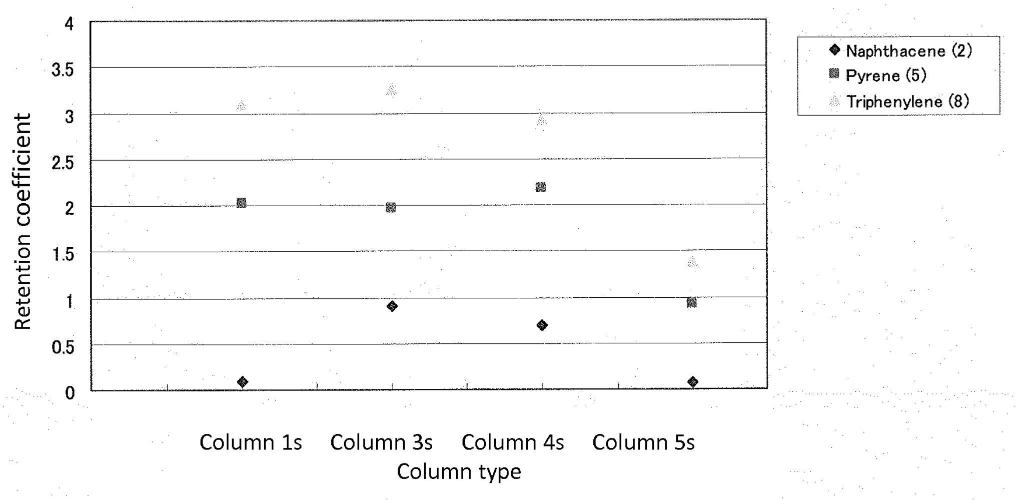


Fig. 147

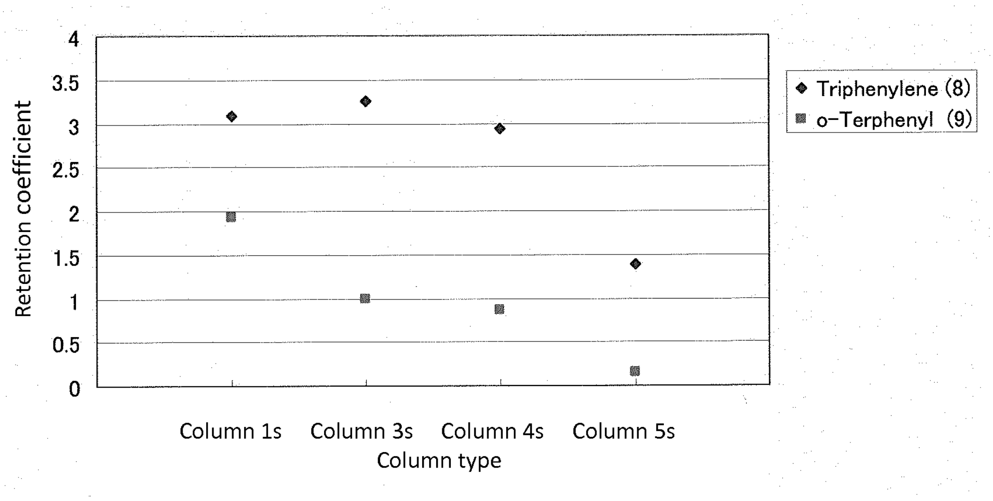

Fig.148

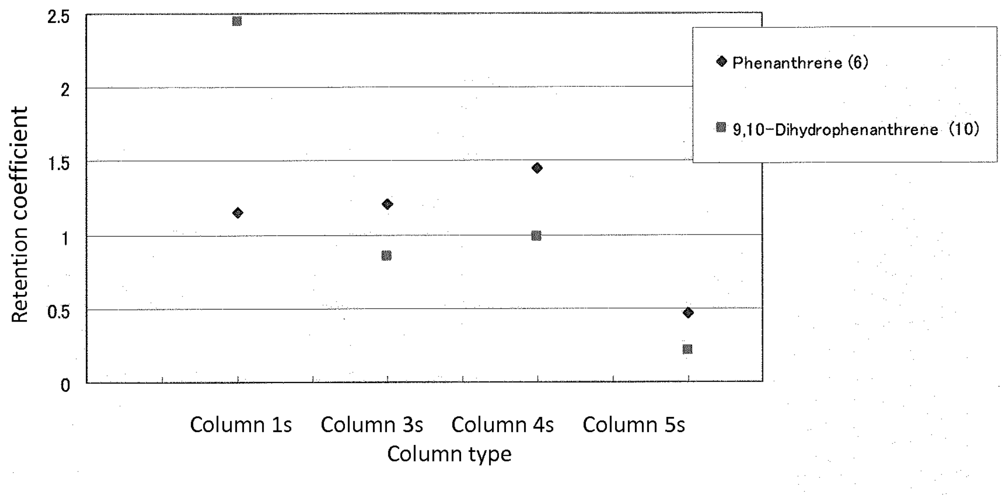


Fig. 149

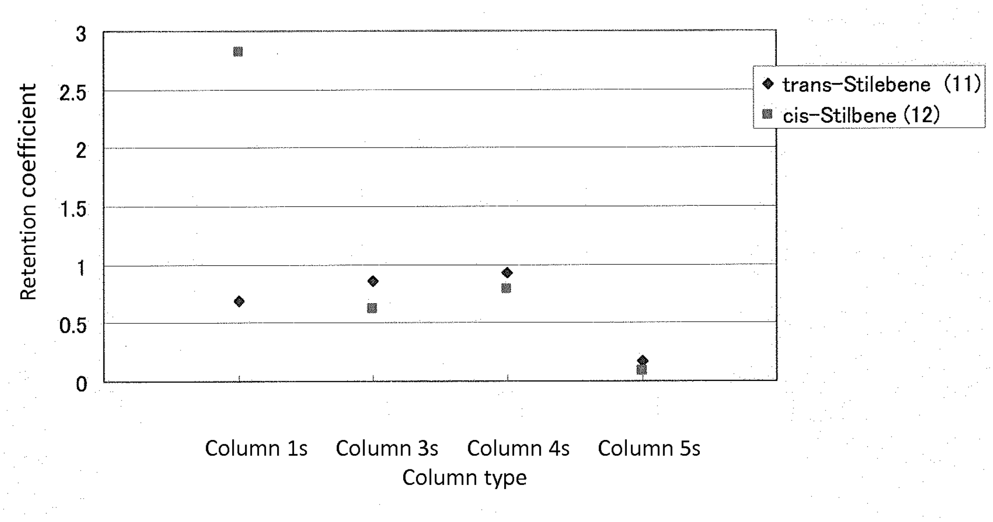

## INTERNATIONAL SEARCH REPORT

International application No.
PCT/JP2011/068795

A. CLASSIFICATION OF SUBJECT MATTER
*C08F292/00*(2006.01)i, *G01N30/02*(2006.01)i, *G01N30/26*(2006.01)i, *G01N30/88*(2006.01)i

According to International Patent Classification (IPC) or to both national classification and IPC

B. FIELDS SEARCHED

Minimum documentation searched (classification system followed by classification symbols)
C08F292/00, G01N30/02-G01N30/88

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus/JMEDPlus/JST7580(JDreamII), JSTPatM

C. DOCUMENTS CONSIDERED TO BE RELEVANT

| Category* | Citation of document, with indication, where appropriate, of the relevant passages | Relevant to claim No. |
|---|---|---|
| X | JP 2007-069193 A (Mitsuo OKANO), 22 March 2007 (22.03.2007), claims 1, 8, 10, 12, 15; paragraphs [0017] to [0021]; example 1 (Family: none) | 1-9 |
| X | JP 2009-085933 A (Mitsuo OKANO), 23 April 2009 (23.04.2009), claims 1, 4, 6, 8; paragraphs [0017], [0020], [0021], [0025] to [0027] (Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 November, 2011 (04.11.11) | 15 November, 2011 (15.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/068795

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-263819 A (Japan Science and Technology Corp.), 28 September 1999 (28.09.1999), claims 1, 6; paragraphs [0008], [0012]; examples 1, 2; paragraph [0017]; fig. 3 (Family: none) | 1-9 |
| A | WO 2008/087909 A1 (Sumitomo Bakelite Co., Ltd.), 24 July 2008 (24.07.2008), claims 1, 11 to 14; paragraphs [0022], [0035], [0056] & US 2010/0062475 A1 | 1-9 |
| A | JP 07-318551 A (Research Development Corp. of Japan), 08 December 1995 (08.12.1995), claims 1, 4; paragraphs [0008], [0010] (Family: none) | 1-9 |
| A | JP 04-249762 A (Merck Patent GmbH), 04 September 1992 (04.09.1992), claim 1; paragraph [0001] & US 5439979 A & EP 448823 A2 & DE 4005868 A & DE 59004620 C & DE 59004620 D & DE 4005868 A1 | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3422463 B
- JP 2004331776 A
- JP 2006312117 A
- JP 2007069193 A
- JP 2009085933 A